(19) Europäisches Patentamt
European Patent Office
Office européen des brevets

(11) **EP 4 412 257 A1**

(12) **EUROPEAN PATENT APPLICATION**
published in accordance with Art. 153(4) EPC

(43) Date of publication:
**07.08.2024 Bulletin 2024/32**

(21) Application number: **22882677.2**

(22) Date of filing: **10.10.2022**

(51) International Patent Classification (IPC):
**H04W 4/02** (2018.01)    **H04W 64/00** (2009.01)

(52) Cooperative Patent Classification (CPC):
**H04W 4/02; H04W 4/40; H04W 64/00**

(86) International application number:
**PCT/CN2022/124401**

(87) International publication number:
**WO 2023/066067 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2021 CN 202111226763**
**25.12.2021 CN 202111606130**

(71) Applicant: **Huawei Technologies Co., Ltd.**
**Shenzhen, Guangdong 518129 (CN)**

(72) Inventors:
• **WU, Haibing**
**Shenzhen, Guangdong 518129 (CN)**
• **LI, Xueru**
**Shenzhen, Guangdong 518129 (CN)**
• **LI, Jun**
**Shenzhen, Guangdong 518129 (CN)**

(74) Representative: **Maiwald GmbH**
**Engineering**
**Elisenhof**
**Elisenstrasse 3**
**80335 München (DE)**

(54) **INFORMATION PROCESSING METHOD AND ELECTRONIC DEVICE**

(57)    This application provides an information processing method and an electronic device, and relates to the communication field. In this application, a first device can determine location information of a second device based on first frequency difference information and second frequency difference information. The first frequency difference information indicates a difference between frequencies at which the second device receives reference signals of two devices. In other words, the first frequency difference information is the difference between the frequencies at which the second device receives the reference signals of the two devices. The first frequency difference information can be used to reduce impact of a local frequency error of the second device. In addition, the difference between the frequencies at which the second device receives the reference signals of the two devices is also related to a difference between frequencies at which the two devices send the reference signals. Therefore, a second frequency difference can be used to reduce impact of errors in the frequencies at which the two devices send the reference signals, and improve accuracy of determining the location information of the second device.

1500

A first device obtains first frequency difference information, where the first frequency difference information indicates a difference between a frequency at which a second device receives a first reference signal of a third device and a frequency at which the second device receives a second reference signal of a fourth device — S1501

The first device obtains second frequency difference information, where the second frequency difference information indicates a difference between a frequency at which the fourth device sends the second reference signal and a frequency at which the third device sends the first reference signal — S1502

The first device determines location information of the second device based on the first frequency difference information and the second frequency difference information — S1503

FIG. 15

**Description**

This application claims priorities to Chinese Patent Application No. 202111226763.4, filed with the China National Intellectual Property Administration on October 21, 2021 and entitled "COMMUNICATION METHOD, TERMINAL, AND NETWORK DEVICE", and to Chinese Patent Application No. 202111606130.6, filed with the China National Intellectual Property Administration on December 25, 2021 and entitled "INFORMATION PROCESSING METHOD AND ELECTRONIC DEVICE", both of which are incorporated herein by reference in their entireties.

**TECHNICAL FIELD**

This application relates to the communication field, and more specifically, to an information processing method and an electronic device in the communication field.

**BACKGROUND**

If a device receives a reference signal in a moving process, a frequency at which the reference signal is received is shifted due to Doppler effect. A frequency shift value is related to an angle of the device receiving the reference signal relative to a device sending the reference signal. Therefore, the angle of the device receiving the reference signal relative to the device sending the reference signal can be determined based on the frequency shift value. However, the frequency shift value obtained through calculation is a non-real frequency shift value because a clock frequency of the device sending the reference signal may be not synchronized with a clock frequency of the device receiving the reference signal. Therefore, if the non-real frequency shift value is used to determine the angle of the device receiving the reference signal relative to the device sending the reference signal, the determined angle is inaccurate, and locating effect is poor.

**SUMMARY**

Embodiments of this application provide an information processing method and an electronic device, to improve locating accuracy.

According to a first aspect, an information processing method is provided. The method is applied to a first device and includes: obtaining first frequency difference information, where the first frequency difference information indicates a difference between a frequency at which a second device receives a first reference signal of a third device and a frequency at which the second device receives a second reference signal of a fourth device; obtaining second frequency difference information, where the second frequency difference information indicates a difference between a frequency at which the third device sends the first reference signal and a frequency at which the fourth device sends the second reference signal; and determining location information of the second device based on the first frequency difference information and the second frequency difference information.

In the foregoing solution, the first device can determine the location information of the second device based on the first frequency difference information and the second frequency difference information. The first frequency difference information indicates a difference between frequencies at which the second device receives reference signals of two devices. In other words, the first frequency difference information is the difference between the frequencies at which the second device receives the reference signals of the two devices. The first frequency difference information can be used to reduce impact of a local frequency error of the second device. In addition, the difference between the frequencies at which the second device receives the reference signals of the two devices is also related to a difference between frequencies at which the two devices send the reference signals. Therefore, a second frequency difference can be used to reduce impact of errors in the frequencies at which the two devices send the reference signals, and improve accuracy of determining the location information of the second device.

If a clock frequency of the second device is inconsistent with an actual frequency, an inconsistent value may be reduced based on the first frequency difference information. In this way, in a process of determining the location information of the second device, the first frequency difference information can be used to reduce impact of inconsistency between the clock frequency of the second device and the actual frequency. In addition, the difference between the frequencies at which the second device receives the reference signals of the two devices is also related to the difference between the frequencies at which the two devices send the reference signals. Therefore, the second frequency difference can be used to reduce impact of the difference between the frequencies at which the two devices send the reference signals, and improve accuracy of determining the location information of the second device.

Optionally, the first frequency difference information indicates a difference between a frequency shift occurring when the second device receives the first reference signal of the third device and a frequency shift occurring when the second device receives the second reference signal of the fourth device.

Optionally, the first frequency difference information indicates a difference between a Doppler frequency shift occurring when the second device receives the first reference signal of the third device and a Doppler frequency shift occurring when the second device receives the second reference signal of the fourth device.

Optionally, the Doppler frequency shift occurring when the second device receives the first reference signal of the third device is related to the frequency at which the third device sends the first reference signal.

Optionally, the Doppler frequency shift occurring when the second device receives the second reference signal of the fourth device is related to the frequency at which the fourth device sends the second reference signal.

Optionally, the first device may be a terminal device, a core network device, or an access network device.

Optionally, when the first device is a core network device, the first device may be a location management function (location management function, LMF) unit.

Optionally, the second device is in a moving state.

Optionally, the location information of the second device indicates coordinates of the second device.

In some possible implementations, the method further includes: obtaining movement speed information of the second device. The determining location information of the second device based on the first frequency difference information and the second frequency difference information includes: determining the location information of the second device based on the first frequency difference information, the second frequency difference information, and the movement speed information of the second device.

Optionally, the movement speed information of the second device indicates a magnitude of a movement velocity and/or a direction of the movement velocity of the second device.

In the foregoing solution, the first device can determine the location information of the second device based on the movement speed information of the second device, the first frequency difference information, and the second frequency difference information. A Doppler frequency shift occurs due to movement of the second device. This can improve accuracy of determining the location information of the second device.

In some possible implementations, the method further includes: obtaining third frequency difference information, where the third frequency difference information indicates a difference between a frequency at which the second device receives a third reference signal of a fifth device and the frequency at which the second device receives the second reference signal of the fourth device; and obtaining fourth frequency difference information, where the fourth frequency difference information indicates a difference between the frequency at which the fourth device sends the second reference signal and a frequency at which the fifth device sends the third reference signal.

The determining the location information of the second device based on the first frequency difference information, the second frequency difference information, and the movement speed information of the second device includes: determining the location information of the second device based on the first frequency difference information, the second frequency difference information, the third frequency difference information, the fourth frequency difference information, and the movement speed information of the second device.

In the foregoing solution, the first device can determine the location information of the second device based on the four pieces of frequency difference information and the movement speed information of the second device. The first frequency difference information and the third frequency difference information separately indicate a difference between frequencies at which the second device receives the reference signals, and the second frequency difference information and the fourth frequency difference information separately indicate a difference between frequencies at which the reference signals sent. In this way, the first frequency difference information and the third frequency difference information can be used to reduce impact of a local frequency error of the second device, and the second frequency difference information and the fourth frequency difference information can be used to reduce impact of a frequency error during sending of the reference signal, thereby improving accuracy of determining the location information of the second device.

Optionally, the third frequency difference information indicates a difference between a frequency shift occurring when the second device receives the third reference signal of the fifth device and a frequency shift occurring when the second device receives the second reference signal of the fourth device.

Optionally, the third frequency difference information indicates a difference between a Doppler frequency shift occurring when the second device receives the third reference signal of the fifth device and a Doppler frequency shift occurring when the second device receives the second reference signal of the fourth device.

Optionally, the Doppler frequency shift occurring when the second device receives the third reference signal of the fifth device is related to the frequency at which the fifth device sends the third reference signal.

In some possible implementations, the determining the location information of the second device based on the first frequency difference information, the second frequency difference information, the third frequency difference information, the fourth frequency difference information, and the movement speed information of the second device includes: determining the location information of the second device based on the first frequency difference information, the second frequency difference information, the third frequency difference information, the fourth frequency difference information, the movement speed information of the second device, a wavelength at which the third device sends the first reference signal, a wavelength at which the fourth device sends the second reference signal, and a wavelength at which the fifth device sends the third reference signal.

In the foregoing solution, because a wavelength for sending a reference signal may affect a frequency shift, the first device can determine the location information of the second device based on the four pieces of frequency difference information, the movement speed information of the second device, and the wavelengths at which the three devices respectively sends the three reference signals. This can improve accuracy of determining the location information of the second device.

In some possible implementations, the method further includes: obtaining first time difference information, where the first time difference information indicates a difference between a moment at which the second device receives the first reference signal of the third device and a moment at which the second device receives the second reference signal of the fourth device.

The determining the location information of the second device based on the first frequency difference information, the second frequency difference information, and the movement speed information of the second device includes: determining the location information of the second device based on the first frequency difference information, the second frequency difference information, the first time difference information, and the movement speed information of the second device.

In the foregoing solution, the first device can determine the location information of the second device based on the difference between the moments at which the second device receives the two reference signals, the difference between the frequencies at which the second device receives the two reference signals, the difference between the frequencies at which the two devices send the two reference signals, and the movement speed information of the second device. In other words, the location information of the second device can be determined when the two devices respectively send the reference signals, without sending reference signals by three devices. This can simplify design.

Optionally, the method further includes: obtaining second time difference information, where the second time difference information indicates a difference between a moment at which the third device sends the first reference signal and a moment at which the fourth device sends the second reference signal. The determining the location information of the second device based on the first frequency difference information, the second frequency difference information, the first time difference information, and the movement speed information of the second device includes: determining the location information of the second device based on the first frequency difference information, the second frequency difference information, the first time difference information, the second time difference information, and the movement speed information of the second device.

In the foregoing solution, the first device can determine the location information of the second device based on the difference between the moments at which the second device receives the two reference signals, the difference between the moments at which the third device and the second device respectively send the two reference signals, the difference between the frequencies at which the second device receives the two reference signals, the difference between the frequencies at which the third device and the fourth device respectively send the two reference signals, and the movement speed information of the second device. In other words, the location information of the second device can be determined when the two devices respectively send the reference signals, without sending reference signals by three devices. This can simplify design.

In some possible implementations, the determining the location information of the second device based on the first frequency difference information, the second frequency difference information, the first time difference information, and the movement speed information of the second device includes: determining the location information of the second device based on the first frequency difference information, the second frequency difference information, the first time difference information, the movement speed information of the second device, a wavelength at which the third device sends the first reference signal, and a wavelength at which the fourth device sends the second reference signal.

In the foregoing solution, because a wavelength for sending a reference signal may affect a frequency shift, the first device can determine the location information of the second device based on the two pieces of frequency difference information, the movement speed information of the second device, and the wavelengths at which the two devices respectively send the two reference signals. This can improve accuracy of determining the location information of the second device.

Optionally, the method further includes: obtaining second time difference information, where the second time difference information indicates a difference between a moment at which the third device sends the first reference signal and a moment at which the fourth device sends the second reference signal. The determining the location information of the second device based on the first frequency difference information, the second frequency difference information, the first time difference information, the movement speed information of the second device, a wavelength at which the third device sends the first reference signal, and a wavelength at which the fourth device sends the second reference signal includes: determining the location information of the second device based on the first frequency difference information, the second frequency difference information, the first time difference information, the second time difference information, the movement speed information of the second device, the wavelength at which the third device sends the first reference signal, and the wavelength at which the fourth device sends the second reference signal.

In some possible implementations, the first device and the second device are a same terminal device, and before the obtaining first frequency difference information, the method further includes: receiving first information, where the first information indicates the second device to determine the location information of the second device.

In the foregoing solution, the terminal device can determine the location information of the terminal device, and after receiving the first information indicating the terminal device to determine the location information of the terminal device, the terminal device may be triggered to determine the location information of the terminal device.

Optionally, the receiving first information includes: receiving the first information from the core network device. Optionally, the receiving the first information from the core network device includes: receiving the first information from the location management function unit.

In some possible implementations, the first device and the second device are a same terminal device, and the obtaining second frequency difference information includes:

receiving the second frequency difference information.

Optionally, the receiving the second frequency difference information includes: receiving the second frequency difference information from the core network device. Optionally, the receiving the second frequency difference information from the core network device includes: receiving the second frequency difference information from the location management function unit.

In some possible implementations, the first device and the second device are a same terminal device, and the obtaining fourth frequency difference information includes: receiving the fourth frequency difference information.

Optionally, the receiving the fourth frequency difference information includes: receiving the fourth frequency difference information from the core network device. Optionally, the receiving the fourth frequency difference information from the core network device includes: receiving the fourth frequency difference information from the location management function unit.

In some possible implementations, the first device and the second device are a same terminal device, and the obtaining second time difference information includes: receiving the second time difference information. Optionally, the receiving second time difference information includes: receiving the second time difference information from the core network device. Optionally, the receiving the second time difference information from the core network device includes: receiving the second time difference information from the location management function unit.

In some possible implementations, the first device is a location management function unit, and before the obtaining first frequency difference information, the method further includes:

sending second information to the second device, where the second information indicates to the second device that the first device needs to measure the location information of the second device.

The obtaining first frequency difference information includes:

receiving the first frequency difference information from the second device.

In the foregoing solution, the location management function unit can send the second information to the second device to indicate that the location management function unit needs to measure the location information of the second device. Based on the second information, the second device can send the first frequency difference information to the location management function unit, and the location management function unit can receive the first frequency difference information from the second device.

Optionally, the method further includes: receiving the third frequency difference information from the second device. After sending the second information to the second device, the location management function unit may receive the third frequency difference information from the second device.

Optionally, the method further includes: receiving the first time difference information from the second device. After sending the second information to the second device, the location management function unit may receive the first time difference information from the second device.

In some possible implementations, the first device is a location management function unit, and before the obtaining second frequency difference information, the method further includes:

sending third information to the fourth device, where the third information is used to request frequency difference information from the fourth device.

The obtaining second frequency difference information includes:

receiving the second frequency difference information from the fourth device.

In the foregoing solution, the location management function unit can send the third information to the fourth device, to request the frequency difference information. After receiving the third information, the fourth device sends the second frequency difference information to the location management function unit.

Optionally, after receiving the third information, the fourth device sends the fourth frequency difference information to the location management function unit.

Optionally, the third information is further used to request time difference information. After receiving the third information, the fourth device sends the second time difference information to the location management function unit.

According to a second aspect, an information processing method is provided. The method is applied to a second device, and the method includes:

receiving second information, where the second information indicates to the second device that a first device needs to measure location information of the second device; and

sending first frequency difference information, where the first frequency difference information indicates a difference between a frequency at which the second device receives a first reference signal of a third device and a frequency at which the second device receives a second reference signal of a fourth device, and the first frequency difference information is used to determine the location information of the second device.

In the foregoing solution, after receiving the second information, the second device triggers sending of the first frequency difference information, so that the first device determines the location information of the second device based on the first frequency difference information.

In some possible implementations, movement speed information of the second device is sent. The movement speed information of the second device is used to determine the location information of the second device.

Optionally, after receiving the second information, the second device triggers sending of the movement speed information of the second device.

In some possible implementations, the method further includes: sending third frequency difference information, where the third frequency difference information indicates a difference between a frequency at which the second device receives a third reference signal of a fifth device and the frequency at which the second device receives the second reference signal of the fourth device, and the third frequency difference information is used to determine the location information of the second device.

In some possible implementations, first time difference information is sent. The first time difference information indicates a difference between a moment at which the second device receives the first reference signal of the third device and a moment at which the second device receives the second reference signal of the fourth device, and the first time difference information is used to determine the location information of the second device.

According to a third aspect, an information processing method is provided. The method is applied to a fourth device and includes: receiving third information, where the third information is used to request frequency difference information from the fourth device; and sending second frequency difference information, where the second frequency difference information indicates a difference between a frequency at which the fourth device sends a second reference signal and a frequency at which a third device sends a first reference signal, and the second frequency difference information is used to determine location information of a second device.

In some possible implementations, the method further includes:

sending fourth frequency difference information, where the fourth frequency difference information indicates a difference between the frequency at which the fourth device sends the second reference signal and a frequency at which a fifth device sends a third reference signal, and the fourth frequency difference information is used to determine the location information of the second device.

According to a fourth aspect, an information processing method is provided. The method is applied to a first device and includes:

obtaining first frequency difference information, where the first frequency difference information indicates a difference between a frequency at which a second device receives a first reference signal of a third device and a frequency at which the second device receives a second reference signal of a fourth device;

obtaining second frequency difference information, where the second frequency difference information indicates a difference between a frequency at which the fourth device sends the second reference signal and a frequency at which the third device sends the first reference signal;

obtaining third frequency difference information, where the third frequency difference information indicates a difference between a frequency at which the second device receives a third reference signal of a fifth device and the frequency at which the second device receives the second reference signal of the fourth device;

obtaining fourth frequency difference information, where the fourth frequency difference information indicates a difference between the frequency at which the fourth device sends the second reference signal and a frequency at which the fifth device sends the third reference signal;

obtaining first time difference information, where the first time difference information indicates a difference between a moment at which the second device receives the first reference signal of the third device and a moment at which the second device receives the second reference signal of the fourth device;

obtaining third time difference information, where the third time difference information indicates a difference between a moment at which the second device receives the second reference signal of the fourth device and a moment at which the second device receives the third reference signal of the fifth device; and

determining the location information of the second device and/or movement speed information of the second device based on the first frequency difference information, the second frequency difference information, the third frequency difference information, the fourth frequency difference information, the first time difference information, and the third time difference information.

In the foregoing solution, the first frequency difference information can be used to reduce impact of a local frequency error when the second device separately receives the reference signals from the third device and the fourth device. In addition, the difference between the frequencies at which the second device receives the reference signals of the third device and the fourth device is also related to the difference between the frequencies at which the third device and the fourth device respectively send the reference signals. Therefore, the second frequency difference information can be used to reduce impact of errors in the frequencies at which the third device and the fourth device send the reference signals. The third frequency difference information can be used to reduce impact of a local frequency error when the second device separately receives the reference signals from the fifth device and the fourth device. In addition, the difference between the frequencies at which the second device receives the reference signals of the fifth device and the fourth device is also related to the difference between the frequencies at which the fifth device and the fourth device respectively send the reference signals. Therefore, the fourth frequency difference information can be used to reduce impact of errors in the frequencies at which the fifth device and the fourth device send the reference signals. Because a distance from the second device to the third device is different from a distance from the second device to the fourth device, transmission time of the first reference signal sent by the third device to the second device is different from transmission time of the second reference signal sent by the fourth device to the second device. When a transmission speed is specific, the first time difference information may represent a difference between the distance from the second device to the third device and the distance from the second device to the fourth device. Because a distance from the second device to the fifth device is different from the distance from the second device to the fourth device, transmission time of the third reference signal sent by the fifth device to the second device is different from transmission time of the second reference signal sent by the fourth device to the second device. When a transmission speed is specific, the third time difference information may represent a difference between the distance from the second device to the fifth device and the distance from the second device to the fourth device. Therefore, the first device can determine the location information of the second device and/or the movement speed information of the second device based on the four pieces of frequency difference information and the two pieces of time difference information, to improve accuracy of determining the location information of the second device and the movement speed information of the second device. If the first device determines the location information of the second device and the movement speed information of the second device, the second device can be located, and a movement speed of the second device can also be learned. This can implement more accurate locating.

Optionally, the movement speed information of the second device indicates a magnitude of the movement velocity and/or a direction of the movement velocity of the second device.

In some possible implementations, the method further includes:

obtaining second time difference information, where the second time difference information indicates a difference between a moment at which the third device sends the first reference signal and a moment at which the fourth device sends the second reference signal; and

obtaining fourth time difference information, where the fourth time difference information indicates a difference between a moment at which the fifth device sends the third reference signal and a moment at which the fourth device sends the second reference signal.

The determining the location information of the second device and/or movement speed information of the second device based on the first frequency difference information, the second frequency difference information, the third frequency difference information, the fourth frequency difference information, the first time difference information, and the third time difference information include:

determining the location information of the second device and/or the movement speed information of the second device based on the first frequency difference information, the second frequency difference information, the third frequency difference information, the fourth frequency difference information, the first time difference information, the second time difference information, the third time difference information, and the fourth time difference information.

In the foregoing solution, because a distance from the second device to the third device is different from a distance from the second device to the fourth device, transmission time of the first reference signal sent by the third device to the second device is different from transmission time of the second reference signal sent by the fourth device to the second device. The first device needs to learn a difference between a moment at which the third device sends the first reference signal and a moment at which the fourth device sends the second reference signal, to determine a difference between moments of transmitting the first reference signal and the second reference signal. When a transmission speed is specific, the difference between the moments of transmitting the first reference signal and the second reference signal may represent a difference between the distance from the second device to the third device and the distance from the second device to the fourth device. Because a distance from the second device to the fifth device is different from the distance from the second device to the fourth device, transmission time of the third reference signal sent by the fifth device to the second device is different from the transmission time of the second reference signal sent by the fourth device to the second device. The first device needs to learn a difference between the moment at which the fourth device sends the second reference signal and a moment at which the fifth device sends the third reference signal, to determine a difference between moments of transmitting the third reference signal and the second reference signal. When a transmission speed is specific, the difference between the moments of transmitting the third reference signal and the second reference signal may represent a difference between the distance from the second device to the fifth device and the distance from the second device to the fourth device. In this way, the location information of the second device and/or the movement speed information of the second device determined based on the four pieces of time difference information and the four pieces of frequency difference information is more accurate.

In some possible implementations, the determining the location information of the second device and/or the movement speed information of the second device based on the first frequency difference information, the second frequency difference information, the third frequency difference information, the fourth frequency difference information, the first time difference information, the second time difference information, the third time difference information, and the fourth time difference information includes:

determining the location information of the second device and/or the movement speed information of the second device based on the first frequency difference information, the second frequency difference information, the third frequency difference information, the fourth frequency difference information, the first time difference information, the second time difference information, the third time difference information, the fourth time difference information, a wavelength for sending the first reference signal, a wavelength for sending the second reference signal, and a wavelength for sending the third reference signal.

In the foregoing solution, because a wavelength for sending the reference signal may affect a frequency shift, the first device can determine the location information of the second device based on the four pieces of frequency difference information, the four pieces of time difference information, and the wavelengths at which the three devices respectively sends the three reference signals. This can improve accuracy of determining the location information of the second device.

In some possible implementations, the first device and the second device are a same terminal device, and before the obtaining first frequency difference information, the method further includes:

receiving first information, where the first information indicates the second device to measure the location information of the second device.

Optionally, the receiving first information may include: receiving the first information from a core network device. Optionally, the core network device may include an LMF unit.

Optionally, the first device may obtain one or more of the first frequency difference information, the third frequency difference information, the first time difference information, and the third time difference information based on the first information.

Optionally, the first device and the second device are a same terminal device, and the obtaining second frequency difference information includes: receiving the second frequency difference information. Optionally, the receiving the second frequency difference information includes: receiving the second frequency difference information from the core network device. Optionally, the core network device includes an LMF unit.

In some possible implementations, the first device and the second device are a same terminal device, and the obtaining fourth frequency difference information includes: receiving the fourth frequency difference information. Optionally, the receiving the fourth frequency difference information includes: receiving the fourth frequency difference information from the core network device. Optionally, the core network device includes an LMF unit.

In some possible implementations, the first device and the second device are a same terminal device, and the obtaining second time difference information includes: receiving the second time difference information. Optionally, the receiving the second time difference information includes: receiving the second time difference information from the core network device. Optionally, the core network device includes an LMF unit.

In some possible implementations, the first device and the second device are a same terminal device, and the obtaining fourth time difference information includes: receiving the fourth time difference information. Optionally, the receiving the fourth time difference information includes: receiving the fourth time difference information from the core network device. Optionally, the core network device includes an LMF unit.

Optionally, the first device may simultaneously receive at least two of the second frequency difference information, the fourth frequency difference information, the second time difference information, or the fourth time difference information.

In some possible implementations, the first device is a core network device. Optionally, the core network device includes an LMF unit. The obtaining first frequency difference information includes: receiving the first frequency difference information. Optionally, the receiving the first frequency difference information includes: receiving the first frequency difference information from the second device.

In some possible implementations, the first device is a core network device. Optionally, the core network device includes an LMF unit. The obtaining third frequency difference information includes: receiving the third frequency difference information. Optionally, the receiving the third frequency difference information includes: receiving the third frequency difference information from the second device.

In some possible implementations, the first device is a core network device. Optionally, the core network device includes an LMF unit. The obtaining first time difference information includes: receiving the first time difference information. Optionally, the receiving the first time difference information includes: receiving the first time difference information from the second device.

In some possible implementations, the first device is a core network device. Optionally, the core network device includes an LMF unit. The obtaining third time difference information includes: receiving the third time difference information. Optionally, the receiving the third time difference information includes: receiving the third time difference information from the second device.

In some possible implementations, the first device is a core network device. Optionally, the core network device includes an LMF unit. The method further includes: sending second information to the second device, where the second information indicates to the second device that the first device needs to measure the location information of the second device. Optionally, the second device may send one or more of the first frequency difference information, the third frequency difference information, the first time difference information, or the third time difference information to the core network device based on the first information.

In some possible implementations, the first device is a core network device. Optionally, the core network device includes an LMF unit. The obtaining second frequency difference information includes: receiving the second frequency difference information. Optionally, the receiving the second frequency difference information includes: receiving the second frequency difference information from the fourth device.

In some possible implementations, the first device is a core network device. Optionally, the core network device includes an LMF unit. The obtaining fourth frequency difference information includes: receiving the fourth frequency difference information. Optionally, the receiving the fourth frequency difference information includes: receiving the fourth frequency difference information from the fourth device.

In some possible implementations, the first device is a core network device. Optionally, the core network device includes an LMF unit. The obtaining second time difference information includes: receiving the second time difference information. Optionally, the receiving the second time difference information includes: receiving the second time difference information from the fourth device.

In some possible implementations, the first device is a core network device. Optionally, the core network device includes an LMF unit. The obtaining fourth time difference information includes: receiving the fourth time difference information. Optionally, the receiving the fourth time difference information includes: receiving the fourth time difference information from the fourth device.

In some possible implementations, the first device is a core network device. Optionally, the core network device includes an LMF unit. The method further includes: sending third information to the fourth device, where the third information is used to determine, for the fourth device, a parameter related to the location information of the second device, or the third information is used to request frequency difference information and/or time difference information from the fourth device. Optionally, the fourth device may send one or more of the second frequency difference information, the fourth frequency difference information, the second time difference information, or the fourth time difference information to the core network device based on the third information.

According to a fifth aspect, an information processing method is provided. The method is applied to a second device and includes:

receiving second information, where the second information indicates to the second device that a first device needs to measure location information of the second device and/or movement speed information of the second device; and
sending first frequency difference information, third frequency difference information, first time difference information, and third time difference information, where the first frequency difference information indicates a difference between a frequency at which the second device receives a first reference signal of a third device and a frequency at which the second device receives a second reference signal of a fourth device, the third frequency difference information indicates a difference between the frequency at which the second device receives the second reference signal of the fourth device and a frequency at which the second device receives a third reference signal of a fifth device, the first time difference information indicates a difference between a moment at which the second device receives the first reference signal of the third device and a moment at which the second device receives the second reference signal of the fourth device, and the third time difference information indicates a difference between the moment at which the second device receives the second reference signal of the fourth device and a moment at which the second device receives the third reference signal of the fifth device. The first frequency difference information, the third frequency difference information, the first time difference information, and the third time difference information are used to determine the location information of the second device and/or the movement speed information of the second device.

Optionally, the second device may simultaneously send at least two of the first frequency difference information, the third frequency difference information, the first time difference information, and the third time difference information, or separately send the first frequency difference information, the third frequency difference information, the first time difference information, and the third time difference information.
According to a sixth aspect, an information processing method is provided. The method is applied to a fourth device and includes:

receiving third information, where the third information is used to request frequency difference information and/or time difference information from the fourth device; and
sending second frequency difference information, fourth frequency difference information, second time difference information, and fourth time difference information, where the second frequency difference information indicates a difference between a frequency at which a third device sends a first reference signal and a frequency at which the fourth device sends a second reference signal, the fourth frequency difference information indicates a difference between the frequency at which the fourth device sends the second reference signal and a frequency at which a fifth device sends a third reference signal, the second time difference information indicates a difference between a moment at which the third device sends the first reference signal and a moment at which the fourth device sends the second reference signal, and the fourth time difference information indicates a difference between the moment at which the fourth device sends the second reference signal and a moment at which the fifth device sends the third reference signal. The second frequency difference information, the fourth frequency difference information, the second time difference information, and the fourth time difference information are used to determine location information of the second device and movement speed information of the second device.

Optionally, the third information is used to request, from the fourth device, a parameter related to determining the location information of the second device.
Optionally, the fourth device may simultaneously send at least two of the second frequency difference information, the fourth frequency difference information, the second time difference information, and the fourth time difference information, or separately send the second frequency difference information, the fourth frequency difference information, the second time difference information, and the fourth time difference information.
Specifically, for beneficial effect of the sixth aspect, refer to descriptions of the fifth aspect.
According to a seventh aspect, an information processing method is provided. The method is applied to a first device and includes:

obtaining fifth frequency difference information, where the fifth frequency difference information indicates a difference between a frequency at which a second device receives a first reference signal of a third device and a frequency at which the second device receives a second reference signal of the third device;
obtaining sixth frequency difference information, where the sixth frequency difference information indicates a difference between a frequency at which the second device receives a third reference signal of the third device and the frequency at which the second device receives the second reference signal of the third device, and the first reference signal, the second reference signal, and the third reference signal are reference signals sent by the third device at different locations;
obtaining movement speed information of the second device;
obtaining movement speed information of the third device; and
determining location information of the third device based on the fifth frequency difference information, the sixth frequency difference information, the movement speed information of the second device, and the movement speed information of the third device.

In some possible implementations, the movement speed information of the second device includes first movement speed information when the second device receives the first reference signal of the third device, second movement speed information when the second device receives the second reference signal, and third movement speed information when the second device receives the third reference signal.
Optionally, the first movement speed information indicates a magnitude of a movement velocity and/or a direction of the movement velocity when the second device receives the first reference signal.

Optionally, the second movement speed information indicates a magnitude of the movement velocity and/or a direction of the movement velocity when the second device receives the second reference signal.

Optionally, the third movement speed information indicates a magnitude of the movement velocity and/or a direction of the movement velocity when the second device receives the third reference signal.

Optionally, the method further includes: obtaining first timestamp information corresponding to the first movement speed information. Optionally, the first timestamp information indicates a first moment at which the second device receives the first reference signal.

Optionally, the method further includes: obtaining second timestamp information corresponding to the second movement speed information. Optionally, the second timestamp information indicates a second moment at which the second device receives the second reference signal.

Optionally, the method further includes: obtaining third timestamp information corresponding to the third movement speed information. Optionally, the third timestamp information indicates a third moment at which the second device receives the third reference signal.

In some possible implementations, the movement speed information of the third device includes fourth movement speed information when the third device sends the first reference signal, fifth movement speed information when the third device sends the second reference signal, and sixth movement speed information when the third device sends the third reference signal.

Optionally, the fourth movement speed information indicates a magnitude of a movement velocity and/or a direction of the movement velocity when the third device sends the first reference signal.

Optionally, the fifth movement speed information indicates a magnitude of the movement velocity and/or a direction of the movement velocity when the fourth device sends the second reference signal.

Optionally, the sixth movement speed information indicates a magnitude of the movement velocity and/or a direction of the movement velocity when the fifth device sends the third reference signal.

Optionally, the first device may determine, based on the first timestamp information, that the first movement speed information corresponds to the fourth movement speed information.

Optionally, the first device may determine, based on the second timestamp information, that the second movement speed information corresponds to the fifth movement speed information.

Optionally, the first device may determine, based on the third timestamp information, that the third movement speed information corresponds to the sixth movement speed information.

In some possible implementations, the location information of the second device indicates coordinates of the second device relative to the first device.

In some possible implementations, the second device and the first device are in a relative movement state.

In some possible implementations, the first device and the third device are a same terminal device, and the second device is another terminal device. Optionally, the method further includes: sending fourth information to the second device, where the fourth information indicates that the first device needs to determine the location information of the third device. The obtaining fifth frequency difference information includes: receiving the fifth frequency difference information from the second device. Optionally, the obtaining sixth frequency difference information includes: receiving the sixth frequency difference information from the second device. Optionally, the obtaining movement speed information of the second device includes: receiving the movement speed information of the second device from the second device.

In some possible implementations, the first device and the second device are a same terminal device, and the third device is another terminal device. Optionally, before the obtaining fifth frequency difference information, the method further includes: receiving fifth information from the third device, where the fifth information indicates the first device to determine the location information of the third device.

In some possible implementations, the first device and the second device are a same terminal device, and the third device is another terminal device. The obtaining movement information of the third device includes: receiving the movement information of the third device from the third device.

According to an eighth aspect, an information processing method is provided. The method is applied to a second device and includes:

receiving fourth information, where the fourth information indicates a first device to determine location information of a third device; and
sending fifth frequency difference information, sixth frequency difference information, and movement speed information of the second device, where the fifth frequency difference information indicates a difference between a frequency at which the second device receives a first reference signal of the third device and a frequency at which the second device receives a second reference signal of the third device, the sixth frequency difference information indicates a difference between a frequency at which the second device receives a third reference signal of the third device and the frequency at which the second device receives the second reference signal of the third device, and the first reference signal, the second reference signal, and the third reference signal are reference signals sent by the third device at different locations. The fifth frequency difference information, the sixth frequency difference information, and the movement speed information of the second device are used to determine the location information of the third device.

According to a ninth aspect, this application provides an apparatus. The apparatus is included in an electronic device, and the apparatus has a function of implementing behavior of each device according to the foregoing aspects and the possible implementations of the foregoing aspects. The function may be implemented by hardware, or may be implemented by executing corresponding software by hardware. The hardware or software includes one or more modules or units corresponding to the foregoing functions, for example, a determining module or unit, or a transceiver module or unit.

Optionally, the apparatus may be the first device, the second device, the third device, the fourth device, or the fifth device.

According to a tenth aspect, this application provides an apparatus. The apparatus includes a processor, the processor is coupled to a memory, the memory is configured to store a computer program or instructions, and the processor is configured to execute the computer program or the instructions stored in the memory, to perform the method according to the foregoing aspects and the possible implementations of the foregoing aspects.

For example, the processor is configured to execute the computer program or the instructions stored in the memory, so that the apparatus performs the method according to the foregoing aspects and the possible implementations of the foregoing aspects.

Optionally, the apparatus includes one or more processors.

Optionally, the apparatus may further include a memory coupled to the processor.

Optionally, the apparatus may include one or more memories.

Optionally, the memory and the processor may be integrated together or disposed separately.

Optionally, the apparatus may further include a transceiver.

Optionally, the apparatus may be the first device, the second device, the third device, the fourth device, or the fifth device.

According to an eleventh aspect, this application provides an electronic device, including one or more processors, a memory, a plurality of applications, and one or more computer programs. The one or more computer programs are stored in the memory. The one or more computer programs include instructions. When the instructions are executed by the electronic device, the electronic device is enabled to perform the information processing method according to any one of the foregoing aspects or the possible implementations of the foregoing aspects, or to perform the information processing method described in any embodiment of this application.

Optionally, the electronic device may further include a touchscreen and/or a camera. The touchscreen includes a touch-sensitive surface and a display.

According to a twelfth aspect, this application provides a computer-readable storage medium, including computer instructions. When the computer instructions are run on an electronic device, the electronic device is enabled to perform the information processing method according to any one of the foregoing aspects or the possible implementations of the foregoing aspects, or to perform the information processing method described in any embodiment of this application.

According to a thirteenth aspect, this application provides a computer program product. When the computer program product runs on an electronic device, the electronic device is enabled to perform the information processing method according to any one of the foregoing aspects or the possible implementations of the foregoing aspects, or to perform the information processing method described in any embodiment of this application.

According to a fourteenth aspect, this application provides an apparatus, including units configured to perform the method described in any embodiment of this application.

**BRIEF** DESCRIPTION OF DRAWINGS

FIG. 1 is a schematic diagram of an application scenario according to an embodiment of this application;
FIG. 2 is a schematic diagram of another application scenario according to an embodiment of this application;
FIG. 3 is a schematic diagram of a locating principle according to an embodiment of this application;
FIG. 4A and FIG. 4B are a schematic diagram of an information processing method according to an embodiment of this application;
FIG. 5 is a schematic diagram of another locating principle according to an embodiment of this application;
FIG. 6A and FIG. 6B are a schematic diagram of another information processing method according to an embodiment of this application;
FIG. 7A and FIG. 7B are a schematic diagram of still another information processing method according to an embodiment of this application;

FIG. 8 is a schematic diagram of still another locating principle according to an embodiment of this application;

FIG. 9A and FIG. 9B are a schematic diagram of still another information processing method according to an embodiment of this application;

FIG. 10A to FIG. 10C are a schematic diagram of still another information processing method according to an embodiment of this application;

FIG. 11A to FIG. 11C are a schematic diagram of still another information processing method according to an embodiment of this application;

FIG. 12A and FIG. 12B are a schematic diagram of still another information processing method according to an embodiment of this application;

FIG. 13 is a schematic diagram of still another locating principle according to an embodiment of this application;

FIG. 14 is a schematic diagram of still another information processing method according to an embodiment of this application;

FIG. 15 is a schematic diagram of still another information processing method according to an embodiment of this application; and

FIG. 16 is a schematic block diagram of a communication apparatus according to an embodiment of this application.

## DESCRIPTION OF EMBODIMENTS

The following describes technical solutions in embodiments of this application with reference to the accompanying drawings in embodiments of this application.

The technical solutions in embodiments of this application may be applied to various communication system, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

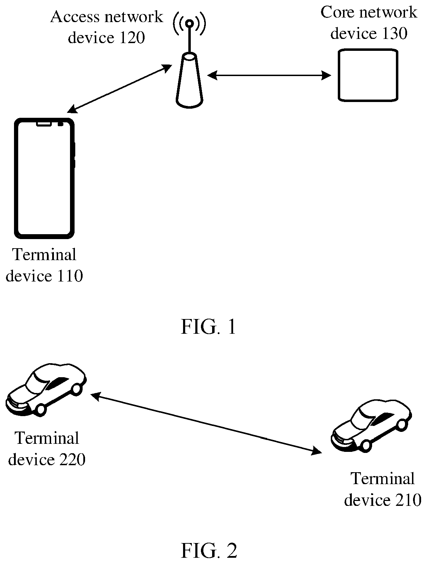

FIG. 1 is a schematic diagram of an application scenario to which an embodiment of this application is applied. As shown in FIG. 1, the system includes a terminal device 110, an access network device 120, and a core network device 130.

The terminal device 110 is also referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user communication apparatus, or the like.

The terminal device 110 may be a device that provides voice/data connectivity for a user, for example, a handheld device having a wireless connection function or a vehicle-mounted device. Currently, examples of some terminal devices include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application.

The access network device 120 may also be referred to as a radio access network (radio access network, RAN) or a radio access network device. The access network device 120 may be a transmission reception point (transmission reception point, TRP), or may be an evolved NodeB (evolved NodeB, eNB, or eNodeB) in an LTE system, or may be a home NodeB (for example, a home evolved NodeB, or a home NodeB, HNB), or may be a base band unit (base band unit, BBU), or may be a radio controller in a cloud radio access network (cloud radio access network, CRAN) scenario. Alternatively, the access network device 120 may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the access network device 120 may be a metro base station, a micro base station, a pico base station, a femto base station, or the like. This is not limited in this application.

In some embodiments, the access network device 120 in FIG. 1 may be replaced with a road side unit (road side unit, RSU) in V2I communication, and the terminal device 110 may be an on board unit (on board unit, OBU).

In some embodiments, the access network device 120 may alternatively be a roadside unit (road side unit, RSU), and the terminal device 110 may be an on board unit (on board unit, OBU). In other words, an orientation information determining method provided in this embodiment of this application may be applied to vehicle-to-everything.

The core network device 130 is configured to manage one or more access network devices 120. For example, the core network device 130 may include at least one of a core network access and mobility management function (core access and mobility management function, AMF), a user plane function (user plane function, UPF) network element, a session management function (session management function, SMF) network element, a data network (data network, DN), a unified data repository (unified data repository, UDR) network element, a location function (location management function, LMF) unit, or a unified data management (unified data management, UDM) network element. The LMF unit is configured to manage a location of the terminal device 110, for example, configured to determine location information of the terminal device 110, or configured to determine location information and movement speed information of the terminal device 110, or configured to assist in determining location information of the terminal device 110, or configured to assist in determining location information and movement speed information of the terminal device 110. Optionally, the LMF unit in this embodiment of this application may be another core network element. This is not limited in this embodiment of this application.

FIG. 2 is a schematic diagram of another application scenario according to an embodiment of this application. The scenario may include a plurality of terminal devices, for example, a terminal device 210 and a terminal device 220 in FIG. 2. The terminal device 210 and the terminal device 220 may directly communicate with each other. A link for transmitting data between the terminal device 210 and the terminal device 220 is referred to as a sidelink (sidelink). For example, the terminal device 210 may send data to the terminal device 220 through a sidelink, and the terminal device 220 may send data to the terminal device 210 through a sidelink. The sidelink is usually used in a vehicle-to-everything (vehicle-to-everything, V2X) scenario, or a device-to-device (device-to-device, D2D) scenario in which direct communication can be performed between devices. V2X communication may be considered as a special case of D2D communication.

A new radio (new radio, NR) access technology is a current mainstream wireless communication technology. For a V2X service feature and a new service requirement, the new radio access technology can support V2X communication with a lower delay and higher reliability. V2X is a basis and key technology for a smart vehicle, autonomous driving, and an intelligent transportation system. V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like. V2N communication is currently the most widely used form of vehicle-to-everything. A main function of the V2N communication is to enable a vehicle to connect to a cloud server through a mobile network, to provide application functions such as navigation, entertainment, and anti-theft through the cloud server. V2V communication can be used for information exchange and reminding between vehicles, and most typical application is an anti-collision safety system between the vehicles. V2I communication can be used for communication between a vehicle and a road or even another infrastructure, for example, a traffic light or a roadblock, to obtain road management information like a traffic light signal time sequence. For example, in V2I communication, the terminal device 210 may be an on board unit (on board unit, OBU), and the terminal device 220 may be an RSU. V2P communication can be used for safety warning to a pedestrian or a non-motor vehicle on a road.

A type of the terminal device 210 or the terminal device 220 is the same as or different from a type of the terminal device 110 in FIG. 1.

The terminal device 110 in FIG. 1 may be in a moving state, and the terminal device 210 and the terminal device 220 in FIG. 2 may be in a relative movement state.

It should be understood that, in FIG. 1 and FIG. 2, for ease of understanding, FIG. 1 schematically show the terminal device 110, the access network device 120, and the core network device 130, and FIG. 2 schematically shows the terminal device 210 and the terminal device 220. However, this should not constitute any limitation on this application. FIG. 1 and FIG. 2 may further include more or fewer devices. This is not limited in this application.

For ease of description, a device number is omitted below. For example, the terminal device may be the terminal device 110 in FIG. 1, the terminal device 210 in FIG. 2, or the terminal device 220 in FIG. 2.

The following describes a locating principle. FIG. 1 is used as an example. A terminal device may send a reference signal in a movement process, and an access network device may receive the reference signal. The access network device measures a Doppler frequency shift of the received reference signal. The access network device sends the Doppler frequency shift to a core network device. The terminal device may send a movement speed and a movement direction to the core network device. The core network device may determine an angle of the terminal device relative to the access network device based on the movement speed and the movement direction of the terminal device and the Doppler frequency shift, thereby locating the terminal device.

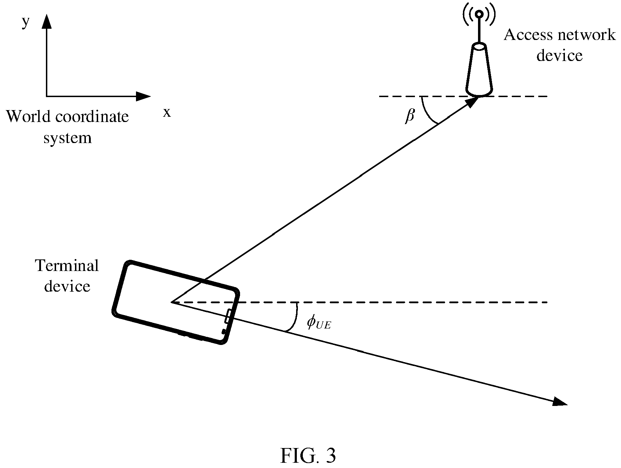

As shown in FIG. 3, after receiving the reference signal sent by the terminal device, the access network device may determine that the Doppler frequency shift of the received reference signal is $f_d$. The movement speed of the terminal device reported by the terminal device is $v$, the movement direction of the terminal device is $\phi_{UE}$, and a frequency at which the terminal device sends the reference signal is $f_c$.

$$f_d = \frac{v}{c} f_c \cos(\beta + \phi_{UE})$$

The core network device may learn the frequency $f_c$ at which the terminal device sends the reference signal. Therefore, in the foregoing formula, $f_c$, $v$, $\phi_{UE}$, and $f_d$ are known quantities. The core network device may determine, based on the foregoing formula, $\beta$ shown in FIG. 3, that is, the core network device may determine the angle of the terminal device relative to the access network device. In other words, in this scenario, the core network device can determine the angle of the terminal device relative to the access network device, but cannot determine a specific location of the terminal device.

In addition, when the frequency of the terminal device is not synchronized with a frequency of the access network device, the Doppler frequency shift $f_d$ determined by the access network device is inaccurate. Therefore, if $\beta$ is determined based on the inaccurate $f_d$, the determined $\beta$ is also inaccurate.

For example, if the clock frequency at which the terminal device sends the reference signal is $f_c$, and the Doppler frequency shift occurred due to movement of the terminal device and determined based on the clock frequency of the terminal device is $f_d$. Therefore, the frequency of the reference signal received by the access network device determined based on the clock frequency of the terminal device may be $f_c + f_d$. However, if the clock frequency of the terminal device is not synchronized with the clock frequency of the access network device, the frequency of the reference signal received by the access network device is not $f_c + f_d$, but $f_c + f_d - f_t$. $f_t$ is a clock frequency of the access network device, and $f_c - f_t$ is a difference between the clock frequency of the terminal device and the clock frequency of the access network device. In other words, because the clock frequency of the terminal device is not synchronized with the clock frequency of the access network device, the Doppler frequency shift is not $f_d$, but $f_c + f_d - f_t$. If $\beta$ is determined based on $f_d$, the determined $\beta$ is inaccurate. Even if the difference $f_c - f_t$ between the clock frequency of the terminal device and the clock frequency of the access network device is known, if $\beta$ is determined based on $f_c + f_d - f_t$, an actual frequency of the terminal device may not be $f_c$ due to a hardware error of the terminal device or the access network device, or an actual frequency of the access network device may not be $f_t$, and $f_c + f_d - f_t$ is still not a real Doppler frequency shift value. Therefore, even if $\beta$ is determined based on $f_c + f_d - f_t$, the determined $\beta$ is still inaccurate.

Therefore, in embodiments of this application, a first device can determine location information of a second device based on first frequency difference information indicating a difference between a frequency at which the second device receives a first reference signal of a third device and a frequency at which the second device receives a second reference signal of a fourth device, and second frequency difference information indicating a difference between a frequency at which the fourth device sends the second reference signal and a frequency at which the third device sends the first reference signal. In other words, the first frequency difference information is the difference between the frequencies at which the second device receives the reference signals of the two devices. If a clock frequency of the second device is inconsistent with an actual frequency of the second device, an inconsistent value can be cancelled by using the frequency difference. In this way, in a process of determining the location information of the second device, inconsistency between the clock frequency of the second device and the actual frequency of the second device can be cancelled by using the first frequency difference information. In addition, the difference between the frequencies at which the second device receives the reference signals of the two devices is also related to the difference between the frequencies at which the two devices send the reference signals. Therefore, the second frequency difference can be used to cancel impact of the difference between the frequencies at which the two devices send the reference signals, and improve accuracy of determining the location information of the second device.

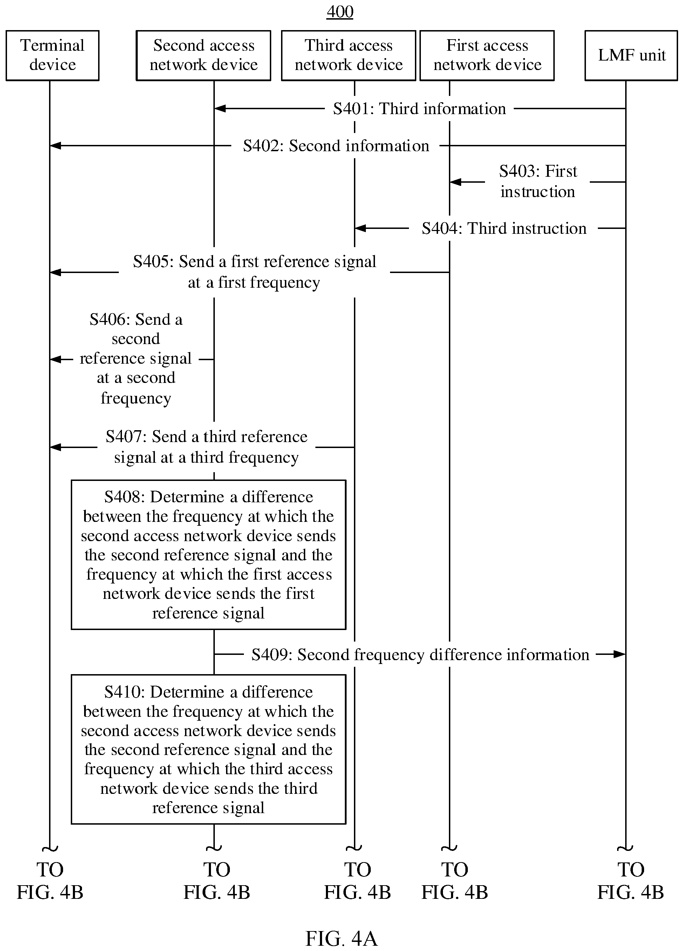

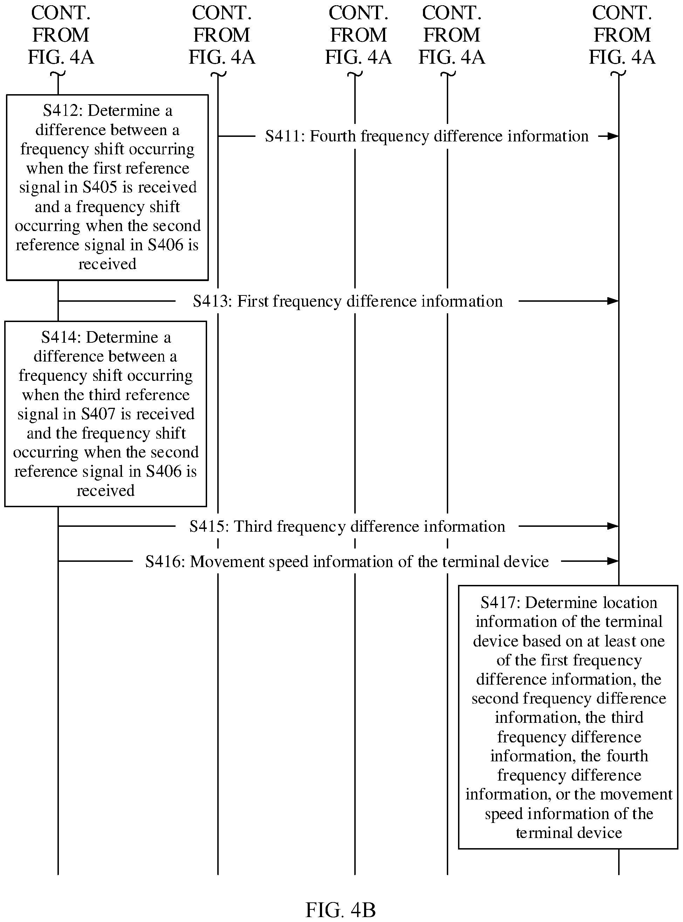

The following describes, with reference to an embodiment shown in FIG. 4A and FIG. 4B, an information processing method 400 provided in this embodiment of this application. In the method 400, descriptions are provided by using an example in which a first device is an LMF unit, a second device is a terminal device, a third device is a first access network device, a fourth device is a second access network device, and a fifth device is a third access network device. As shown in FIG. 4A and FIG. 4B, the method 400 includes the following steps.

S401: The LMF unit sends third information to the second access network device, and the second access network device receives the third information from the LMF unit.

Optionally, the LMF unit may alternatively be another core network device.

Optionally, the third information is used to request frequency difference information from the second access network device.

Optionally, the third information may include configuration information of the first access network device, configuration information of the second access network device, or configuration information of the third access network device.

Optionally, the configuration information of the first access network device is used to configure an identifier of the first access network device and/or first time information for frequency difference information measurement. Optionally, the first time information indicates start time and/or a measurement period of measurement by the second access network device. The second access network device may measure, at the start time indicated by the first time information, a difference between a frequency at which the second access network device sends a second reference signal and a frequency at which the first access network device sends a first reference signal; and/or the second access network device may measure, based on the measurement period indicated by the first time information, a difference between a frequency at which the second access network device sends a second reference signal and a frequency at which the first access network device sends a first reference signal.

Optionally, the configuration information of the third access network device is used to configure an identifier of the third access network device and/or third time information for frequency difference measurement. Optionally, the third time information indicates start time and/or a third measurement period of measurement by the second access network device. The second access network device may measure, at the start time indicated by the third time information, a difference between the frequency at which the second access network device sends the second reference signal and a frequency at which the third access network device sends a third reference signal; and/or the second access network device may measure, based on the measurement period indicated by the third time information, a difference between the frequency at which the second access network device sends the second reference signal and a frequency at which the third access network device sends a third reference signal.

Optionally, the third information includes a second instruction, and the second instruction instructs the second access network device to send the second reference signal at a second frequency. Optionally, the second instruction may further instruct the second access network device to send second time information of the second reference signal. Optionally, the second time information indicates start time and/or a sending period at which the second access network device sends the second reference signal.

It may be understood that the third information may not include the second instruction, and the second access network device periodically sends the second reference signal at the second frequency.

Optionally, the second access network device may be an access network device serving the terminal device.

Optionally, the LMF unit may actively trigger performing of S401, or the terminal device may send a location request message to the LMF unit, and after receiving the location request message, the LMF unit triggers performing of S401.

It should be noted that S401 is optional, that is, the method 400 may not include S401. The second access network device may actively report frequency difference information, for example, actively report the following second frequency difference information and fourth frequency difference information.

S402: The LMF unit sends second information to the terminal device, and the terminal device receives the second information.

Optionally, the second information indicates to the terminal device that the LMF unit needs to measure location information of the terminal device.

Optionally, the second information includes auxiliary measurement information, and the auxiliary measurement information includes at least one of the identifier of the first access network device, an identifier of the second access network device, the identifier of the third access network device, or configuration information of a reference signal. The configuration information of the reference signal indicates at least one of a first frequency at which the first access network device sends the first reference signal, a second frequency at which the second access network device sends the second reference signal, a third frequency at which the third access network device sends the third reference signal, fourth time information when the first access network device sends the first reference signal, second time information when the second access network device sends the second reference signal, or fifth time information when the third access network device sends the third reference signal.

Optionally, the LMF unit may actively trigger performing of S402, or the terminal device may send a location request message to the LMF unit, and after receiving the location request message, the LMF unit triggers performing of S402.

It may be understood that there is no limitation on a sequence of S401 and S402, and S401 may be performed before or after S402, or S401 and S402 are simultaneously performed.

S403: The LMF unit sends a first instruction to the first access network device, and the first access network device receives the first instruction, where the first instruction instructs the first access network device to send the first reference signal at the first frequency.

Optionally, the first instruction further instructs the first access network device to send the fourth time information of the first reference signal. In this way, the first access network device can send the first reference signal at start time indicated by the fourth time information. Optionally, if the first time information exists, the start time indicated by the fourth time information is the same as the measurement start time indicated by the first time information. In other words, the start time at which the first access network device sends the first reference signal is the same as the start time at which the second access network device measures the difference. The difference measured by the second access network device is the difference between the frequency at which the second access network device sends the second reference signal and the frequency at which the first access network device sends the first reference signal.

It should be noted that, S403 is optional, and the first access network device may periodically send the first reference signal at the first frequency, without being triggered by the first instruction to send the first reference signal at the first frequency.

S404: The LMF unit sends a third instruction to the third access network device, and the third access network device receives the third instruction, where the third instruction instructs the third access network device to send the third reference signal at the third frequency.

Optionally, the third instruction further instructs the third access network device to send the fifth time information of the third reference signal. In this way, the third access network device can send the third reference signal at start time indicated by the fifth time information. Optionally, if the third time information exists, the start time indicated by the fifth time information is the same as the start time indicated by the third time information. In other words, the start time at which the third access network device sends the third reference signal is the same as the start time at which the second access network device measures the difference. The difference measured by the second access network device is the difference between the frequency at which the second access network device sends the second reference signal and the frequency at which the third access network device sends the third reference signal.

It should be noted that, S404 is optional, and the third access network device may periodically send the third reference signal at the third frequency, without being triggered by the third instruction to send the third reference signal at the third frequency.

Optionally, there is no limitation on a sequence of S404 and S403. In addition, a sequence of either S403 or S404 and either S401 or S402 is not limited.

S405: The first access network device sends the first reference signal at the first frequency.

Optionally, the first access network device may send the first reference signal at the first frequency according to the first instruction.

Optionally, the first access network device may periodically send the first reference signal at the first frequency.

Optionally, if the first instruction instructs the first access network device to send the fourth time information of the first reference signal, the first access network device sends the first reference signal at the first frequency based on the start time and/or a sending period indicated by the fourth time information.

It should be noted that, theoretically, the first access network device sends the first reference signal at the first frequency. However, due to a limitation of a hardware condition of the first access network device, an actual frequency at which the first access network device sends the first reference signal may not be the first frequency. In other words, the first frequency is a theoretical frequency at which the first access network device sends the first reference signal, and may not be the actual frequency. Certainly, the hardware condition of the first access network device may be good, and the theoretical frequency is equal to the actual frequency. In other words, the actual frequency at which the first access network device sends the first reference signal may be the first frequency.

S406: The second access network device sends the second reference signal at the second frequency.

Optionally, the second access network device may send the second reference signal at the second frequency according to the second instruction.

Optionally, the second access network device may periodically send the second reference signal at the second frequency.

Optionally, if the second instruction instructs the second access network device to send the second time information of the second reference signal, the second access network device sends the second reference signal at the second frequency based on the start time and/or the sending period indicated by the second time information.

It should be noted that, theoretically, the second access network device sends the second reference signal at the second frequency. However, due to a limitation of a hardware condition of the second access network device, an actual frequency at which the second access network device sends the second reference signal may not be the second frequency. In other words, the second frequency is a theoretical frequency at which the second access network device sends the second reference signal, and may not be the actual frequency. Certainly, the hardware condition of the second access network device may be good, and the theoretical frequency is equal to the actual frequency. In other words, the actual frequency at which the second access network device sends the second reference signal may be the second frequency.

S407: The third access network device sends the third reference signal at the third frequency.

Optionally, the third access network device may send the third reference signal at the third frequency according to the third instruction.

Optionally, the third access network device may periodically send the third reference signal at the third frequency.

Optionally, if the third instruction instructs the third access network device to send the fifth time information of the third reference signal, the first access network device sends the third reference signal at the third frequency based on the start time and/or a sending period indicated by the fifth time information.

It should be noted that, theoretically, the third access network device sends the third reference signal at the third frequency. However, due to a limitation of a hardware condition of the third access network device, an actual frequency at which the third access network device sends the third reference signal may not be the third frequency. In other words, the third frequency is a theoretical frequency at which the third access network device sends the third reference signal, and may not be the actual frequency. Certainly, the hardware condition of the third access network device may be good, and the theoretical frequency is equal to the actual frequency. In other words, the actual frequency at which the third access network device sends the third reference signal may be the third frequency.

It should be noted that a sequence of S405, S406, and S407 is not limited.

S408: The second access network device determines the difference between the frequency at which the second access network device sends the second reference signal and the frequency at which the first access network device sends the first reference signal.

Optionally, the second access network device may determine, via a frequency mixer, the difference between the frequency at which the second access network device sends the second reference signal and the frequency at which the first access network device sends the first reference signal. Optionally, one input of the frequency mixer is a locally generated second reference signal at the second frequency, the other input of the frequency mixer is a received first reference signal of the first access network device, and an output of the frequency mixer is a signal of the difference between the frequency at which the second access network device sends the second reference signal and the frequency at which the first access network device sends the first reference signal. Therefore, a frequency that is of the signal output by the frequency mixer and that is obtained by the second access network device through measurement is the difference between the frequency at which the second access network device sends the second reference signal and the frequency at which the first access network device sends the first reference signal.

It may be understood that the difference in S408 is a difference between the frequency at which the second access network device sends the second reference signal and the frequency at which the first access network device sends the first reference signal that is obtained by the second access network device through actual measurement.

It should be noted that the LMF unit may configure, according to the first instruction, the first access network device to send the first reference signal at the first frequency. However, due to a limitation of the hardware condition or the like of the first access network device, the actual frequency at which the first access network device sends the first reference signal may not be the first frequency. The LMF unit may configure, according to the second instruction, the second access network device to send the second reference signal at the second frequency. However, due to a limitation of the hardware condition or the like of the second access network device, the actual frequency at which the second access network device sends the second reference signal may not be the second frequency. Therefore, in S408, the second access network device can obtain, through measurement, the difference between the frequency at which the second access network device sends the second reference signal and the frequency at which the first access network device sends the first reference signal. However, the second access network device may fail to determine the actual frequency at which the first access network device sends the first reference signal, and the second access network device may fail to determine the actual frequency at which the second access network device sends the second reference signal.

S409: The second access network device sends the second frequency difference information to the LMF unit. The second frequency difference information indicates the difference between the frequency at which the second access network device sends the second reference signal and the frequency at which the first access network device sends the first reference signal.

S410: The second access network device determines the difference between the frequency at which the second access network device sends the second reference signal and the frequency at which the third access network device sends the third reference signal.

Optionally, the second access network device may determine, via the frequency mixer, the difference between the frequency at which the second access network device sends the second reference signal and the frequency at which the third access network device sends the third reference signal. Optionally, one input of the frequency mixer is a locally generated second reference signal at the second frequency, the other input of the frequency mixer is a received third reference signal of the third access network device, and an output of the frequency mixer is a signal of the difference between the frequency at which the second access network device sends the second reference signal and the frequency at which the third access network device sends the third reference signal. Therefore, a frequency that is of the signal output by the frequency mixer and that is obtained by the second access network device through measurement is the difference between the frequency at which the second access network device sends the second reference signal and the frequency at which the third access network device sends the third reference signal.

It may be understood that the difference between the frequency at which the second access network device sends the second reference signal and the frequency at which the third access network device sends the third reference signal that is determined by the second access network device is a difference between the frequency at which the second access network device sends the second reference signal and the frequency at which the third access network device sends the third reference signal that is obtained by the second access network device through actual measurement.

It should be noted that the LMF unit may configure, according to the third instruction, the third access network device to send the third reference signal at the third frequency. However, due to a limitation of the hardware condition or the like of the third access network device, the actual frequency at which the third access network device sends the third reference signal may not be the third frequency. The LMF unit may configure, according to the second instruction, the second access network device to send the second reference signal at the second frequency. However, due to a limitation of the hardware condition or the like of the second access network device, the actual frequency at which the second access network device sends the second reference signal may not be the second frequency. Therefore, in S410, the second access network device can obtain, through measurement, the difference between the frequency at which the second access network device sends the second reference signal and the frequency at which the third access network device sends the third reference signal. However, the second access network device may fail to determine the actual frequency at which the third access network device sends the third reference signal, and the second access network device may fail to determine the actual frequency at which the second access network device sends the second reference signal.

S411: The second access network device sends the fourth frequency difference information to the LMF unit, where the fourth frequency difference information indicates the difference between the frequency at which the second access network device sends the second reference signal and the frequency at which the third access network device sends the third reference signal.

It should be noted that the second access network device may simultaneously perform S409 and S411, or may separately perform S409 and S411.

Optionally, in response to the third information, the second access network device may perform S409 and/or S411. In other words, the second access network device may use a response message of the third information to carry the second frequency difference information and/or the fourth frequency difference information.

S412: The terminal device determines a difference between a frequency shift occurring when the first reference signal in S405 is received and a frequency shift occurring when the second reference signal in S406 is received.

Optionally, the terminal device may listen to the first reference signal based on the first frequency at which the first access network device sends the first reference signal and that is indicated by the auxiliary measurement information, to determine the frequency shift occurring when the first reference signal is received. Optionally, the frequency shift occurring when the first reference signal is received is related to the frequency at which the first access network device sends the first reference signal.

Optionally, the terminal device may listen to the second reference signal based on the second frequency at which the second access network device sends the second reference signal and that is indicated by the auxiliary measurement information, to determine the frequency shift occurring when the second reference signal is received. Optionally, the frequency shift occurring when the second reference signal is received is related to the frequency at which the second access network device sends the second reference signal.

Optionally, the terminal device may determine the frequency shift of the first reference signal via the frequency mixer. One input of the frequency mixer is a locally generated first reference signal at the first frequency, the other input of the frequency mixer is a received first reference signal, and an output of the frequency mixer is a signal whose frequency is the frequency shift of the first reference signal. Therefore, the frequency shift of the first reference signal can be obtained by measuring the frequency of the signal output by the frequency mixer.

Optionally, the terminal device may determine the frequency shift of the second reference signal via the frequency mixer. One input of the frequency mixer is a locally generated second reference signal at the second frequency, the other input of the frequency mixer is a received second reference signal, and an output of the frequency mixer is a signal whose frequency is the frequency shift of the second reference signal. Therefore, the frequency shift of the second reference signal can be obtained by measuring the frequency of the signal output by the frequency mixer.

It should be noted that, S412 is performed after S405 and S406, and a sequence of S412 and other steps is not limited.

S413: The terminal device sends first frequency difference information to the LMF unit. The first frequency difference information indicates a difference between the frequency shift occurring when the terminal device receives the first reference signal in S405 and the frequency shift occurring when the terminal device receives the second reference signal in S406.

In an alternative manner of S413, the terminal device may send, to the LMF unit, the frequency shift occurring when the first reference signal is received and the frequency shift occurring when the second reference signal is received, so that the LMF unit can determine the difference between the frequency shift occurring when the first reference signal is received and the frequency shift occurring when the second reference signal is received.

Optionally, the first frequency difference information indicates a difference between a frequency at which the terminal device receives the first reference signal in S405 and a frequency at which the terminal device receives the second reference signal in S406. The difference between the frequency at which the terminal device receives the first reference signal in S405 and the frequency at which the terminal device receives the second reference signal in S406 is obtained through measurement by the terminal device.

S414: The terminal device determines a difference between a frequency shift occurring when the terminal device receives the third reference signal in S407 and the frequency shift occurring when the terminal device receives the second reference signal in S406.

Optionally, the terminal device may listen to the third reference signal based on the third frequency at which the third access network device sends the third reference signal and that is indicated by the auxiliary measurement information, to determine the frequency shift occurring when the third reference signal is received. Optionally, the frequency shift occurring when the third reference signal is received is related to the frequency at which the third access network device sends the third reference signal.

Optionally, the terminal device may determine the frequency shift of the third reference signal via the frequency mixer. One input of the frequency mixer is a locally generated third reference signal at the third frequency, the other input of the frequency mixer is a received third reference signal, and an output of the frequency mixer is a signal whose frequency is the frequency shift of the third reference signal. Therefore, the frequency shift of the third reference signal can be obtained by measuring the frequency of the signal output by the frequency mixer.

It should be noted that, S414 is performed after S406 and S407, and a sequence of S414 and other steps is not limited.

S415: The terminal device sends third frequency difference information to the LMF unit. The third frequency difference information indicates a difference between the frequency shift occurring when the terminal device receives the third reference signal in S407 and the frequency shift occurring when the terminal device receives the second reference signal in S406.

In an alternative manner of S415, the terminal device may send, to the LMF unit, the frequency shift occurring when the third reference signal is received and the frequency shift occurring when the second reference signal is received, so that the LMF unit can determine the difference between the frequency shift occurring when the third reference signal is received and the frequency shift occurring when the second reference signal is received.

Optionally, the third frequency difference information indicates a difference between a frequency at which the terminal device receives the third reference signal in S407 and a frequency at which the terminal device receives the second reference signal in S406. The difference between the frequency at which the terminal device receives the third reference signal in S407 and the frequency at which the terminal device receives the second reference signal in S406 is obtained through measurement by the terminal device.

S416: The terminal device sends movement speed information of the terminal device to the LMF unit.

Optionally, the movement speed information of the terminal device indicates a magnitude of a movement velocity and/or a direction of the movement velocity of the terminal device.

Optionally, the terminal device may simultaneously perform S413, S415, and S416, or may separately perform S413, S415, and S416.

Optionally, in response to the second information in S402, the terminal device may send the first frequency difference information, the third frequency difference information, and the movement speed information of the terminal device to the LMF unit.

S417: The LMF unit determines the location information of the terminal device based on at least one of the first frequency difference information, the second frequency difference information, the third frequency difference information, the fourth frequency difference information, or the movement speed information of the terminal device.

Optionally, S417 includes: The LMF unit may obtain the location information of the terminal device by performing a mathematical operation on the first frequency difference information, the second frequency difference information, the third frequency difference information, the fourth frequency difference information, and the movement speed information of the terminal device.

Optionally, S417 includes: The LMF unit determines the location information of the terminal device based on at least one of the first frequency difference information, the second frequency difference information, the third frequency difference information, the fourth frequency difference information, the movement speed information of the terminal device, a wavelength at which the first access network device sends the first reference signal, a wavelength at which the second access network device sends the second reference signal, or a wavelength at which the third access network device sends the third reference signal.

Optionally, the wavelength at which the first access network device sends the first reference signal is related to the first frequency. For example, the wavelength at which the first access network device sends the first reference signal is equal to a speed of light divided by the first frequency. In other words, the first frequency is configured by the LMF unit. Therefore, the LMF unit can determine, based on the speed of light and the first frequency, the wavelength at which the first access network device sends the first reference signal.

Optionally, the wavelength at which the second access network device sends the second reference signal is related to the second frequency. For example, the wavelength at which the second access network device sends the second reference signal is equal to the speed of light divided by the second frequency. In other words, the second frequency is configured by the LMF unit. Therefore, the LMF unit can determine, based on the speed of light and the second frequency, the wavelength at which the second access network device sends the second reference signal.

Optionally, the wavelength at which the third access network device sends the third reference signal is related to the third frequency. For example, the wavelength at which the third access network device sends the third reference signal is equal to the speed of light divided by the third frequency. In other words, the third frequency is configured by the LMF unit. Therefore, the LMF unit can determine, based on the speed of light and the third frequency, the wavelength at which the third access network device sends the third reference signal.

Optionally, that the LMF unit determines the location information of the terminal device based on at least one of the first frequency difference information, the second frequency difference information, the third frequency difference information, the fourth frequency difference information, the movement speed information of the terminal device, a wavelength at which the first access network device sends the first reference signal, a wavelength at which the second access network device sends the second reference signal, or a wavelength at which the third access network device sends the third reference signal includes: The LMF unit determines the location information of the terminal device based on at least one of the first frequency difference information, the second frequency difference information, the third frequency difference information, the fourth frequency difference information, the movement speed information of the terminal device, the wavelength at which the first access network device sends the first reference signal, the wavelength at which the second access network device sends the second reference signal, the wavelength at which the third access network device sends the third reference signal, coordinates of the first access network device, coordinates of the second access network device, or coordinates of the third access network device.

Optionally, the LMF unit may learn in advance the coordinates of the first access network device, the coordinates of the second access network device, or the coordinates of the third access network device. For example, the first access network device may report the coordinates of the first access network device to the LMF unit. For another example, the second access network device may report the coordinates of the second access network device to the LMF unit. For another example, the third access network device may report the coordinates of the third access network device to the LMF unit.

Optionally, S417 includes: The LMF unit determines the location information of the terminal device based on at least one of the first frequency difference information, the second frequency difference information, the third frequency difference information, the fourth frequency difference information, the movement speed information of the terminal device, the first frequency, the second frequency, or the third frequency.

Optionally, that the LMF unit determines the location information of the terminal device based on at least one of the first frequency difference information, the second frequency difference information, the third frequency difference information, the fourth frequency difference information, the movement speed information of the terminal device, the first frequency, the second frequency, or the third frequency includes: The LMF unit determines the location information of the terminal device based on at least one of the first frequency difference information, the second frequency difference information, the third frequency difference information, the fourth frequency difference information, the movement speed information of the terminal device, the first frequency, the second frequency, the third frequency, the coordinates of the first access network device, the coordinates of the second access network device, or the coordinates of the third access network device.

Optionally, the location information of the terminal device indicates coordinates of the terminal device.

It may be understood that, in the method 400, for ease of description, S408 and S410 are performed by the second access network device. Optionally, S408 and/or S410 may be performed by another access network device different from the second access network device. For example, the first access network device may perform S408, and send the second frequency difference information to the LMF unit to indicate the difference determined in S408. For another example, the third access network device may perform S410, and send the fourth frequency difference information to the LMF unit to indicate the difference determined in S410.

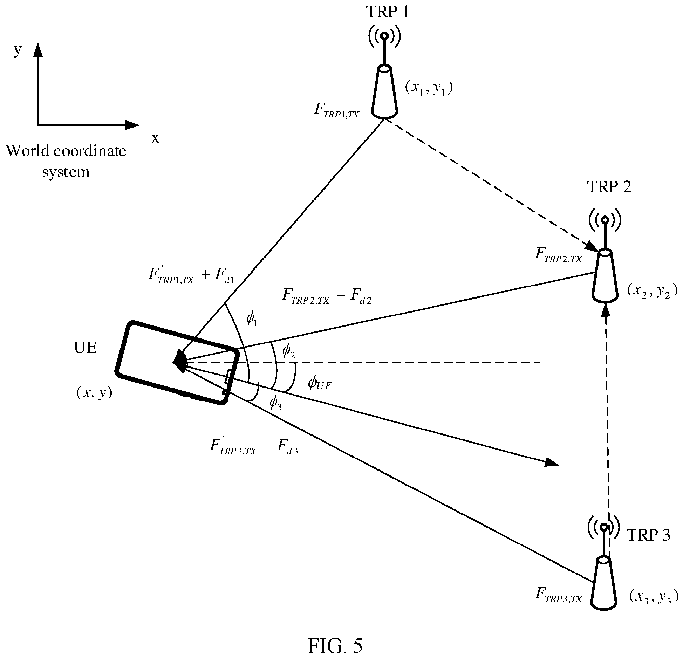

To better describe the method 400, the following provides an example for description with reference to FIG. 5. The terminal device in the method 400 may be UE shown in FIG. 5. The first access network device in the method 400 is a transmission reception point (transmission and reception point, TRP) 1 shown in FIG. 5. The first frequency in the method 400 is $F_{TRP1,TX}$ shown in FIG. 5. The second access network device in the method 400 is a TRP 2 shown in FIG. 5. The second frequency in the method 400 is $F_{TRP2,TX}$ shown in FIG. 5. The third access network device in the method 400 is a TRP 3 shown in FIG. 5. The third frequency in the method 400 is $F_{TRP3,TX}$ shown in FIG. 5.

(a) The TRP 1 sends a first reference signal at $F_{TRP1,TX}$ (corresponding to S405, that is, $F_{TRP1,TX}$ is a theoretical frequency), the TRP 2 sends a second reference signal at $F_{TRP2,TX}$ (corresponding to S406, that is, $F_{TRP2,TX}$ is a

theoretical frequency), and the TRP 3 sends a third reference signal at $F_{TRP3,TX}$ (corresponding to S407, that is, $F_{TRP3,TX}$ is a theoretical frequency).

The LMF unit configures the first access network device to send the first reference signal at $F_{TRP1,TX}$, the second access network device to send the second reference signal at $F_{TRP1,TX}$, and the third access network device to send the third reference signal at $F_{TRP3,TX}$. However, due to a limitation of a hardware condition of the first access network device, the second access network device, or the third access network device, an actual frequency at which the first access network device sends the first reference signal may not be $F_{TRP1,TX}$, but $F_{TRP1,TX}$, an actual frequency at which the second access network device sends the second reference signal may not be $F_{TRP2,TX}$, but $F'_{TRP2,TX}$, and an actual frequency at which the third access network device sends the third reference signal may not be $F_{TRP3,TX}$, but $F'_{TRP3,TX}$. However, $F'_{TRP1,TX}$, $F'_{TRP2,TX}$, and $F'_{TRP3,TX}$ are unknown quantities that cannot be measured.

$$F_{TRP\_21} = F'_{TRP2,TX} - F'_{TRP1,TX}$$

(b) The TRP 2 determines (corresponding to S408).

The TRP 2 may determine $F_{TRP\_21}$ via a frequency mixer, that is, the TRP 2 may not determine $F'_{TRP1,TX}$ and $F'_{TRP2,TX}$, but may directly determine a difference of $F'_{TRP2,TX} - F'_{TRP1,TX}$.

$$F_{TRP\_23} = F'_{TRP2,TX} - F'_{TRP3,TX}$$

(c) The TRP 2 determines (corresponding to S410).

The TRP 2 may determine $F_{TRP\_23}$ via a frequency mixer, that is, the TRP 2 may not determine $F'_{TRP3,TX}$ and $F'_{TRP2,TX}$, but may directly determine a difference of $F'_{TRP2,TX} - F'_{TRP3,TX}$.

(d) The TRP 2 sends second frequency difference information (corresponding to S409) and fourth frequency difference information (corresponding to S411) to the LMF unit. The second frequency difference information indicates $F_{TRP\_21}$, and the fourth frequency difference information indicates $F_{TRP\_23}$.

(e) A frequency shift that is of the received first reference signal and that is measured by the UE is $F_1$. $F_1$ is related to an actual frequency $F'_{TRP1,TX}$ of the first reference signal sent by the TRP 1, an actual Doppler frequency shift $F_{d1}$ of the first reference signal, and a clock frequency $F_{UE}$ of the UE, for example, $F_1 = F'_{TRP1,TX} + F_{d1} - F_{UE}$. In other words, the UE can obtain $F_1$ through measurement, but may not need to measure $F'_{TRP1,TX}$, $F_{d1}$, and $F_{UE}$ related to $F_1$. $F_1$ may also be referred to as a measured Doppler frequency shift of the received first reference signal.

In other words, because the clock frequency $F_{UE}$ of the UE is different from the actual frequency $F'_{TRP1,TX}$ at which the TRP 1 sends the first reference signal, the Doppler frequency shift $F_1$ of the first reference signal obtained through measurement is different from the actual Doppler frequency shift $F_{d1}$ of the first reference signal. If the clock frequency $F_{UE}$ of the UE is equal to the actual frequency $F'_{TRP1,TX}$ at which the TRP 1 sends the first reference signal, the Doppler frequency shift $F_1$ of the first reference signal obtained by the UE through measurement is equal to the actual Doppler frequency shift $F_{d1}$ of the first reference signal. A frequency shift that is of the received second reference signal and that is measured by the UE is $F_2$. $F_2$ is related to an actual frequency $F'_{TRP2,TX}$ at which the TRP 2 sends the second reference signal, an actual Doppler frequency shift $F_{d2}$ of the second reference signal, and the clock frequency $F_{UE}$ of

$$F_2 = F'_{TRP2,TX} + F_{d2} - F_{UE}$$

the UE, for example, . In other words, the UE can obtain $F_2$ through measurement, but

may not need to measure $F'_{TRP2,TX}$, $F_{d2}$, and $F_{UE}$ related to $F_2$. $F_2$ may also be referred to as a measured Doppler frequency shift of the received second reference signal. In other words, because the clock frequency $F_{UE}$ of the UE is different from the actual frequency $F'_{TRP2,TX}$ at which the TRP 2 sends the second reference signal, the Doppler frequency shift $F_2$ of the second reference signal obtained through measurement is different from the actual Doppler frequency shift $F_{d2}$ of the second reference signal. If the clock frequency $F_{UE}$ of the UE is equal to the actual frequency

$F'_{TRP2,TX}$ at which the TRP 2 sends the second reference signal, the Doppler frequency shift $F_2$ of the second reference signal obtained by the UE through measurement is equal to the actual Doppler frequency shift $F_{d2}$ of the second reference signal. Therefore, a difference between the frequency shift that is of the received first reference signal and that is measured by the UE and the frequency shift that is of the received second reference signal and that is measured by the UE is

$$FDOA_{UE\_12} = F_1 - F_2 = (F'_{TRP1,TX} + F_{d1} - F_{UE}) - (F'_{TRP2,TX} + F_{d2} - F_{UE}) = F_{d1} - F_{d2} + F'_{TRP1,TX} - F'_{TRP2,TX}$$

. In other words, an error of the clock frequency $F_{UE}$ of the UE can be cancelled by using the difference between the frequency shifts of the two reference signals obtained by the UE through measurement. This can reduce impact of the error of the clock frequency of the UE. First frequency difference information sent by the UE to the LMF unit may indicate $FDOA_{UE\_12}$. Certainly, the UE may directly send $F_1$ and $F_2$ to the LMF unit. In this way, the LMF unit can determine $FDOA_{UE\_12}$. $FDOA_{UE\_12}$ may also be referred to as a frequency difference of arrival (frequency difference of arrival, FDOA) between the first reference signal and the second reference signal.

(f) A frequency shift that is of the received third reference signal and that is measured by the UE is $F_3$. $F_3$ is

related to an actual frequency $F'_{TRP3,TX}$ of the third reference signal sent by the TRP 3, an actual Doppler frequency

$$F_3 = F'_{TRP3,TX} + F_{d3} - F_{UE}$$

shift $F_{d3}$ of the third reference signal, and a clock frequency $F_{UE}$ of the UE, for example,

. In other words, the UE can obtain $F_3$ through measurement, but may not need to measure $F'_{TRP3,TX}$, $F_{d3}$, and $F_{UE}$ associated with $F_3$. $F_3$ may also be referred to as a measured Doppler frequency shift of the received third reference signal. In other words, because the clock frequency $F_{UE}$ of the UE is different from the actual frequency $F'_{TRP3,TX}$ at which the TRP 3 sends the third reference signal, the Doppler frequency shift $F_3$ of the third reference signal obtained through measurement is different from the actual Doppler frequency shift $F_{d3}$ of the third reference signal. If the clock frequency $F_{UE}$ of the UE is equal to the actual frequency $F'_{TRP3,TX}$ at which the TRP 3 sends the third reference signal, the Doppler frequency shift $F_3$ of the third reference signal obtained by the UE through measurement is equal to the actual Doppler frequency shift $F_{d3}$ of the third reference signal. Therefore, a difference between the frequency shift that is of the received third reference signal and that is measured by the UE and the frequency shift that is of the received second reference signal and that is measured by the UE is

$$FDOA_{UE\_32} = F_3 - F_2 = (F'_{TRP3,TX} + F_{d3} - F_{UE}) - (F'_{TRP2,TX} + F_{d2} - F_{UE}) = F_{d3} - F_{d2} + F'_{TRP3,TX} - F'_{TRP2,TX}$$

. In other words, an error of the clock frequency $F_{UE}$ of the UE can be cancelled by using the difference between the frequency shifts of the two reference signals obtained by the UE through measurement. In this way, impact of the error of the clock frequency of the UE can be reduced. Third frequency difference information sent by the UE to the LMF unit may indicate $FDOA_{UE\_32}$. Certainly, the UE may directly send $F_3$ and $F_2$ to the LMF unit. In this way, the LMF unit can determine $FDOA_{UE\_32}$. $FDOA_{UE\_32}$ may also be referred to as an FDOA between the third reference signal and the second reference signal.

(g) The UE sends movement speed information of the UE to the LMF unit (corresponding to S416). The movement speed information of the UE indicates a magnitude $v$ of a movement velocity of the UE and a direction $\phi_{UE}$ of the movement velocity of the UE.

(h) The LMF unit establishes FDOA-based equations (1) and (2):

$$FDOA_{UE\_12} + F_{TRP\_21} = F_{d1} - F_{d2} + F'_{TRP1,TX} - F'_{TRP2,TX} + F'_{TRP2,TX} - F'_{TRP1,TX}$$

$$= F_{d1} - F_{d2} = \frac{v}{\lambda_1}\cos\phi_1 - \frac{v}{\lambda_2}\cos\phi_2 \quad (1)$$

$$FDOA_{UE\_32} + F_{TRP\_23} = F_{d3} - F_{d2} + F'_{TRP3,TX} - F'_{TRP2,TX} + F'_{TRP2,TX} - F'_{TRP3,TX}$$

$$= F_{d3} - F_{d2} = \frac{v}{\lambda_3}\cos\phi_1 - \frac{v}{\lambda_2}\cos\phi_2 \quad (2)$$

$\phi_1$ is an included angle between the movement direction of the UE and a connection line between the TRP 1

$$\phi_1 = \arctan\left(\frac{y_1 - y}{x_1 - x}\right) + \phi_{UE}$$

and the UE, , $(x_1,y_1)$ is coordinates of the TRP 1, $(x_1,y_1)$ is a known quantity, $(x,y)$ is coordinates of the UE, and $(x,y)$ is an unknown quantity. $\phi_2$ is an included angle between the movement direction of the

$$\phi_2 = \arctan\left(\frac{y_2 - y}{x_2 - x}\right) + \phi_{UE}$$

UE and a connection line between the TRP 2 and the UE, , $(x_2,y_2)$ is coordinates of the TRP 2, and $(x_2,y_2)$ is a known quantity. $\phi_3$ is an included angle between the movement direction of the UE and a

$$\phi_3 = \arctan\left(\frac{y_3 - y}{x_3 - x}\right) + \phi_{UE}$$

connection line between the TRP 3 and the UE, , $(x_3,y_3)$ is coordinates of the TRP 3, and $(x_3,y_3)$ is a known quantity. $\lambda_1$ is a wavelength of the first reference signal sent by the TRP 1, $\lambda_1 = c/F_{TRP1,TX}$, $\lambda_2$ is a wavelength of the second reference signal sent by the TRP 2, $\lambda_2 = c/F_{TRP2,TX}$, $\lambda_3$ is a wavelength of the third reference signal sent by the TRP 3, $\lambda_3$, $= c/F_{TRP3,TX}$, and c is a speed of light. The magnitude $v$ of the movement velocity of the UE is a known quantity, and the direction $\phi_{UE}$ of the movement velocity of the UE is a known quantity.

It should be noted that, the equation (1) is used to cancel a frequency error when the TRP 1 sends the first reference signal, and is also used to cancel a frequency error when the TRP 2 sends the second reference signal. In other words, the equation (1) can be used to reduce impact of an error of the actual frequency $F'_{TRP1,TX}$ at which the TRP 1 sends the first reference signal and reduce impact of an error of the actual frequency $F'_{TRP2,TX}$ at which the TRP 2 sends the second reference signal. Similarly, the equation (2) is used to cancel a frequency error when the TRP 3 sends the third reference signal, and is also used to cancel the frequency error when the TRP 2 sends the second reference signal. In other words, the equation (2) can be used to reduce impact of the error of the actual frequency

$F'_{TRP2,TX}$ at which the TRP 2 sends the second reference signal and reduce impact of an error of the actual frequency error $F'_{TRP3,TX}$ at which the TRP 3 sends the third reference signal.

In other words, when the LMF unit determines the coordinates (x, y) of the UE, the LMF unit may learn the coordinates $(x_1, y_1)$ of the TRP 1, the coordinates $(x_2, y_2)$ of the TRP 2, and the coordinates $(x_3, y_3)$ of the TRP 3, that is, there are two unknown quantities x and y in the foregoing two equations. Therefore, the coordinates (x, y) of the UE can be obtained through solution.

It should be noted that, in a process in which the LMF unit obtains the coordinates (x, y) of the UE through calculation, the LMF unit obtains $FDOA_{UE\_12}$, $FDOA_{UE\_32}$, v, and $\phi_{UE}$ from the terminal device, the LMF unit obtains $F_{TRP\_21}$ and $F_{TRP\_23}$ from the second access network device, and the LMF unit can obtain $\lambda_1$, $\lambda_2$, and $\lambda_3$, and can also obtain the coordinates $(x_1, y_1)$ of the TRP 1, the coordinates $(x_2, y_2)$ of the TRP 2, and the coordinates $(x_3, y_3)$ of the TRP 3. The coordinates (x, y) of the UE can be determined based on these known quantities. The foregoing equation (1) and equation (2) are derivation principles. In an actual operation process, the LMF unit may not need to obtain intermediate parameters of the derivation equation (1) and the equation (2). For example, the LMF unit may not need to learn $F'_{TRP1,TX}$, $F'_{TRP2,TX}$, $F'_{TRP3,TX}$, $F_{d1}$, $F_{d2}$, $F_{d3}$, and $F_{UE}$.

It should also be noted that in FIG. 5, the coordinates $(x_1, y_1)$ of the TRP 1, the coordinates $(x_2, y_2)$ of the TRP 2, and the coordinates $(x_3, y_3)$ of the TRP 3 may be coordinates based on the world coordinate system, or the coordinates (x, y) of the UE may be coordinates based on the world coordinate system.

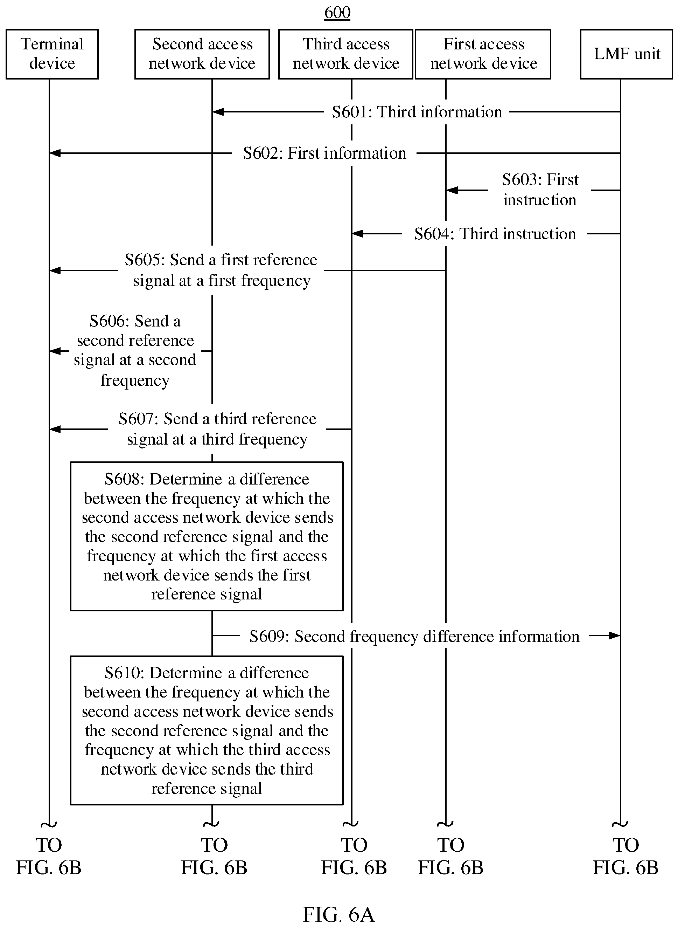

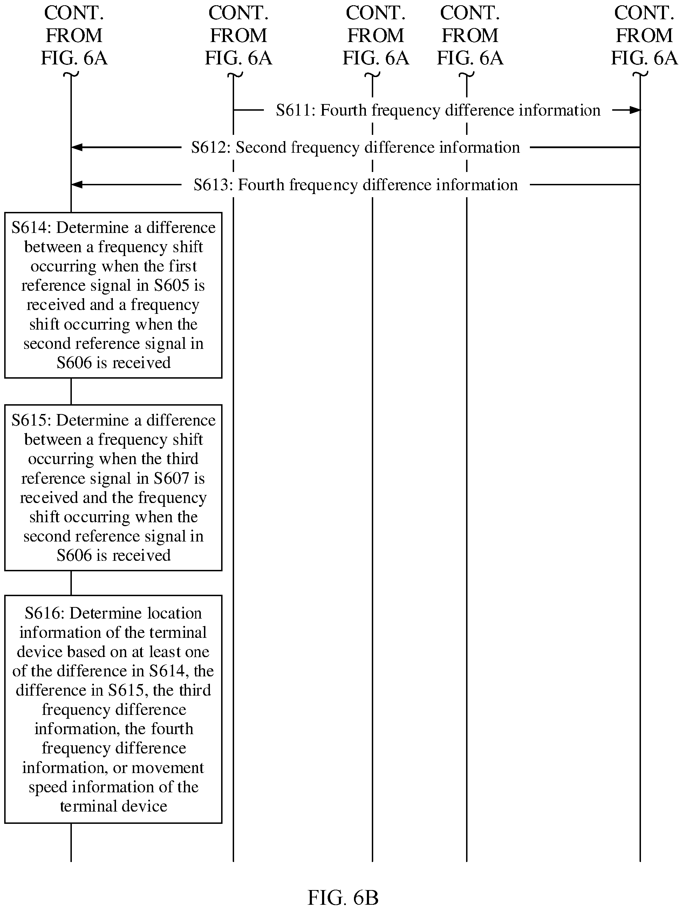

In the information processing method described in the method 400, the LMF unit determines the location information of the terminal device. For example, in the method 400, the LMF unit needs to obtain a location of the terminal device, and the LMF unit can determine the location information of the terminal device. In some scenarios, the terminal device may alternatively determine the location information of the terminal device. For example, in a scenario in which a user needs to perform navigation by using the terminal device, the terminal device can determine the location information of the terminal device. The following describes, with reference to an information processing method 600 in FIG. 6A and FIG. 6B, that the terminal device determines the location information of the terminal device. As shown in FIG. 6A and FIG. 6B, the method 600 includes the following steps.

S601: is the same as S401.

S602: The LMF unit sends first information to the terminal device, and the terminal device receives the first information from the LMF unit.

Optionally, the first information indicates the terminal device to measure the location information of the terminal device.

Optionally, the first information includes auxiliary measurement information, and the auxiliary measurement information includes at least one of an identifier of a first access network device, an identifier of a second access network device, an identifier of a third access network device, or configuration information of a reference signal. The configuration information of the reference signal indicates a first frequency at which the first access network device sends a first reference signal, a second frequency at which the second access network device sends a second reference signal, a third frequency at which the third access network device sends a third reference signal, fourth time information when the first access network device sends the first reference signal, second time information when the second access network device sends the second reference signal, or fifth time information when the third access network device sends the third reference signal.

Optionally, the auxiliary measurement information may further indicate at least one of coordinates of the first access network device, coordinates of the second access network device, or coordinates of the third access network device.

Optionally, the LMF unit may actively trigger performing of S602, or the terminal device may send a location request message to the LMF unit, and after receiving the location request message, the LMF unit triggers performing of S602.

It may be understood that there is no limitation on a sequence of S601 and S602, and S601 may be performed before or after S602, or S601 and S602 are simultaneously performed.

S603 to S611: are respectively the same as S403 to S411.

S612: The LMF unit sends second frequency difference information to the terminal device.

S609 may trigger performing of S612. To be specific, the LMF unit may forward the second frequency difference information to the terminal device after the LMF unit receives the second frequency difference information.

S613: The LMF unit sends fourth frequency difference information to the terminal device.

S611 may trigger performing of S613. To be specific, the LMF unit may forward the fourth frequency difference information to the terminal device after the LMF unit receives the fourth frequency difference information.

It may be understood that the LMF unit may simultaneously perform S612 and S613, or may separately perform S612 and S613.

S614: is the same as S412.

First frequency difference information may indicate a difference between a frequency shift occurring when the terminal device receives the first reference signal in S605 and a frequency shift occurring when the terminal device receives the second reference signal in S606.

S615: is the same as S413.

Third frequency difference information may indicate a difference between a frequency shift occurring when the terminal device receives the third reference signal in S607 and the frequency shift occurring when the terminal device receives the second reference signal in S606.

S616: The terminal device determines the location information of the terminal device based on at least one of the difference in S614, the difference in S615, the third frequency difference information, the fourth frequency difference information, or movement speed information of the terminal device.

The first frequency difference information may indicate the difference in S614, and the second frequency difference information may indicate the difference in S615.

Optionally, S616 includes: The terminal device may obtain the location information of the terminal device by performing a mathematical operation on the first frequency difference information, the second frequency difference information, the third frequency difference information, the fourth frequency difference information, and the movement speed information of the terminal device.

Optionally, S616 includes: The terminal device determines the location information of the terminal device based on at least one of the first frequency difference information, the second frequency difference information, the third frequency difference information, the fourth frequency difference information, the movement speed information of the terminal device, a wavelength at which the first access network device sends the first reference signal, a wavelength at which the second access network device sends the second reference signal, or a wavelength at which the third access network device sends the third reference signal.

Optionally, the wavelength at which the first access network device sends the first reference signal is related to the first frequency. For example, the wavelength at which the first access network device sends the first reference signal is equal to a speed of light divided by the first frequency. In other words, the first frequency may be configured based on the auxiliary measurement information in S602. Therefore, the terminal device can determine, based on the speed of light and the first frequency, the wavelength at which the first access network device sends the first reference signal.

Optionally, the wavelength at which the second access network device sends the second reference signal is related to the second frequency. For example, the wavelength at which the second access network device sends the second reference signal is equal to the speed of light divided by the second frequency. In other words, the second frequency may be configured based on the auxiliary measurement information in S602. Therefore, the terminal device can determine, based on the speed of light and the second frequency, the wavelength at which the second access network device sends the second reference signal.

Optionally, the wavelength at which the third access network device sends the third reference signal is related to the third frequency. For example, the wavelength at which the third access network device sends the third reference signal is equal to the speed of light divided by the third frequency. In other words, the third frequency may be configured based on the auxiliary measurement information in S602. Therefore, the terminal device can determine, based on the speed of light and the third frequency, the wavelength at which the third access network device sends the third reference signal.

Optionally, that the terminal device determines the location information of the terminal device based on at least one of the first frequency difference information, the second frequency difference information, the third frequency difference information, the fourth frequency difference information, the movement speed information of the terminal device, a wavelength at which the first access network device sends the first reference signal, a wavelength at which the second access network device sends the second reference signal, or a wavelength at which the third access network device sends the third reference signal includes: The terminal device determines the location information of the terminal device based on at least one of the first frequency difference information, the second frequency difference information, the third frequency difference information, the fourth frequency difference information, the movement speed information of the terminal device, the wavelength at which the first access network device sends the first reference signal, the wavelength at which the second access network device sends the second reference signal, the wavelength at which the third access network device sends the third reference signal, coordinates of the first access network device, coordinates of the second access network device, or coordinates of the third access network device.

Optionally, the terminal device may determine the coordinates of the first access network device, the coordinates of the second access network device, or the coordinates of the third access network device based on the auxiliary measurement information in S602.

Optionally, S616 includes: The terminal device determines the location information of the terminal device based on at least one of the first frequency difference information, the second frequency difference information, the third frequency difference information, the fourth frequency difference information, the movement speed information of the terminal device, the first frequency, the second frequency, or the third frequency. The first frequency is related to the wavelength at which the first access network device sends the first reference signal, the second frequency is related to the wavelength at which the second access network device sends the second reference signal, and the third frequency is related to the wavelength at which the third access network device sends the third reference signal.

Optionally, that the terminal device determines the location information of the terminal device based on at least one of the first frequency difference information, the second frequency difference information, the third frequency difference information, the fourth frequency difference information, the movement speed information of the terminal device, the first frequency, the second frequency, or the third frequency includes: The terminal device determines the location information of the terminal device based on at least one of the first frequency difference information, the second frequency difference information, the third frequency difference information, the fourth frequency difference information, the movement speed information of the terminal device, the first frequency, the second frequency, the third frequency, the coordinates of the first access network device, the coordinates of the second access network device, or the coordinates of the third access network device.

Optionally, the location information of the terminal device indicates coordinates of the terminal device.

It should be noted that, in the method 400 and the method 600, the first frequency difference information indicates a difference between a frequency at which the terminal device receives the first reference signal sent by the first access network device and a frequency at which the terminal device receives the second reference signal sent by the second access network device; the second frequency difference information indicates a difference between a frequency at which the second access network device sends the second reference signal and a frequency at which the first access network device sends the first reference signal; the third frequency difference information indicates a difference between a frequency shift occurring when the terminal device receives the third reference signal sent by the third access network device and a frequency shift occurring when the terminal device receives the second reference signal sent by the second access network device; and the fourth frequency difference information indicates a difference between the frequency at which the second access network device sends the second reference signal and a frequency at which the third access network device sends the third reference signal. Alternatively, the first frequency difference information indicates a difference between a frequency at which the terminal device receives the second reference signal sent by the second access network device and a frequency at which the terminal device receives the first reference signal sent by the first access network device; the second frequency difference information indicates a difference between a frequency at which the first access network device sends the first reference signal and a frequency at which the second access network device sends the second reference signal; the third frequency difference information indicates a difference between a frequency shift occurring when the terminal device receives the second reference signal sent by the second access network device and a frequency shift occurring when the terminal device receives the third reference signal sent by the third access network device; and the fourth frequency difference information indicates a difference between a frequency at which the third access network device sends the third reference signal and the frequency at which the second access network device sends the second reference signal. A specific calculation principle is similar to the foregoing method. To avoid repetition, no detailed description is provided.

It may be understood that, in the method 600, for ease of description, S608 and S610 are performed by the second access network device. Optionally, S608 and/or S610 may be performed by another access network device different from the second access network device. For example, the first access network device may perform S608, and send the second frequency difference information to the LMF unit to indicate the difference determined in S608. For another example, the third access network device may perform S610, and send the fourth frequency difference information to the LMF unit to indicate the difference determined in S610.

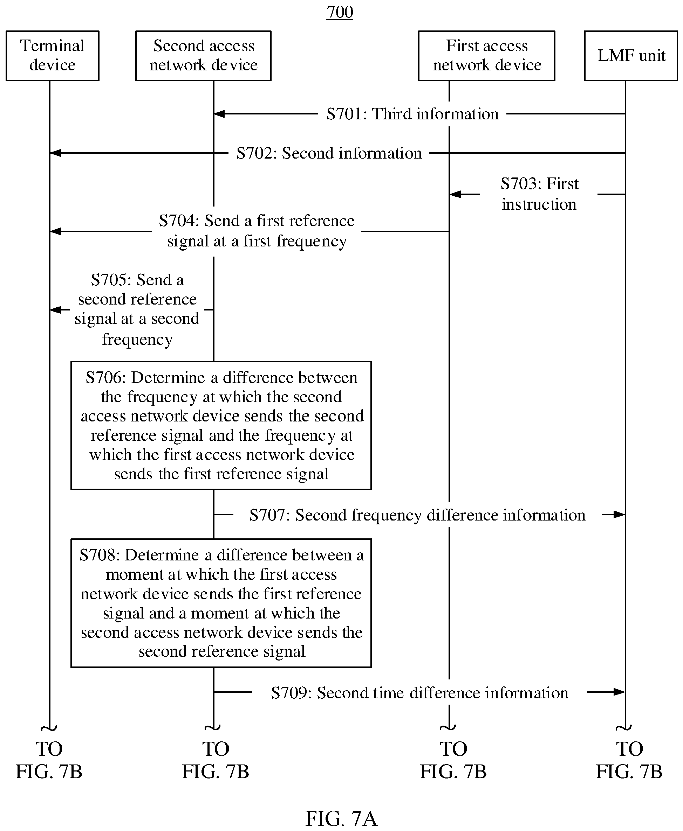

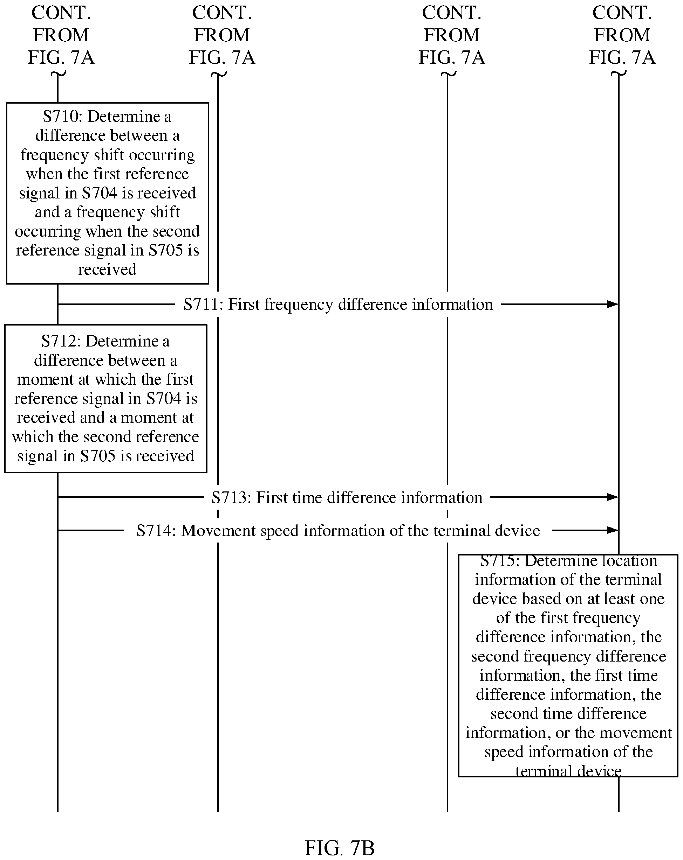

In the method 600, a principle of determining the location information of the terminal device by the terminal device is similar to a principle of determining the location information of the terminal device by the LMF unit in FIG. 5. To avoid repetition, the method 600 is not described by using an example. In the embodiments in FIG. 4A and FIG. 4B to FIG. 6A and FIG. 6B, three access network devices are needed. In some embodiments, there may be only two access network devices. The following describes, with reference to the method 700, an information processing method 700 in a scenario in which there are two access network devices. In the information processing method 700, an LMF unit determines location information of a terminal device. As shown in FIG. 7A and FIG. 7B, the method 700 includes the following steps.

S701: The LMF unit sends third information to a second access network device, and the second access network device receives the third information from the LMF unit.

Optionally, the LMF unit may be another core network device.

Optionally, the third information is used to request frequency difference information from the second access network device.

Optionally, the third information is further used to request time difference information from the second access network device.

Optionally, the third information may include to-be-measured configuration information of a first access network device.

Optionally, the configuration information of the first access network device is used to configure an identifier of the first access network device and/or first time information for frequency difference information measurement. Optionally, the first time information indicates start time and/or a measurement period of measurement by the second access network device. The second access network device may measure, at the start time indicated by the first time information, a difference between a frequency at which the second access network device sends a second reference signal and a frequency at which the first access network device sends a first reference signal; and/or the second access network device may measure, based on the measurement period indicated by the first time information, a difference between a frequency at which the second access network device sends a second reference signal and a frequency at which the first access network device sends a first reference signal.

Optionally, the third information includes a second instruction, and the second instruction instructs the second access network device to send the second reference signal at a second frequency. Optionally, the second instruction may further instruct the second access network device to send second time information of the second reference signal. Optionally, the second time information indicates start time and/or a sending period at which the second access network device sends the second reference signal.

It may be understood that the third information may not include the second instruction, and the second access network device periodically sends the second reference signal at the second frequency.

Optionally, the second access network device may be an access network device serving the terminal device.

Optionally, the LMF unit may actively trigger performing of S701, or the terminal device may send a location request message to the LMF unit, and after receiving the location request message, the LMF unit triggers performing of S701.

It should be noted that S701 is optional, that is, the method 700 may not include S701. The second access network device may actively report frequency difference information, for example, actively report the following second frequency difference information.

S702: The LMF unit sends second information to the terminal device, and the terminal device receives the second information.

Optionally, the second information indicates to the terminal device that the LMF unit needs to measure the location information of the terminal device.

Optionally, the second information is used to request the frequency difference information and/or the time difference information from the terminal device. In other words, the LMF unit may directly indicate to the terminal device that the LMF unit needs to measure the location information of the terminal device, and the terminal device reports first frequency difference information and/or first time difference information to the LMF unit based on the second information; or the LMF requests the frequency difference information and/or the time difference information from the terminal device, and the terminal device sends first frequency difference information and/or first time difference information to the LMF unit based on the request of the second information.

Optionally, the second information includes auxiliary measurement information, and the auxiliary measurement information includes at least one of the identifier of the first access network device, an identifier of the second access network device, or configuration information of a reference signal. The configuration information of the reference signal indicates at least one of a first frequency at which the first access network device sends the first reference signal, a second frequency at which the second access network device sends the second reference signal, fourth time information when the first access network device sends the first reference signal, or second time information when the second access network device sends the second reference signal.

Optionally, the LMF unit may actively trigger performing of S702, or the terminal device may send a location request message to the LMF unit, and after receiving the location request message, the LMF unit triggers performing of S702.

It may be understood that there is no limitation on a sequence of S701 and S702, and S701 may be performed before or after S702, or S701 and S702 are simultaneously performed.

S703: is the same as S403.

S704: is the same as S405.

S705: is the same as S406.

S706: is the same as S408.

S707: is the same as S409.

S708: The second access network device determines a difference between a moment at which the first access network device sends the first reference signal and a moment at which the second access network device sends the second reference signal.

Optionally, the second access network device determines the moment at which the first access network device sends the first reference signal, and then the second access network device determines the difference between the moment at which the second access network device sends the second reference signal and the moment at which the first access network device sends the first reference signal. Optionally, that the second access network device determines a moment at which the first access network device sends the first reference signal includes: The second access network device may perform a correlation operation based on a local first reference signal sequence and a received reference signal sequence, to determine the moment at which the first reference signal is received. The second access network device determines transmission time of the first reference signal based on a distance from the first access network device to the second access network device and a transmission speed of the first reference signal, and determines, based on the moment at which the first reference signal is received and the transmission time of the first reference signal, the moment at which the first access network device sends the first reference signal.

It may be understood that S708 is optional, and a protocol may specify that the moment at which the second access network device sends the second reference signal is the same as the moment at which the first access network device sends the first reference signal.

Optionally, when the moment at which the second access network device sends the second reference signal is the same as the moment at which the first access network device sends the first reference signal, the second access network device determines that the difference between the moment at which the second access network device sends the second reference signal and the moment at which the first access network device sends the first reference signal is zero.

S709: The second access network device sends second time difference information to the LMF unit. The second time difference information indicates a difference between the moment at which the first access network device sends the first reference signal and the moment at which the second access network device sends the second reference signal.

It may be understood that S709 is also optional. When S708 does not exist, S709 does not exist either.

Optionally, when S709 exists, S707 and S709 may be simultaneously performed, or may be sequentially performed. This is not limited in this embodiment of this application.

S710: is the same as S412.

S711: is the same as S413.

S712: The terminal device determines a difference between a moment at which the terminal device receives the first reference signal in S704 and a moment at which the terminal device receives the second reference signal in S705.

Specifically, the terminal device may record a moment at which the first reference signal is received, record a moment at which the second reference signal is received, and calculate a difference between the recorded two moments to obtain the difference between the moment at which the terminal device receives the first reference signal in S704 and the moment at which the terminal device receives the second reference signal in S705.

Because a distance from the first access network device to the terminal device is different from a distance from the second access network device to the terminal device, duration for transmitting the first reference signal is different from duration for transmitting the second reference signal. Therefore, the difference between the moment at which the terminal device receives the first reference signal in S704 and the moment at which the terminal device receives the second reference signal in S705 may represent a difference between the distance from the first access network device to the terminal device and the distance from the second access network device to the terminal device.

It should be noted that, S712 is performed after S704 and S705, and a sequence of S712 and other steps is not limited.

S713: The terminal device sends the first time difference information to the LMF unit, and the LMF unit receives the first time difference information from the terminal device. The first time difference information indicates a difference between a moment at which the terminal device receives the first reference signal in S704 and a moment at which the terminal device receives the second reference signal in S705.

S714: The terminal device sends movement speed information of the terminal device to the LMF unit.

Optionally, the movement speed information of the terminal device indicates a magnitude of a movement velocity and/or a direction of the movement velocity of the terminal device.

Optionally, the terminal device may simultaneously perform S711, S713, and S714, or may separately perform S711, S713, and S714.

Optionally, in response to the second information in S702, the terminal device may send the first frequency difference information, the first time difference information, and the movement speed information of the terminal device to the LMF unit.

S715: The LMF unit determines the location information of the terminal device based on at least one of the first frequency difference information, the second frequency difference information, the first time difference information, the second time difference information, or the movement speed information of the terminal device.

Optionally, when the second access network device does not report the second time difference information, the LMF unit may not need the second time difference information in a process of determining the location information of the terminal device.

Optionally, S715 includes: The LMF unit may obtain the location information of the terminal device by performing a mathematical operation on the first frequency difference information, the second frequency difference information, the first time difference information, the second time difference information, and the movement speed information of the terminal device.

Optionally, S715 includes: The LMF unit determines the location information of the terminal device based on at least one of the first frequency difference information, the second frequency difference information, the first time difference information, the second time difference information, the movement speed information of the terminal device, a wavelength at which the first access network device sends the first reference signal, or a wavelength at which the second access network device sends the second reference signal.

Optionally, the wavelength at which the first access network device sends the first reference signal is related to the first frequency. For example, the wavelength at which the first access network device sends the first reference signal is equal to a speed of light divided by the first frequency. In other words, the first frequency is configured by the LMF unit. Therefore, the LMF unit can determine, based on the speed of light and the first frequency, the wavelength at which the first access network device sends the first reference signal.

Optionally, the wavelength at which the second access network device sends the second reference signal is related to the second frequency. For example, the wavelength at which the second access network device sends the second reference signal is equal to the speed of light divided by the second frequency. In other words, the second frequency is configured by the LMF unit. Therefore, the LMF unit can determine, based on the speed of light and the second frequency, the wavelength at which the second access network device sends the second reference signal.

Optionally, that the LMF unit determines the location information of the terminal device based on at least one of the first frequency difference information, the second frequency difference information, the first time difference information, the second time difference information, the movement speed information of the terminal device, a wavelength at which the first access network device sends the first reference signal, or a wavelength at which the second access network device sends the second reference signal includes: The LMF unit determines the location information of the terminal device based on at least one of the first frequency difference information, the second frequency difference information, the first time difference information, the second time difference information, the movement speed information of the terminal device, the wavelength at which the first access network device sends the first reference signal, the wavelength at which the second access network device sends the second reference signal, coordinates of the first access network device, or coordinates of the second access network device.

Optionally, the LMF unit may learn in advance the coordinates of the first access network device or the coordinates of the second access network device. For example, the first access network device may report the coordinates of the first access network device to the LMF unit. For another example, the second access network device may report the coordinates of the second access network device to the LMF unit.

Optionally, S715 includes: The LMF unit determines the location information of the terminal device based on at least one of the first frequency difference information, the second frequency difference information, the first time difference information, the second time difference information, the movement speed information of the terminal device, the first frequency, or the second frequency.

Optionally, that the LMF unit determines the location information of the terminal device based on at least one of the first frequency difference information, the second frequency difference information, the first time difference information, the second time difference information, the movement speed information of the terminal device, the first frequency, or the second frequency includes: The LMF unit determines the location information of the terminal device based on at least one of the first frequency difference information, the second frequency difference information, the first time difference information, the second time difference information, the movement speed information of the terminal device, the first frequency, the second frequency, the coordinates of the first access network device, or the coordinates of the second access network device.

Optionally, the location information of the terminal device indicates coordinates of the terminal device.

It may be understood that, in the method 700, for ease of description, S706 and S708 are performed by the second access network device. Optionally, S706 and/or S708 may be performed by the first access network device different from the second access network device. For example, the first access network device may perform S706, and send the second frequency difference information to the LMF unit to indicate the difference determined in S706. For another example, the first access network device may perform S708, and send the second time difference information to the LMF unit to indicate the difference determined in S708.

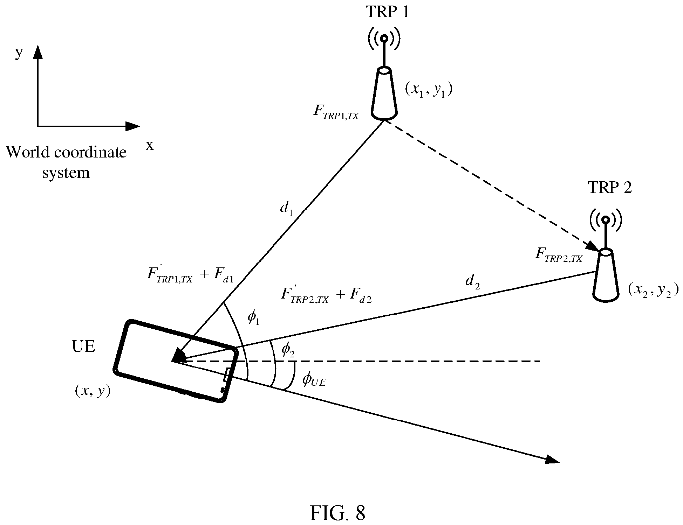

To better describe the method 700, the following provides an example for description with reference to FIG. 8. The terminal device in the method 700 may be UE shown in FIG. 8. The first access network device in the method 700 is a TRP 1 shown in FIG. 8. The first frequency in the method 700 is $F_{TRP1,TX}$ shown in FIG. 8. The second access network device in the method 700 is a TRP 2 shown in FIG. 8. The second frequency in the method 400 is $F_{TRP2,TX}$ shown in FIG. 8.

(a) The TRP 1 sends a first reference signal at $F_{TRP1,TX}$ (corresponding to S704, that is, $F_{TRP1,TX}$ is a theoretical frequency), and the TRP 2 sends a second reference signal at $F_{TRP2,TX}$ (corresponding to S705, that is, $F_{TRP2,TX}$ is a theoretical frequency).

The LMF unit configures the first access network device to send the first reference signal at $F_{TRP1,TX}$, and the second access network device to send the second reference signal at $F_{TRP1,TX}$. However, due to a limitation of a hardware condition of the first access network device or the second access network device, an actual frequency at which the first access network device sends the first reference signal may not be $F_{TRP1,TX}$, but $F'_{TRP1,TX}$, and an actual frequency at which the second access network device sends the second reference signal may not be $F_{TRP2,TX}$, but $F'_{TRP2,TX}$. However, $F'_{TRP1,TX}$ and $F'_{TRP2,TX}$ are unknown quantities that cannot be measured.

(b) The TRP 2 determines $F_{TRP\_21} = F'_{TRP2,TX} - F'_{TRP1,TX}$ (corresponding to S706).

The TRP 2 may determine $F_{TRP\_21}$ via a frequency mixer, that is, the TRP 2 may not determine $F'_{TRP1,TX}$ and $F'_{TRP2,TX}$, but may directly determine a difference of $F'_{TRP2,TX} - F'_{TRP1,TX}$.

(c) The TRP 2 determines a difference $\Delta T^t_{12}$ between a moment at which the TRP 1 sends the first reference signal and a moment at which the TRP 2 sends the second reference signal.

(d) The TRP 2 sends second frequency difference information (corresponding to S707) and second time difference information (corresponding to S709) to the LMF unit. The second frequency difference information indicates $F_{TRP\_21}$, and the second time difference information indicates $\Delta T^t_{12}$.

(e) A frequency shift that is of the received first reference signal and that is measured by the UE is $F_1$. $F_1$ is related to an actual frequency $F'_{TRP1,TX}$ of the first reference signal sent by the TRP 1, an actual Doppler frequency shift $F_{d1}$ of the first reference signal, and a clock frequency $F_{UE}$ of the UE, for example, $F_1 = F'_{TRP1,TX} + F_{d1} - F_{UE}$. In other words, the UE can obtain $F_1$ through measurement, but may not need to measure $F'_{TRP1,TX}$, $F_{d1}$, and $F_{UE}$ associated with $F_1$. $F_1$ may also be referred to as a measured Doppler frequency shift of the received first reference signal. In other words, because the clock frequency $F_{UE}$ of the UE is different from the actual frequency $F'_{TRP1,TX}$ at which the TRP 1 sends the first reference signal, the Doppler frequency shift $F_1$ of the first reference signal obtained through measurement is different from the actual Doppler frequency shift $F_{d1}$ of the first reference signal. If the clock frequency $F_{UE}$ of the UE is equal to the actual frequency $F'_{TRP1,TX}$ at which the TRP 1 sends the first reference signal, the Doppler frequency shift $F_1$ of the first reference signal obtained by the UE through measurement is equal to the actual Doppler frequency shift $F_{d1}$ of the first reference signal. A frequency shift that is of the received second reference signal and that is measured by the UE is $F_2$. $F_2$ is related to an actual frequency $F'_{TRP2,TX}$ at which the TRP 2 sends the second reference signal, an actual Doppler frequency shift $F_{d2}$ of the second reference signal, and the clock frequency $F_{UE}$ of the UE, for example, $F_2 = F'_{TRP2,TX} + F_{d2} - F_{UE}$. In other words, the UE can obtain $F_2$ through measurement, but may not need to measure $F'_{TRP2,TX}$, $F_{d2}$, and $F_{UE}$ associated with $F_2$. $F_2$ may also be referred to as a measured Doppler frequency shift of the received second reference signal. In other words, because the clock frequency $F_{UE}$ of the UE is different from the actual frequency $F'_{TRP2,TX}$ at which the TRP 2 sends the second reference signal, the Doppler frequency shift $F_2$ of the second reference signal obtained through measurement is different from the actual Doppler frequency shift $F_{d2}$ of the second reference signal. If the clock frequency $F_{UE}$ of the UE is equal to the actual frequency $F'_{TRP2,TX}$ at which the TRP 2 sends the second reference signal, the Doppler frequency shift $F_2$ of the second reference signal obtained by the UE through measurement is equal to the actual Doppler frequency shift $F_{d2}$ of the second reference signal. Therefore, a difference between the frequency shift that is of the received first reference signal and that is measured by the UE and the frequency shift that is of the received second reference signal and that is measured by the UE is

$$FDOA_{UE\_12} = F_1 - F_2 = (F'_{TRP1,TX} + F_{d1} - F_{UE}) - (F'_{TRP2,TX} + F_{d2} - F_{UE}) = F_{d1} - F_{d2} + F'_{TRP1,TX} - F'_{TRP2,TX}$$

. In other words, an error of the clock frequency $F_{UE}$ of the UE can be cancelled by using the difference between the frequency shifts of the two reference signals obtained by the UE through measurement. In this way, impact of the error of the clock frequency $F_{UE}$ of the UE can be reduced. First frequency difference information sent by the UE to the LMF unit may indicate $FDOA_{UE\_12}$. Certainly, the UE may directly send $F_1$ and $F_2$ to the LMF unit. In this way, the LMF unit can determine $FDOA_{UE\_12}$. $FDOA_{UE\_12}$ may also be referred to as an FDOA between the first reference signal and the second reference signal.

(f) A moment at which the UE receives the first reference signal is $T_1$, a moment at which the UE receives the second reference signal is $T_2$, and a difference between the moment at which the UE receives the first reference signal and the moment at which the UE receives the second reference signal is $\Delta T^r_{12} = T_1 - T_2$ . First time difference information sent by the UE to the LMF unit may indicate $\Delta T^r_{12}$ . Certainly, the UE may directly send $T_1$ and $T_2$ to the LMF unit. In this way, the LMF unit can determine $\Delta T^r_{12}$ .

(g) The UE sends movement speed information of the UE to the LMF unit (corresponding to S714). The movement speed information of the UE indicates a magnitude $v$ of a movement velocity of the UE and a direction $\phi_{UE}$ of the movement velocity of the UE.

(h) The LMF unit establishes an FDOA-based equation (3) and a time difference of arrival (time difference of arrival, TDOA)-based equation (4):

$$FDOA_{UE\_12} + F_{TRP\_21} = F_{d1} - F_{d2} + F'_{TRP1,TX} - F'_{TRP2,TX} + F'_{TRP2,TX} - F'_{TRP1,TX}$$

$$= F_{d1} - F_{d2} = \frac{v}{\lambda_1}\cos\phi_1 - \frac{v}{\lambda_2}\cos\phi_2 \quad (3)$$

$$c\Delta T^r_{12} - c\Delta T^t_{12} = d_1 - d_2 = \sqrt{(x_1 - x)^2 + (y_1 - y)^2} - \sqrt{(x_2 - x)^2 + (y_2 - y)^2} \quad (4)$$

$d_1$ is a distance from the UE to the TRP 1, $d_2$ is a distance from the UE to the TRP 2, $\phi_1$ is an included angle between the movement direction of the UE and a connection line between the TRP 1 and the UE,

$$\phi_1 = \arctan\left(\frac{y_1 - y}{x_1 - x}\right) + \phi_{UE}$$

, $(x_1, y_1)$ is coordinates of the TRP 1, $(x_1, y_1)$ is a known quantity, $(x, y)$ is coordinates of the UE, and $(x, y)$ is an unknown quantity. $\phi_2$ is an included angle between the movement direction of the UE and a

$$\phi_2 = \arctan\left(\frac{y_2 - y}{x_2 - x}\right) + \phi_{UE}$$

connection line between the TRP 2 and the UE,                     , $(x_2, y_2)$ is coordinates of the TRP 2,

and $(x_2, y_2)$ is a known quantity. $\lambda_1$ is a wavelength of the first reference signal sent by the TRP 1, $\lambda_1 = c / F_{TRP1,TX}$, $\lambda_2$ is a wavelength of the second reference signal sent by the TRP 2, $\lambda_2 = c / F_{TRP2,TX}$, and $c$ is a speed of light. The magnitude $v$ of the movement velocity of the UE is a known quantity, and the direction $\phi_{UE}$ of the movement velocity of the UE is a known quantity.

It should be noted that, the equation (3) is used to cancel a frequency error when the TRP 3 sends the first reference signal, and is also used to cancel a frequency error when the TRP 2 sends the second reference signal. In other words, the equation (1) can be used to reduce impact of an error of the actual frequency $F'_{TRP1,TX}$ at which the TRP 1 sends the first reference signal and reduce impact of an error of the actual frequency $F'_{TRP2,TX}$ at which the TRP 2 sends the second reference signal.

In other words, when the LMF unit determines the coordinates $(x, y)$ of the UE, the LMF unit may learn the coordinates $(x_1, y_1)$ of the TRP 1 and the coordinates $(x_2, y_2)$ of the TRP 2, that is, there are two unknown quantities $x$ and $y$ in the foregoing two equations. Therefore, the coordinates $(x, y)$ of the UE can be obtained through solution.

It should be noted that, in a process in which the LMF unit obtains the coordinates $(x, y)$ of the UE through calculation, the LMF unit obtains $FDOA_{UE\_12}$, $\Delta T^r_{12}$, $v$, and $\phi_{UE}$ from the terminal device, the LMF unit obtains $F_{TRP\_21}$ and $\Delta T^t_{12}$ from the second access network device, and the LMF unit can obtain $\lambda_1$ and $\lambda_2$, and can also obtain the coordinates $(x_1, y_1)$ of the TRP 1 and the coordinates $(x_2, y_2)$ of the TRP 2. The coordinates $(x, y)$ of the UE can be determined based on these known quantities. The foregoing equation (3) and equation (4) are derivation principles. In an actual operation process, the LMF unit may not need to obtain intermediate parameters of the derivation equation (3) and the equation (4). For example, the LMF unit may not need to learn $F'_{TRP1,TX}$, $F'_{TRP2,TX}$, $F_{d1}$, $F_{d2}$, $d_1$, $d_2$, and $F_{UE}$.

It should also be noted that in FIG. 8, the coordinates $(x_1, y_1)$ of the TRP 1 and the coordinates $(x_2, y_2)$ of the TRP 2 may be coordinates based on the world coordinate system, or the coordinates $(x, y)$ of the UE may be coordinates based on the world coordinate system.

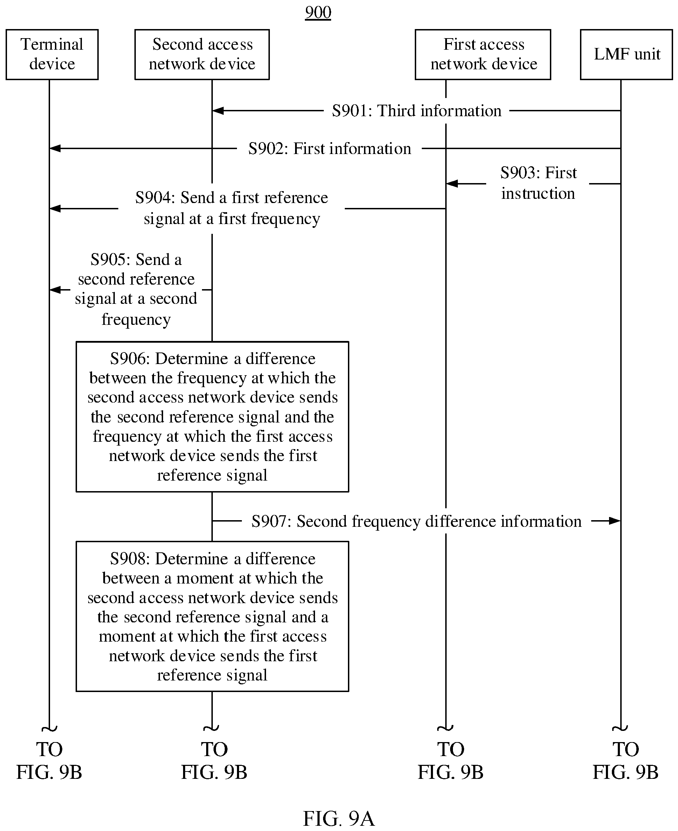

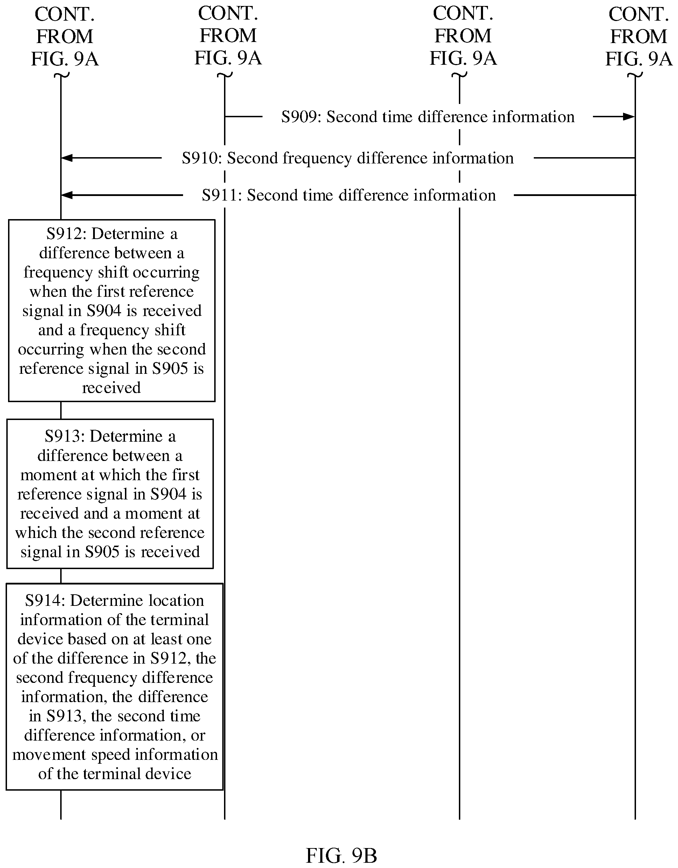

In the information processing method described in the foregoing method 700, the LMF unit determines the location information of the terminal device. In some scenarios, the terminal device may also determine the location information of the terminal device. For example, the following describes an information processing method 900 with reference to FIG. 9A and FIG. 9B. In the method 900, the terminal device determines the location information of the terminal device. As shown in FIG. 9A and FIG. 9B, the method 900 includes the following steps.

S901: is the same as S701.

S902: The LMF unit sends first information to the terminal device, and the terminal device receives the first information from the LMF unit.

Optionally, the first information indicates the terminal device to measure the location information of the terminal device.

Optionally, the first information includes auxiliary measurement information, and the auxiliary measurement information includes at least one of an identifier of a first access network device, an identifier of a second access network device, or configuration information of a reference signal. The configuration information of the reference signal indicates at least one of a first frequency at which the first access network device sends a first reference signal, a second frequency at which the second access network device sends a second reference signal, fourth time information when the first access network device sends the first reference signal, or second time information when the second access network device sends the second reference signal.

Optionally, the auxiliary measurement information may further indicate at least one of coordinates of the first access network device or coordinates of the second access network device.

Optionally, the LMF unit may actively trigger performing of S902 or trigger performing of S902 based on a user requirement.

It may be understood that there is no limitation on a sequence of S901 and S902, and S901 may be performed before or after S902, or S901 and S902 are simultaneously performed.

S903 to S909: are respectively the same as S703 to S709.

S910: The LMF unit sends second frequency difference information to the terminal device.

S907 may trigger performing of S910. To be specific, the LMF unit may forward the second frequency difference information to the terminal device after the LMF unit receives the second frequency difference information.

S911: The LMF unit sends second time difference information to the terminal device.

S909 may trigger performing of S911. To be specific, the LMF unit may forward the second time difference information to the terminal device after the LMF unit receives the second time difference information.

It may be understood that the LMF unit may simultaneously perform S912 and S913, or may separately perform S912 and S613.

S912: is the same as S710.

First frequency difference information may indicate a difference between a frequency shift occurring when the terminal device receives the first reference signal in S904 and a frequency shift occurring when the terminal device receives the second reference signal in S905.

S913: is the same as S712.

First time difference information may indicate a difference between a moment at which the terminal device receives the first reference signal in S904 and a moment at which the terminal device receives the second reference signal in S905.

S914: The terminal device determines the location information of the terminal device based on at least one of the difference in S912, the second frequency difference information, the difference in S913, the second time difference information, or movement speed information of the terminal device.

The first frequency difference information may indicate the difference in S912, and the first time difference information may indicate the difference in S913.

Optionally, when the second access network device does not report the second time difference information, steps S909 and S911 may not exist, and the terminal device may not need the second time difference information in a process of determining the location information of the terminal device.

Optionally, S914 includes: The terminal device may obtain the location information of the terminal device by performing a mathematical operation on the first frequency difference information, the second frequency difference information, the first time difference information, the second time difference information, and the movement speed information of the terminal device.

Optionally, S914 includes: The terminal device determines the location information of the terminal device based on at least one of the first frequency difference information, the second frequency difference information, the first time difference information, the second time difference information, the movement speed information of the terminal device, a wavelength at which the first access network device sends the first reference signal, or a wavelength at which the second access network device sends the second reference signal.

Optionally, the wavelength at which the first access network device sends the first reference signal is related to the first frequency. For example, the wavelength at which the first access network device sends the first reference signal is equal to a speed of light divided by the first frequency. In other words, the first frequency is configured by the LMF unit for the terminal device. Therefore, the terminal device can determine, based on the speed of light and the first frequency, the wavelength at which the first access network device sends the first reference signal.

Optionally, the wavelength at which the second access network device sends the second reference signal is related to the second frequency. For example, the wavelength at which the second access network device sends the second reference signal is equal to the speed of light divided by the second frequency. In other words, the second frequency is configured by the LMF unit for the terminal device. Therefore, the terminal device can determine, based on the speed of light and the second frequency, the wavelength at which the second access network device sends the second reference signal.

Optionally, that the terminal device determines the location information of the terminal device based on at least one of the first frequency difference information, the second frequency difference information, the first time difference information, the second time difference information, the movement speed information of the terminal device, a wavelength at which the first access network device sends the first reference signal, or a wavelength at which the second access network device sends the second reference signal includes: The terminal device determines the location information of the terminal device based on at least one of the first frequency difference information, the second frequency difference information, the first time difference information, the second time difference information, the movement speed information of the terminal device, the wavelength at which the first access network device sends the first reference signal, the wavelength at which the second access network device sends the second reference signal, coordinates of the first access network device, or coordinates of the second access network device.

Optionally, the terminal device may determine at least one of the coordinates of the first access network device or the coordinates of the second access network device based on the auxiliary measurement information in S902.

Optionally, S914 includes: The terminal device determines the location information of the terminal device based on at least one of the first frequency difference information, the second frequency difference information, the first time difference information, the second time difference information, the movement speed information of the terminal device, the first frequency, or the second frequency.

Optionally, that the terminal device determines the location information of the terminal device based on at least one of the first frequency difference information, the second frequency difference information, the first time difference information, the second time difference information, the movement speed information of the terminal device, the first frequency, or the second frequency includes: The terminal device determines the location information of the terminal device based on at least one of the first frequency difference information, the second frequency difference information, the first time difference information, the second time difference information, the movement speed information of the terminal device, the first frequency, the second frequency, the coordinates of the first access network device, or the coordinates of the second access network device.

Optionally, the location information of the terminal device indicates coordinates of the terminal device.

It may be understood that, in the method 900, for ease of description, S906 and S908 are performed by the second access network device. Optionally, S906 and/or S908 may be performed by the first access network device different from the second access network device. For example, the first access network device may perform S906, and send the second frequency difference information to the LMF unit to indicate the difference determined in S906. For another example, the first access network device may perform S908, and send the second time difference information to the LMF unit to indicate the difference determined in S908.

It should be noted that in the method 700 and the method 900, the first frequency difference information indicates a difference between a frequency at which the terminal device receives the first reference signal sent by the first access network device and a frequency at which the terminal device receives the second reference signal sent by the second access network device; the second frequency difference information indicates a difference between a frequency at which the second access network device sends the second reference signal and a frequency at which the first access network device sends the first reference signal; the first time difference information indicates a difference between a moment at which the terminal device receives the first reference signal sent by the first access network device and a moment at which the terminal device receives the second reference signal sent by the second access network device; and the second time difference information indicates a difference between a moment at which the first access network device sends the first reference signal and a moment at which the second access network device sends the second reference signal. Alternatively, the first frequency difference information indicates a difference between a frequency at which the terminal device receives the second reference signal sent by the second access network device and a frequency at which the terminal device receives the first reference signal sent by the first access network device; the second frequency difference information indicates a difference between a frequency at which the first access network device sends the first reference signal and a frequency at which the second access network device sends the second reference signal; the first time difference information indicates a difference between a moment at which the terminal device receives the second reference signal sent by the second access network device and a moment at which the terminal device receives the first reference signal sent by the first access network device; and the second time difference information indicates a difference between a moment at which the second access network device sends the second reference signal and a moment at which the first access network device sends the first reference signal. A specific calculation principle is similar to the foregoing method. To avoid repetition, no detailed description is provided.

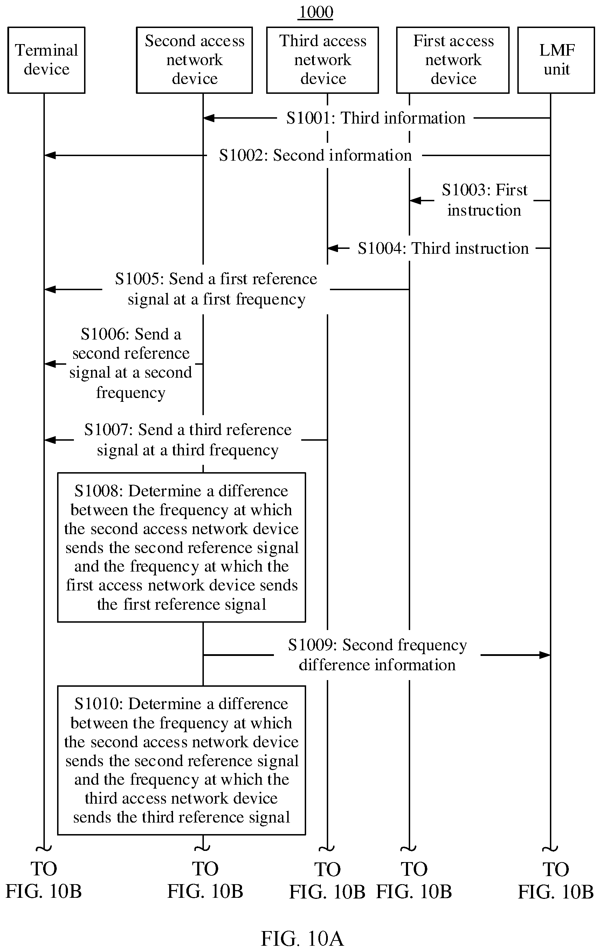

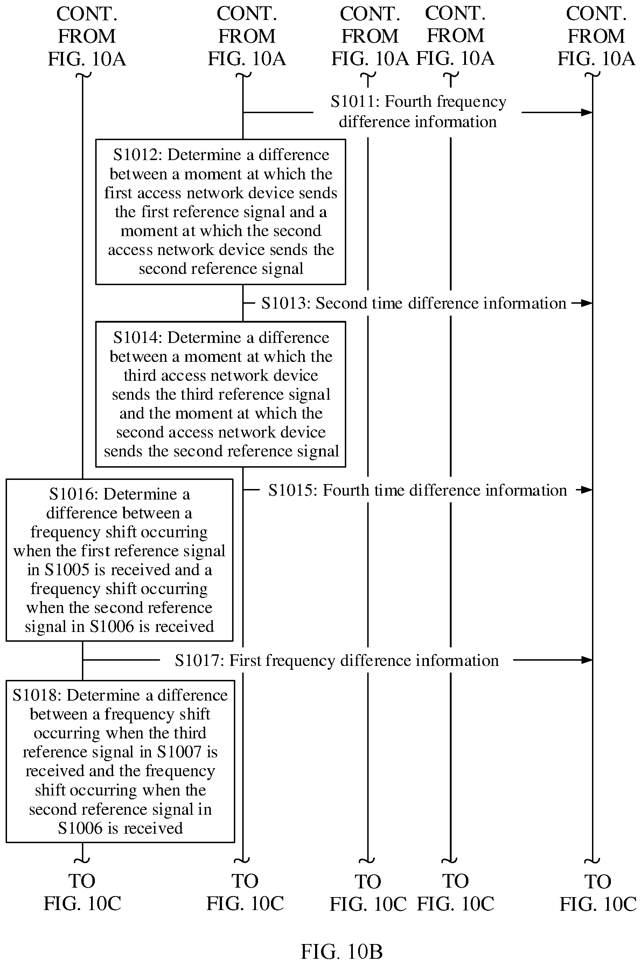

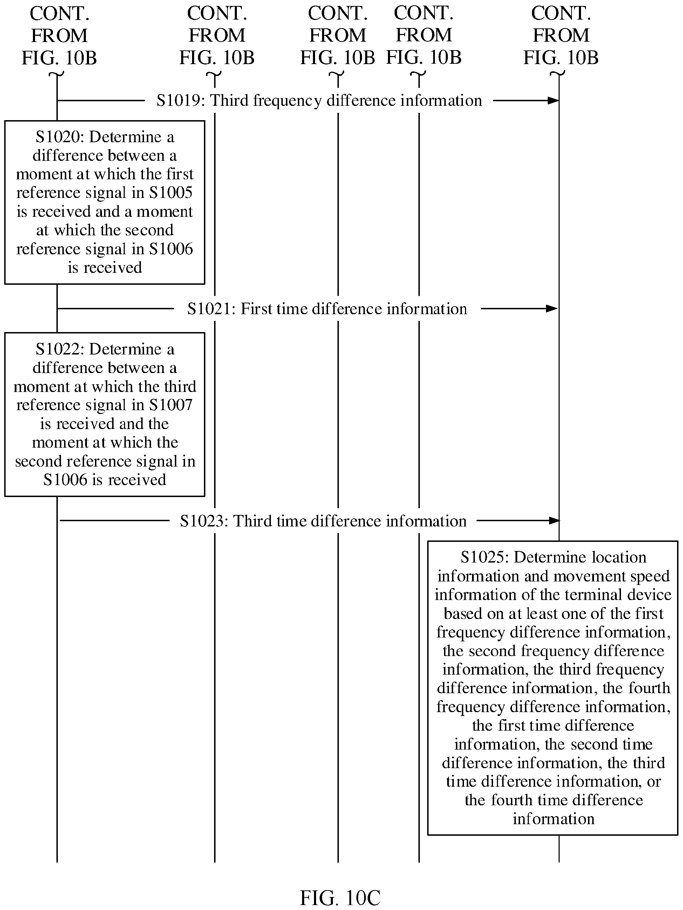

In the foregoing embodiments in FIG. 4A and FIG. 4B to FIG. 9A and FIG. 9B, in a process of determining the location information of the terminal device, the movement speed information of the terminal device may be considered as a known quantity, that is, the terminal device may obtain the movement speed information of the terminal device through measurement. In a process of determining the location information of the terminal device, the terminal device may determine the location information of the terminal device based on the movement speed information obtained through measurement. In a process in which the LMF unit determines the location information of the terminal device, the terminal device may send, to the LMF unit, the movement speed information that is of the terminal device and that is obtained through measurement, and the LMF unit determines the location information of the terminal device based on the movement speed information that is of the terminal device and that is sent by the terminal device. In some scenarios, due to a limitation of hardware of the terminal device, the terminal device cannot obtain the movement speed information of the terminal device through measurement. Therefore, the movement speed information of the terminal device is also an unknown quantity. The following describes an information processing method 1000 with reference to FIG. 10A to FIG. 10C. In the method 1000, a process in which an LMF unit determines location information and movement speed information of the terminal device is described. In the method 1000, descriptions are provided by using an example in which a first device is an LMF unit, a second device is a terminal device, a third device is a first access network device, a fourth device is a second access network device, and a fifth device is a third access network device. As shown in FIG. 10A to FIG. 10C, the method 1000 includes the following steps.

S1001: The LMF unit sends third information to the second access network device, and the second access network device receives the third information from the LMF unit.

Optionally, the LMF unit may be another core network device.

Optionally, the third information is used to request frequency difference information and time difference information from the second access network device.

Optionally, the third information may include configuration information of the first access network device and/or configuration information of the third access network device.

Optionally, the configuration information of the first access network device is used to configure an identifier of the first access network device and/or first time information for frequency difference information measurement. Optionally, the first time information indicates start time and/or a first measurement period of measurement by the second access network device. The second access network device may measure, at the start time indicated by the first time information, a difference between a frequency at which the second access network device sends a second reference signal and a frequency at which the first access network device sends a first reference signal; and/or the second access network device may measure, based on the measurement period indicated by the first time information, a difference between a frequency at which the second access network device sends a second reference signal and a frequency at which the first access network device sends a first reference signal.

Optionally, the configuration information of the third access network device is used to configure an identifier of the third access network device and/or third time information for frequency difference measurement. Optionally, the third time information indicates start time and/or a measurement period of measurement by the second access network device. The second access network device may measure, at the start time indicated by the third time information, a difference between the frequency at which the second access network device sends the second reference signal and a frequency at which the third access network device sends a third reference signal; and/or the second access network device may measure, in the measurement period indicated by the third time information, a difference between the frequency at which the second access network device sends the second reference signal and a frequency at which the third access network device sends a third reference signal.

Optionally, the third information includes a second instruction, and the second instruction instructs the second access network device to send the second reference signal at a second frequency. Optionally, the second instruction may further instruct the second access network device to send second time information of the second reference signal. Optionally, the second time information indicates start time and/or a sending period at which the second access network device sends the second reference signal.

It may be understood that the third information may not include the second instruction, and the second access network device periodically sends the second reference signal at the second frequency.

Optionally, the second access network device may be an access network device serving the terminal device.

Optionally, the LMF unit may actively trigger performing of S1001, or the terminal device may send a location request message to the LMF unit, and after receiving the location request message, the LMF unit triggers performing of S1001.

It should be noted that S1001 is optional, that is, the method 1000 may not include S1001. The second access network device may actively report the frequency difference information and the time difference information, for example, actively report the following second frequency difference information, fourth frequency difference information, second time difference information, and fourth time difference information.

S1002: is the same as S402.

It may be understood that there is no limitation on a sequence of S1001 and S1002, and S1001 may be performed before or after S1002, or S1001 and S1002 are simultaneously performed.

S1003 to S1011: are respectively the same as S403 to S411.

S1012 and S1013: are respectively the same as S708 and S709.

S1014: The second access network device determines a difference between a moment at which the third access network device sends the third reference signal and a moment at which the second access network device sends the second reference signal.

Optionally, the second access network device determines the moment at which the third access network device sends the third reference signal, and then determines the difference between the moment at which the third access network device sends the third reference signal and the moment at which the second access network device sends the second reference signal. Optionally, that the second access network device determines a moment at which the third access network device sends the third reference signal includes: The second access network device may perform a correlation operation based on a local third reference signal sequence and a received reference signal sequence, to determine the moment at which the third reference signal is received. The second access network device determines transmission time of the third reference signal based on a distance from the third access network device to the second access network device and a transmission speed of the third reference signal, and determines, based on the moment at which the third reference signal is received and the transmission time of the third reference signal, the moment at which the third access network device sends the third reference signal.

S1015: The second access network device sends the fourth time difference information to the LMF unit. The fourth time difference information indicates the difference between the moment at which the third access network device sends the third reference signal and the moment at which the second access network device sends the second reference signal.

It should be noted that the second access network device may simultaneously perform at least two of S1009, S1011, S1013, and S1015, or may separately perform S1009, S1011, S1013, and S1015.

Optionally, in response to the third information, the second access network device may perform at least two of S1009, S1011, S1013, and S1014. In other words, the second access network device may use a response message of the third information to carry at least two of the second frequency difference information, the fourth frequency difference information, the second time difference information, or the fourth time difference information.

S1016 to S1019: are respectively the same as S412 to S415.

S1020 and S1021: are respectively the same as S712 and S713.

S1022: The terminal device determines a difference between a moment at which the terminal device receives the third reference signal in S1007 and a moment at which the terminal device receives the second reference signal in S1006.

Specifically, the terminal device may record a moment at which the third reference signal is received, record a moment at which the second reference signal is received, and calculate a difference between the recorded two moments to obtain the difference between the moment at which the terminal device receives the third reference signal in S1007 and the moment at which the terminal device receives the second reference signal in S1006.

Because a distance from the third access network device to the terminal device is different from a distance from the second access network device to the terminal device, duration for transmitting the third reference signal is different from duration for transmitting the second reference signal. Therefore, the difference between the moment at which the terminal device receives the third reference signal in S1007 and the moment at which the terminal device receives the second reference signal in S1006 may represent a difference between the distance from the third access network device to the terminal device and the distance from the second access network device to the terminal device.

It should be noted that, S1022 is performed after S1006 and S1007, and a sequence of S1022 and other steps is not limited.

S1023: The terminal device sends third time difference information to the LMF unit, and the LMF unit receives the third time difference information from the terminal device. The third time difference information indicates the difference between the moment at which the terminal device receives the third reference signal in S1007 and the moment at which the terminal device receives the second reference signal in S1006.

It should be noted that the terminal device may simultaneously perform at least two of S1017, S1019, S1021, and S1023, or may separately perform S1017, S1019, S1021, and S1023.

Optionally, in response to second information, the second access network device may perform at least two of S1017, S1019, S1021, and S1023. In other words, the second access network device may use a response message of the second information to carry at least two of the first frequency difference information, the third frequency difference information, the first time difference information, or the third time difference information.

S1025: The LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, or the fourth time difference information.

Optionally, S1025 includes: The LMF unit may obtain the location information of the terminal device and the movement speed information of the terminal device by performing a mathematical operation on the first frequency difference information, the second frequency difference information, the third frequency difference information, the fourth frequency difference information, the first time difference information, the second time difference information, the third time difference information, or the fourth time difference information.

Optionally, S1025 includes: The LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, a wavelength at which the first access network device sends the first reference signal, a wavelength at which the second access network device sends the second reference signal, or a wavelength at which the third access network device sends the third reference signal.

Optionally, the wavelength at which the first access network device sends the first reference signal is related to the first frequency. For example, the wavelength at which the first access network device sends the first reference signal is equal to a speed of light divided by the first frequency. In other words, the first frequency is configured by the LMF unit. Therefore, the LMF unit can determine, based on the speed of light and the first frequency, the wavelength at which the first access network device sends the first reference signal.

Optionally, the wavelength at which the second access network device sends the second reference signal is related to the second frequency. For example, the wavelength at which the second access network device sends the second reference signal is equal to the speed of light divided by the second frequency. In other words, the second frequency is configured by the LMF unit. Therefore, the LMF unit can determine, based on the speed of light and the second frequency, the wavelength at which the second access network device sends the second reference signal.

Optionally, the wavelength at which the third access network device sends the third reference signal is related to the third frequency. For example, the wavelength at which the third access network device sends the third reference signal is equal to the speed of light divided by the third frequency. In other words, the third frequency is configured by the LMF unit. Therefore, the LMF unit can determine, based on the speed of light and the third frequency, the wavelength at which the third access network device sends the third reference signal.

Optionally, that the LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, a wavelength at which the first access network device sends the first reference signal, a wavelength at which the second access network device sends the second reference signal, or a wavelength at which the third access network device sends the third reference signal includes: The LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the wavelength at which the first access network device sends the first reference signal, the wavelength at which the second access network device sends the second reference signal, the wavelength at which the third access network device sends the third reference signal, coordinates of the first access network device, coordinates of the second access network device, or coordinates of the third access network device.

Optionally, the LMF unit may learn in advance the coordinates of the first access network device, the coordinates of the second access network device, or the coordinates of the third access network device. For example, the first access network device may report the coordinates of the first access network device to the LMF unit. For another example, the second access network device may report the coordinates of the second access network device to the LMF unit. For another example, the third access network device may report the coordinates of the third access network device to the LMF unit.

Optionally, S 1025 includes: The LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the first frequency, the second frequency, or the third frequency.

Optionally, that the LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the first frequency, the second frequency, or the third frequency includes: The LMF unit determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the first frequency, the second frequency, the third frequency, the coordinates of the first access network device, the coordinates of the second access network device, or the coordinates of the third access network device.

Optionally, the location information of the terminal device indicates coordinates of the terminal device.

Optionally, the movement speed information of the terminal device indicates a magnitude of a movement velocity and a direction of the movement velocity of the terminal device.

It may be understood that, in the method 1000, for ease of description, S1008, S1010, S1012, and S1014 are performed by the second access network device. Optionally, at least one of S1008, S1010, S1012, or S1014 may be performed by another access network device different from the second access network device. For example, the first access network device may perform S1008, and send the second frequency difference information to the LMF unit to indicate the difference determined in S1008; or the first access network device may perform S1012, and send the second time difference information to the LMF unit to indicate the difference determined in S1012. For another example, the third access network device may perform S1010, and send the fourth frequency difference information to the LMF unit to indicate the difference determined in S1010; or the third access network device may perform S1014, and send the fourth time difference information to the LMF unit to indicate the difference determined in S1014.

To better describe the method 1000, the following provides an example for description with reference to FIG. 5. The terminal device in the method 1000 may be the UE shown in FIG. 5. The first access network device in the method 1000 is the TRP 1 shown in FIG. 5. The first frequency in the method 1000 is $F_{TRP1,TX}$ shown in FIG. 5. The second access network device in the method 1000 is the TRP 2 shown in FIG. 5. The second frequency in the method 1000 is $F_{TRP2,TX}$ shown in FIG. 5. The third access network device in the method 1000 is the TRP 3 shown in FIG. 5. The third frequency in the method 1000 is $F_{TRP3,TX}$ shown in FIG. 5.

(a) The TRP 1 sends a first reference signal at $F_{TRP1,TX}$ (corresponding to S1005, that is, $F_{TRP1,TX}$ is a theoretical frequency), the TRP 2 sends a second reference signal at $F_{TRP2,TX}$ (corresponding to S1006, that is, $F_{TRP2,TX}$ is a theoretical frequency), and the TRP 3 sends a third reference signal at $F_{TRP3,TX}$ (corresponding to S1007, that is, $F_{TRP3,TX}$ is a theoretical frequency).

The LMF unit configures the first access network device to send the first reference signal at $F_{TRP1,TX}$, the second access network device to send the second reference signal at $F_{TRP1,TX}$, and the third access network device to send the third reference signal at $F_{TRP3,TX}$. However, due to a limitation of a hardware condition of the first access network device, the second access network device, or the third access network device, an actual frequency at which the first access network device sends the first reference signal may not be $F_{TRP1,TX}$, but $F^{'}_{TRP1,TX}$, an actual frequency at which the second access network device sends the second reference signal may not be $F_{TRP2,TX}$, but $F^{'}_{TRP2,TX}$, and an actual frequency at which the third access network device sends the third reference signal may not be $F_{TRP3,TX}$, but $F^{'}_{TRP3,TX}$. However, $F^{'}_{TRP1,TX}$, $F^{'}_{TRP2,TX}$, and $F^{'}_{TRP3,TX}$ are unknown quantities that cannot be measured.

(b) The TRP 2 determines $F_{TRP\_21} = F^{'}_{TRP2,TX} - F^{'}_{TRP1,TX}$ (corresponding to S1008).

The TRP 2 may determine $F_{TRP\_21}$ via a frequency mixer, that is, the TRP 2 may not determine $F^{'}_{TRP1,TX}$ and $F^{'}_{TRP2,TX}$, but may directly determine $F^{'}_{TRP2,TX} - F^{'}_{TRP1,TX}$.

(c) The TRP 2 determines $F_{TRP\_23} = F^{'}_{TRP2,TX} - F^{'}_{TRP3,TX}$ (corresponding to S1010).

The TRP 2 may determine $F_{TRP\_23}$ via a frequency mixer, that is, the TRP 2 may not determine $F^{'}_{TRP3,TX}$ and $F^{'}_{TRP2,TX}$, but may directly determine $F^{'}_{TRP2,TX} - F^{'}_{TRP3,TX}$.

(d) The TRP 2 determines a difference $\Delta T^{t}_{12}$. (corresponding to S1012) between a moment at which the first access network device sends the first reference signal and a moment at which the second access network device sends the second reference signal.

(e) The TRP 2 determines a difference $\Delta T^{t}_{32}$ (corresponding to S1014) between a moment at which the third access network device sends the third reference signal and a moment at which the second access network device sends the second reference signal.

(f) The TRP 2 sends the second frequency difference information (corresponding to S1009), the fourth frequency difference information (corresponding to S1011), the second time difference information (corresponding to S1013), and the fourth time difference information (corresponding to S1015) to the LMF unit. The second frequency difference information indicates $F_{TRP\_21}$, the fourth frequency difference information indicates $F_{TRP\_23}$, the second time difference information indicates $\Delta T^{t}_{12}$, and the fourth time difference information indicates $\Delta T^{t}_{32}$.

(g) A frequency shift that is of the received first reference signal and that is measured by the UE is $F_1$. $F_1$ is related to an actual frequency $F^{'}_{TRP1,TX}$ of the first reference signal sent by the TRP 1, an actual Doppler frequency shift $F_{d1}$ of the first reference signal, and a clock frequency $F_{UE}$ of the UE, for example, $F_1 = F^{'}_{TRP1,TX} + F_{d1} - F_{UE}$. In other words, the UE can obtain $F_1$ through measurement, but may not need to measure $F^{'}_{TRP1,TX}$, $F_{d1}$, and $F_{UE}$ associated with $F_1$. $F_1$ may also be referred to as a measured Doppler frequency shift of the received first reference signal. In other words, because the clock frequency $F_{UE}$ of the UE is different from the actual frequency $F_{TRP1,TX}^{'}$ at which the TRP 1 sends the first reference signal, the Doppler frequency shift $F_1$ of the first reference signal obtained through measurement is different from the actual Doppler frequency shift $F_{d1}$ of the first reference signal. If the clock frequency $F_{UE}$ of the UE is equal to the actual frequency $F_{TRP1,TX}^{'}$ at which the TRP 1 sends the first reference signal, the Doppler frequency shift $F_1$ of the first reference signal obtained by the UE through measurement is equal to the actual Doppler frequency shift $F_{d1}$ of the first reference signal. A frequency shift that is of the received second reference signal and that is measured by the UE is $F_2$. $F_2$ is related to an actual frequency $F_{TRP2,TX}^{'}$ at which the TRP 2 sends the second reference signal, an actual Doppler frequency shift $F_{d2}$ of the second reference signal, and the clock frequency $F_{UE}$ of the UE, for example, $F_2 = F_{TRP2,TX}^{'} + F_{d2} - F_{UE}$. In other words, the UE can obtain $F_2$ through measurement, but may not need to measure $F_{TRP2,TX}^{'}$, $F_{d2}$, and $F_{UE}$ associated with $F_2$. $F_2$ may also be referred to as a measured Doppler frequency shift of the received second reference signal. In other words, because the clock frequency $F_{UE}$ of the UE is different from the actual frequency $F_{TRP2,TX}^{'}$ at which the TRP 2 sends the second reference signal, the Doppler frequency shift $F_2$ of the second reference signal obtained through measurement is different from the actual Doppler frequency shift $F_{d2}$ of the second reference signal. If the clock frequency $F_{UE}$ of the UE is equal to the actual frequency $F_{TRP2,TX}^{'}$ at which the TRP 2 sends the second reference signal, the Doppler frequency shift $F_2$ of the second reference signal obtained by the UE through measurement is equal to the actual Doppler frequency shift $F_{d2}$ of the second reference signal. Therefore, a difference between the frequency shift that is of the received first reference signal and that is measured by the UE and the frequency shift that is of the received second reference signal and that is measured by the UE is

$$FDOA_{UE\_12} = F_1 - F_2 = (F_{TRP1,TX}^{'} + F_{d1} - F_{UE}) - (F_{TRP2,TX}^{'} + F_{d2} - F_{UE}) = F_{d1} - F_{d2} + F_{TRP1,TX}^{'} - F_{TRP2,TX}^{'}.$$

In other words, an error of the clock frequency $F_{UE}$ of the UE can be cancelled by using the difference between the frequency shifts of the two reference signals obtained by the UE through measurement. In this way, impact of the error of the clock frequency of the UE can be reduced. The first frequency difference information sent by the UE to the LMF unit may indicate $FDOA_{UE\_12}$ (corresponding to S1017). Certainly, the UE may directly send $F_1$ and $F_2$ to the LMF unit. In this way, the LMF unit can determine $FDOA_{UE\_12}$. $FDOA_{UE\_12}$ may also be referred to as an FDOA between the first reference signal and the second reference signal.

(h) A frequency shift that is of the received third reference signal and that is measured by the UE is $F_3$. $F_3$ is related to an actual frequency $F_{TRP3,TX}^{'}$ of the third reference signal sent by the TRP 3, an actual Doppler frequency shift $F_{d3}$ of the third reference signal, and a clock frequency $F_{UE}$ of the UE, for example, $F_3 = F_{TRP3,TX}^{'} + F_{d3} - F_{UE}$. In other words, the UE can obtain $F_3$ through measurement, but may not need to measure $F_{TRP3,TX}^{'}$, $F_{d3}$, and $F_{UE}$ associated with $F_3$. $F_3$ may also be referred to as a measured Doppler frequency shift of the received third reference signal. In other words, because the clock frequency $F_{UE}$ of the UE is different from the actual frequency $F_{TRP3,TX}^{'}$ at which the TRP 3 sends the third reference signal, the Doppler frequency shift $F_3$ of the third reference signal obtained through measurement is different from the actual Doppler frequency shift $F_{d3}$ of the third reference signal. If the clock frequency $F_{UE}$ of the UE is equal to the actual frequency $F_{TRP3,TX}^{'}$ at which the TRP 3 sends the third reference signal, the Doppler frequency shift $F_3$ of the third reference signal obtained by the UE through measurement is equal to the actual Doppler frequency shift $F_{d3}$ of the third reference signal. Therefore, a difference between the frequency shift that is of the received third reference signal and that is measured by the UE and the frequency shift that is of the received second reference signal and that is measured by the UE is

$$FDOA_{UE\_32} = F_3 - F_2 = (F'_{TRP3,TX} + F_{d3} - F_{UE}) - (F'_{TRP2,TX} + F_{d2} - F_{UE}) = F_{d3} - F_{d2} + F'_{TRP3,TX} - F'_{TRP2,TX}$$

. In other words, an error of the clock frequency $F_{UE}$ of the UE can be cancelled by using the difference between the frequency shifts of the two reference signals obtained by the UE through measurement. In this way, impact of the error of the clock frequency $F_{UE}$ of the UE can be reduced. The third frequency difference information sent by the UE to the LMF unit may indicate $FDOA_{UE\_32}$ (corresponding to S1019). Certainly, the UE may directly send $F_3$ and $F_2$ to the LMF unit. In this way, the LMF unit can determine $FDOA_{UE\_32}$. $FDOA_{UE\_32}$ may also be referred to as an FDOA between the third reference signal and the second reference signal.

(i) A moment at which the UE receives the first reference signal is $T_1$, a moment at which the UE receives the second reference signal is $T_2$, and a difference between the moment at which the UE receives the first reference signal and the moment at which the UE receives the second reference signal is $\Delta T^r_{12} = T_1 - T_2$. The first time difference information sent by the UE to the LMF unit may indicate $\Delta T^r_{12}$ (corresponding to S1021). Certainly, the UE may directly send $T_1$ and $T_2$ to the LMF unit. In this way, the LMF unit can determine $\Delta T^r_{12}$.

(j) A moment at which the UE receives the third reference signal is $T_3$, a moment at which the UE receives the second reference signal is $T_2$, and a difference between the moment at which the UE receives the third reference signal and the moment at which the UE receives the second reference signal is $\Delta T^r_{32} = T_3 - T_2$. The third time difference information sent by the UE to the LMF unit may indicate $\Delta T^r_{32}$. (corresponding to S1023). Certainly, the UE may directly send $T_3$ and $T_2$ to the LMF unit. In this way, the LMF unit can determine $\Delta T^r_{32}$.

(k) The LMF unit establishes FDOA-based equations (5) and (6), and establishes TDOA-based equations (7) and (8):

$$FDOA_{UE\_12} + F_{TRP\_21} = F_{d1} - F_{d2} + F'_{TRP1,TX} - F'_{TRP2,TX} + F'_{TRP2,TX} - F'_{TRP1,TX}$$

$$= F_{d1} - F_{d2} = \frac{v}{\lambda_1}\cos\phi_1 - \frac{v}{\lambda_2}\cos\phi_2 \quad (5)$$

$$FDOA_{UE\_32} + F_{TRP\_23} = F_{d3} - F_{d2} + F'_{TRP3,TX} - F'_{TRP2,TX} + F'_{TRP2,TX} - F'_{TRP3,TX}$$

$$= F_{d3} - F_{d2} = \frac{v}{\lambda_3}\cos\phi_1 - \frac{v}{\lambda_2}\cos\phi_2 \quad (6)$$

$$c\Delta T^r_{12} - c\Delta T^t_{12} = d_1 - d_2 = \sqrt{(x_1 - x)^2 + (y_1 - y)^2} - \sqrt{(x_2 - x)^2 + (y_2 - y)^2} \quad (7)$$

$$c\Delta T^r_{32} - c\Delta T^t_{32} = d_3 - d_2 = \sqrt{(x_3 - x)^2 + (y_3 - y)^2} - \sqrt{(x_2 - x)^2 + (y_2 - y)^2} \quad (8)$$

$\phi_1$ is an included angle between a movement direction of the UE and a connection line between the TRP 1 and the UE, $\phi_1 = \arctan\left(\frac{y_1 - y}{x_1 - x}\right) + \phi_{UE}$, $(x_1, y_1)$ is coordinates of the TRP 1, $(x_1, y_1)$ is a known quantity, $(x, y)$ is coordinates of the UE, $(x, y)$ is an unknown quantity, a magnitude $v$ of a movement velocity of the UE is an unknown quantity, and a direction $\phi_{UE}$ of the movement velocity of the UE is an unknown quantity. $\phi_2$ is an included angle between

$$\phi_2 = \arctan\left(\frac{y_2 - y}{x_2 - x}\right) + \phi_{UE}$$

the movement direction of the UE and a connection line between the TRP 2 and the UE,

, $(x_2, y_2)$ is coordinates of the TRP 2, and $(x_2, y_2)$ is a known quantity. $\phi_3$ is an included angle between the movement

$$\phi_3 = \arctan\left(\frac{y_3 - y}{x_3 - x}\right) + \phi_{UE}$$

direction of the UE and a connection line between the TRP 3 and the UE,     , $(x_3, y_3)$ is

coordinates of the TRP 3, and $(x_3, y_3)$ is a known quantity. $\lambda_1$ is a wavelength of the first reference signal sent by the TRP 1, $\lambda = c / F_{TRP1,TX}$, $\lambda_2$ is a wavelength of the second reference signal sent by the TRP 2, $\lambda_2 = c / F_{TRP2,TX}$, $\lambda_3$ is a wavelength of the third reference signal sent by the TRP 3, $\lambda_3 = c / F_{TRP3,TX}$, and $c$ is a speed of light.

It should be noted that, the equation (5) is used to cancel a frequency error when the TRP 1 sends the first reference signal, and is also used to cancel a frequency error when the TRP 2 sends the second reference signal. In other words, the equation (5) can be used to reduce impact of an error of the actual frequency $F'_{TRP1,TX}$ at which the TRP 1 sends the first reference signal and reduce impact of an error of the actual frequency $F'_{TRP2,TX}$ at which the TRP 2 sends the second reference signal. Similarly, the equation (6) is used to cancel a frequency error when the TRP 3 sends the third reference signal, and is also used to cancel the frequency error when the TRP 2 sends the second reference signal. In other words, the equation (6) can be used to reduce impact of the error of the actual frequency

$F'_{TRP2,TX}$ at which the TRP 2 sends the second reference signal and reduce impact of an error of the actual frequency

error $F'_{TRP3,TX}$ at which the TRP 3 sends the third reference signal.

In other words, when the LMF unit determines the coordinates $(x, y)$ of the UE, the LMF unit may learn the coordinates $(x_1, y_1)$ of the TRP 1, the coordinates $(x_2, y_2)$ of the TRP 2, and the coordinates $(x_3, y_3)$ of the TRP 3, that is, there are four unknown quantities $x, y, v,$ and $\phi_{UE}$ in the foregoing four equations. Therefore, the coordinates $(x, y)$ of the UE, the magnitude $v$ of the movement velocity of the UE, and the direction $\phi_{UE}$ of the movement velocity of the UE can be obtained.

It should be noted that in a process in which the LMF unit calculates the coordinates $(x, y)$ of the UE, the magnitude $v$ of the movement velocity of the UE, and the direction $\phi_{UE}$ of the movement velocity of the UE, the LMF unit obtains $FDOA_{UE\_12}$, $FDOA_{UE\_32}$, $\Delta T_{12}^r$, and $\Delta T_{32}^r$ from the terminal device, the LMF unit obtains $F_{TRP\_21}$, $F_{TRP\_23}$,

$\Delta T_{12}^t$, and $\Delta T_{32}^t$ from the second access network device, and the LMF unit can obtain $\lambda_1$, $\lambda_2$, and $\lambda_3$, and can also

obtain the coordinates $(x_1, y_1)$ of the TRP 1, the coordinates $(x_2, y_2)$ of the TRP 2, and the coordinates $(x_3, y_3)$ of the

TRP 3. The coordinates $(x, y)$ of the UE, the magnitude $v$ of the movement velocity of the UE, and the direction $\phi_{UE}$ of

the movement velocity of the UE can be determined based on these known quantities. The foregoing equation (5) to equation (8) are derivation principles of the formulas. In an actual operation process, the LMF unit may not need to obtain intermediate parameters of the derivation equation (5) to equation (8). For example, the LMF unit may not need

to learn $F'_{TRP1,TX}$, $F'_{TRP2,TX}$, $F'_{TRP3,TX}$, $F_{d1}$, $F_{d2}$, $F_{d3}$, and $F_{UE}$.

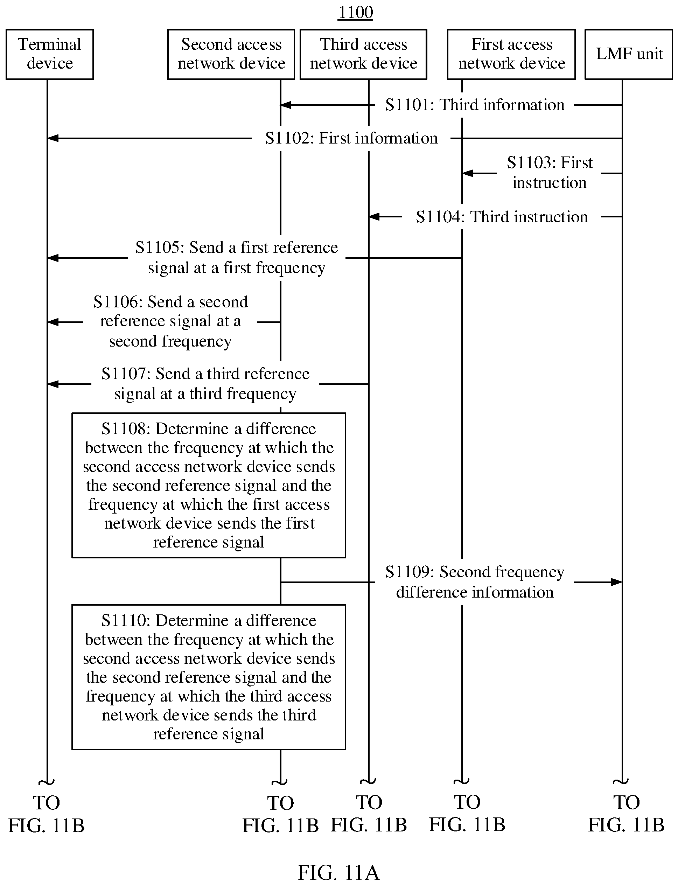

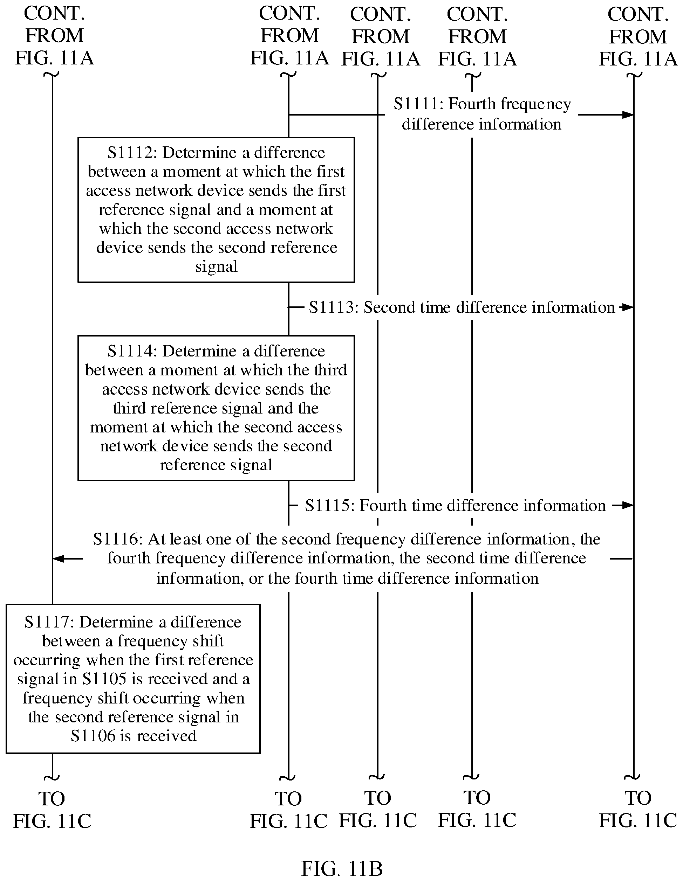

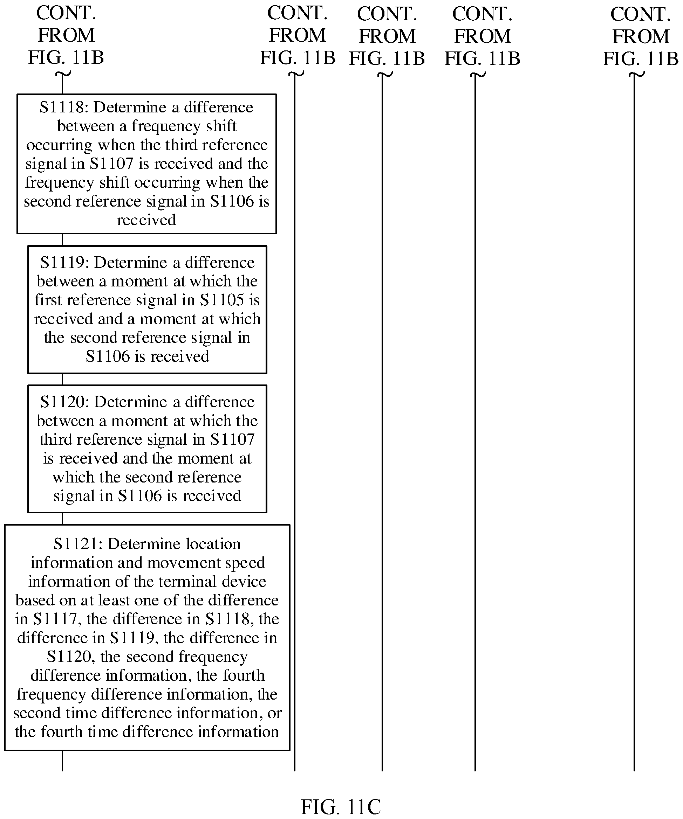

In the information processing method described in the foregoing method 1000, the LMF unit determines the location information of the terminal device. In some scenarios, the terminal device may also determine the location information of the terminal device. For example, the following describes how a terminal device determines location information of the terminal device with reference to an information processing method 1100 in FIG. 11A to FIG. 11C. As shown in FIG. 11A to FIG. 11C, the method 1100 includes the following steps.

S1101: is the same as S1001.

S1102: The LMF unit sends first information to the terminal device, and the terminal device receives the first information from the LMF unit. The first information indicates the terminal device to measure the location information of the terminal device.

Optionally, the first information indicates the terminal device to measure the location information of the terminal device.

Optionally, the first information includes auxiliary measurement information. Optionally, the auxiliary measurement information includes at least one of an identifier of a first access network device, an identifier of a second access network device, an identifier of a third access network device, or configuration information of a reference signal. The configuration information of the reference signal indicates at least one of a first frequency at which the first access network device sends the first reference signal, a second frequency at which the second access network device sends the second reference signal, a third frequency at which the third access network device sends the third reference signal, fourth time information when the first access network device sends the first reference signal, second time information when the second access network device sends the second reference signal, or fifth time information when the third access network device sends the third reference signal.

Optionally, the auxiliary measurement information may further indicate at least one of coordinates of the first access network device, coordinates of the second access network device, or coordinates of the third access network device.

Optionally, the LMF unit may actively trigger performing of S1102 or trigger performing of S1102 based on a user requirement.

It may be understood that there is no limitation on a sequence of S1101 and S1102, and S1101 may be performed before or after S1102, or S1101 and S1102 are simultaneously performed.

S1103 to S1115: are respectively the same as S1003 to S1015.

S1116: The LMF unit sends at least one of second frequency difference information, fourth frequency difference information, second time difference information, or fourth time difference information to the terminal device.

It may be understood that the LMF unit may simultaneously send at least two of the second frequency difference information, the fourth frequency difference information, the second time difference information, or the fourth time difference information, or separately send the second frequency difference information, the fourth frequency difference information, the second time difference information, or the fourth time difference information. A sequence in which the LMF unit sends the second frequency difference information, the fourth frequency difference information, the second time difference information, or the fourth time difference information to the terminal device is not limited in this embodiment of this application.

S1117: is the same as S1016.

S1118: is the same as S1018.

S1119: is the same as S1020.

S1120: is the same as S1022.

S1121: The terminal device determines the location information of the terminal device and movement speed information of the terminal device based on at least one of the difference in S1117, the difference in S1118, the difference in S1119, the difference in S1120, the second frequency difference information, the fourth frequency difference information, the second time difference information, or the fourth time difference information.

A first frequency difference information indicates the difference in S1117, a third frequency difference information may indicate the difference in S1118, a first time difference information may indicate the difference in S1119, and a third time difference information may indicate the difference in S1120.

Optionally, S1121 includes: The terminal device may obtain the location information of the terminal device and the movement speed information of the terminal device by performing a mathematical operation on the first frequency difference information, the second frequency difference information, the third frequency difference information, the fourth frequency difference information, the first time difference information, the second time difference information, the third time difference information, or the fourth time difference information.

Optionally, S1121 includes: The terminal device determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, a wavelength at which the first access network device sends the first reference signal, a wavelength at which the second access network device sends the second reference signal, or a wavelength at which the third access network device sends the third reference signal.

Optionally, the wavelength at which the first access network device sends the first reference signal is related to the first frequency. For example, the wavelength at which the first access network device sends the first reference signal is equal to a speed of light divided by the first frequency. In other words, the first frequency is configured by the LMF unit for the terminal device. Therefore, the terminal device can determine, based on the speed of light and the first frequency, the wavelength at which the first access network device sends the first reference signal.

Optionally, the wavelength at which the second access network device sends the second reference signal is related to the second frequency. For example, the wavelength at which the second access network device sends the second reference signal is equal to the speed of light divided by the second frequency. In other words, the second frequency is configured by the LMF unit for the terminal device. Therefore, the terminal device can determine, based on the speed of light and the second frequency, the wavelength at which the second access network device sends the second reference signal.

Optionally, the wavelength at which the third access network device sends the third reference signal is related to the third frequency. For example, the wavelength at which the third access network device sends the third reference signal is equal to the speed of light divided by the third frequency. In other words, the third frequency is configured by the LMF unit for the terminal device. Therefore, the terminal device can determine, based on the speed of light and the third frequency, the wavelength at which the third access network device sends the third reference signal.

Optionally, that the terminal device determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, a wavelength at which the first access network device sends the first reference signal, a wavelength at which the second access network device sends the second reference signal, or a wavelength at which the third access network device sends the third reference signal includes: The terminal device determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the wavelength at which the first access network device sends the first reference signal, the wavelength at which the second access network device sends the second reference signal, the wavelength at which the third access network device sends the third reference signal, coordinates of the first access network device, coordinates of the second access network device, or coordinates of the third access network device.

Optionally, the terminal device may determine at least one of the coordinates of the first access network device, the coordinates of the second access network device, or the coordinates of the third access network device based on the auxiliary measurement information in S 1102.

Optionally, S 1121 includes: The terminal device determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the first frequency, the second frequency, or the third frequency.

Optionally, that the terminal device determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the first frequency, the second frequency, or the third frequency includes: The terminal device determines the location information of the terminal device and the movement speed information of the terminal device based on at least one of the first frequency difference information, the second frequency difference information, the third frequency difference information, the fourth frequency difference information, the first time difference information, the second time difference information, the third time difference information, the fourth time difference information, the first frequency, the second frequency, the third frequency, the coordinates of the first access network device, the coordinates of the second access network device, or the coordinates of the third access network device.

Optionally, the location information of the terminal device indicates coordinates of the terminal device.

Optionally, the movement speed information of the terminal device indicates a magnitude of a movement velocity and a direction of the movement velocity of the terminal device.

It may be understood that, in the method 1100, for ease of description, S1108, S1110, S1112, and S1114 are performed by the second access network device. Optionally, at least one of S1108, S1110, S1112, and S1114 may be performed by another access network device different from the second access network device. For example, the first access network device may perform S1108, and send the second frequency difference information to the LMF unit to indicate the difference determined in S1108; or the first access network device may perform S1112, and send the second time difference information to the LMF unit to indicate the difference determined in S1112. For another example, the third access network device may perform S1110, and send the fourth frequency difference information to the LMF unit to indicate the difference determined in S1110; or the third access network device may perform S1114, and send the fourth time difference information to the LMF unit to indicate the difference determined in S1114.

It should be noted that, in the method 1000 and the method 1100, the first frequency difference information indicates a difference between a frequency at which the terminal device receives the first reference signal sent by the first access network device and a frequency at which the terminal device receives the second reference signal sent by the second access network device; the second frequency difference information indicates a difference between a frequency at which the second access network device sends the second reference signal and a frequency at which the first access network device sends the first reference signal; the third frequency difference information indicates a difference between a frequency shift occurring when the terminal device receives the third reference signal sent by the third access network device and a frequency shift occurring when the terminal device receives the second reference signal sent by the second access network device; the fourth frequency difference information indicates a difference between the frequency at which the second access network device sends the second reference signal and a frequency at which the third access network device sends the third reference signal; the first time difference information indicates a difference between a moment at which the terminal device receives the first reference signal sent by the first access network device and a moment at which the terminal device receives the second reference signal sent by the second access network device; the second time difference information indicates a difference between a moment at which the first access network device sends the first reference signal and a moment at which the second access network device sends the second reference signal; the third time difference information indicates a difference between a moment at which the terminal device receives the third reference signal sent by the third access network device and the moment at which the terminal device receives the second reference signal sent by the second access network device; and the fourth time difference information indicates a difference between a moment at which the third access network device sends the third reference signal and the moment at which the second access network device sends the second reference signal. Alternatively, the first frequency difference information indicates a difference between a frequency at which the terminal device receives the second reference signal sent by the second access network device and a frequency at which the terminal device receives the first reference signal sent by the first access network device; the second frequency difference information indicates a difference between a frequency at which the first access network device sends the first reference signal and a frequency at which the second access network device sends the second reference signal; the third frequency difference information indicates a difference between a frequency shift occurring when the terminal device receives the second reference signal sent by the second access network device and a frequency shift occurring when the terminal device receives the third reference signal sent by the third access network device; the fourth frequency difference information indicates a difference between a frequency at which the third access network device sends the third reference signal and the frequency at which the second access network device sends the second reference signal; the first time difference information indicates a difference between a moment at which the terminal device receives the second reference signal sent by the second access network device and a moment at which the terminal device receives the first reference signal sent by the first access network device; the second time difference information indicates a difference between a moment at which the second access network device sends the second reference signal and a moment at which the first access network device sends the first reference signal; the third time difference information indicates a difference between the moment at which the terminal device receives the second reference signal sent by the second access network device and a moment at which the terminal device receives the third reference signal sent by the third access network device; and the fourth time difference information indicates a difference between the moment at which the second access network device sends the second reference signal and a moment at which the third access network device sends the third reference signal. A specific calculation principle is similar to the foregoing method. To avoid repetition, no detailed description is provided.

It should be noted that, in the embodiments shown in FIG. 4A and FIG. 4B to FIG. 11A to FIG. 11C, descriptions are provided by using an example in which there are two access network devices or three access network devices. With reference to the foregoing described principle, there may further be more than three access network devices. A specific calculation principle is similar to the foregoing principle. To avoid repetition, details are not described.

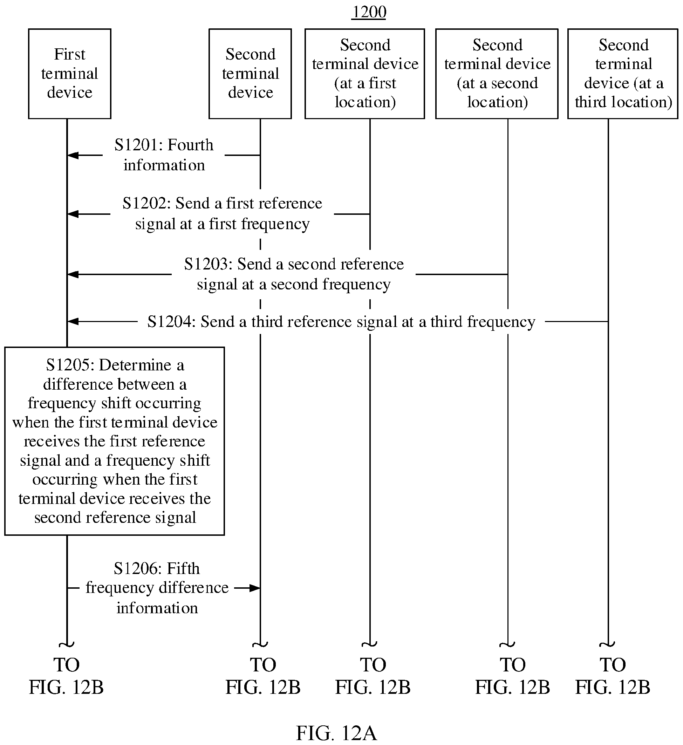

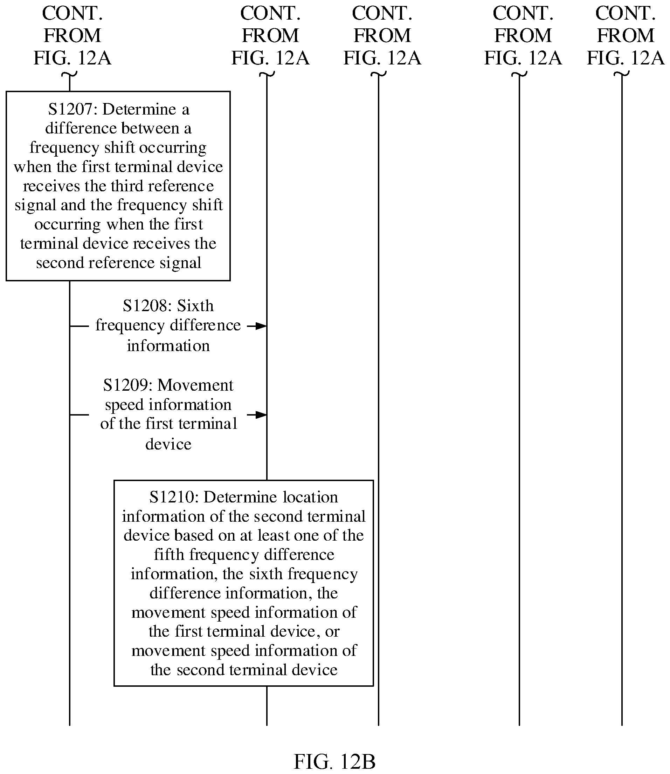

The embodiments in FIG. 4A and FIG. 4B to FIG. 11A to FIG. 11C are applicable to a scenario in which there are a plurality of access network devices in FIG. 1. The following describes, with reference to FIG. 12A and FIG. 12B, an information processing method 1200 in the scenario shown in FIG. 2. The method 1200 is a method 1200 for determining location information of a second terminal device by the second terminal device.

S1201: The second terminal device sends fourth information to a first terminal device, and the fourth information indicates that the second terminal device needs to measure location information of the first terminal device.

Optionally, the fourth information may include auxiliary measurement information, and the auxiliary measurement information indicate at least one of a first frequency at which the second terminal device sends a first reference signal, a second frequency at which the second terminal device sends a second reference signal, and a third frequency at which the second terminal device sends a third reference signal. Optionally, the auxiliary measurement information may further indicate a time at which the second terminal device sends the first reference signal, a time at which the second terminal device sends the second reference signal, or a time at which the second terminal device sends the third reference signal.

Optionally, the first frequency at which the second terminal device sends the first reference signal, the second frequency at which the second terminal device sends the second reference signal, and the third frequency at which the second terminal device sends the third reference signal are the same.

Optionally, the second terminal device and the first terminal device are in a relative movement state.

Optionally, that the second terminal device and the first terminal device are in a relative movement state may be understood as: The first terminal device is in a static state, and the second terminal device is in a moving state; the first terminal device is in a moving state, and the second terminal device is in a static state; or both the first terminal device and the second terminal device are in a moving state, but movement speed information of the first terminal device is different from movement speed information of the second terminal device. For example, a magnitude of a movement velocity of the first terminal device is different from a magnitude of a movement velocity of the second terminal device, and/or a direction of the movement velocity of the first terminal device is different from a direction of the movement velocity of the second terminal device.

For example, the second terminal device is a vehicle. When the second terminal device needs to change lane, the vehicle may be triggered to send fourth information to another nearby vehicle (the vehicle is the first terminal device), to measure relative location information between the two vehicles.

It should be noted that the second terminal device may send the fourth information to the first terminal device at another location different from a first location, a second location, and a third location, or the second terminal device may send the fourth information to the first terminal device at one of a first location, a second location, and a third location. A location at which the second terminal device sends the fourth information is not limited in this embodiment of this application.

S 1202: The second terminal device sends the first reference signal at the first location at the first frequency.

Optionally, if the auxiliary measurement information indicates the time at which the second terminal device sends the first reference signal, the second terminal device may determine the first location based on the time at which the first reference signal is sent and the movement speed of the second terminal device.

It should be noted that, theoretically, the second terminal device sends the first reference signal at the first frequency. However, due to a limitation of a hardware condition of the second terminal device, an actual frequency at which the second terminal device sends the first reference signal may not be the first frequency. In other words, the first frequency is a theoretical frequency at which the second terminal device sends the first reference signal, and may not be the actual frequency. Certainly, the hardware condition of the second terminal device may be good, and the theoretical frequency is equal to the actual frequency. In other words, the actual frequency at which the second terminal device sends the first reference signal may also be the first frequency.

S 1203 : The second terminal device sends the second reference signal at the second location at the second frequency.

Optionally, if the auxiliary measurement information indicates the time at which the second terminal device sends the second reference signal, the second terminal device may determine the second location based on the time at which the second reference signal is sent and the movement speed of the second terminal device.

It should be noted that, theoretically, the second terminal device sends the second reference signal at the second frequency. However, due to a limitation of the hardware condition of the second terminal device, an actual frequency at which the second terminal device sends the second reference signal may not be the second frequency. In other words, the second frequency is a theoretical frequency at which the second terminal device sends the second reference signal, and may not be the actual frequency. Certainly, the hardware condition of the second terminal device may be good, and the theoretical frequency is equal to the actual frequency. In other words, the actual frequency at which the second terminal device sends the second reference signal may also be the second frequency.

S 1204: The second terminal device sends the third reference signal at the third location at the third frequency.

Optionally, if the auxiliary measurement information indicates the time at which the second terminal device sends the third reference signal, the second terminal device may determine the third location based on the time at which the third reference signal is sent and the movement speed of the second terminal device.

It should be noted that, theoretically, the second terminal device sends the third reference signal at the third frequency. However, due to a limitation of the hardware condition of the second terminal device, an actual frequency at which the second terminal device sends the third reference signal may not be the third frequency. In other words, the third frequency is a theoretical frequency at which the second terminal device sends the third reference signal, and may not be the actual frequency. Certainly, the hardware condition of the second terminal device may be good, and the theoretical frequency is equal to the actual frequency. In other words, the actual frequency at which the second terminal device sends the third reference signal may also be the third frequency.

It may be understood that the first frequency at which the second terminal device sends the first reference signal in S 1202, the second frequency at which the second terminal device sends the second reference signal in S 1203, and the third frequency at which the second terminal device sends the third reference signal in S 1204 are the same.

Optionally, at least two of the first frequency at which the second terminal device sends the first reference signal in S 1202, the second frequency at which the second terminal device sends the second reference signal in S 1203, or the third frequency at which the second terminal device sends the third reference signal in S 1204 are different.

Optionally, the first location, the second location, and the third location may be a same location. When the first location, the second location, and the third location are a same location, a relative location between the second terminal device and the first terminal device when the second terminal device sends the first reference signal is a first relative location, a relative location between the second terminal device and the first terminal device when the second terminal device sends the second reference signal is a second relative location, and a relative location between the second terminal device and the first terminal device when the second terminal device sends the third reference signal is a third relative location. The first relative location, the second relative location, and the third relative location are different. In other words, in this case, the first terminal device may be in a moving state, or the second terminal device may be in a moving state, or both the first terminal device and the second terminal device are in a moving state.

Optionally, the first location, the second location, and the third location may be different locations.

Optionally, the second terminal device may determine the first location, the second location, and the third location based on an implementation of the second terminal device. For example, the second terminal device may determine a location at which the first reference signal is sent as the first location; determine a location obtained after the second terminal device moves a preset distance as the second location, and send the second reference signal at the second location; and determine, as the third location, a location obtained after the second terminal device moves a preset distance after the second terminal device sends the second reference signal, and send the third reference signal at the third location. For another example, the second terminal device indicates, by the auxiliary measurement information, a time at which the second terminal device sends the first reference signal, a time at which the second terminal device sends the second reference signal, and a time at which the second terminal device sends the third reference signal. As the second terminal device moves, a location of the second terminal device at the time at which the first reference signal is sent is the first location, a location of the second terminal device at the time at which the second reference signal is sent is the second location, and a location of the second terminal device at the time at which the third reference signal is sent is the third location.

Optionally, coordinates of the first location, the second location, and the third location may be understood as unknown. Herein, three different locations indicate that the second terminal device separately sends three reference signals at three different locations.

In other words, that the second terminal device sends reference signals at different locations may be understood as reference signals sent by different anchors. In this way, the location information of the first terminal device may be determined based on a plurality of anchors.

S1205: The first terminal device determines a difference between a frequency shift occurring when the first terminal device receives the first reference signal and a frequency shift occurring when the first terminal device receives the second reference signal.

Optionally, the first terminal device may listen to the first reference signal based on the first frequency at which the second terminal device sends the first reference signal and that is indicated by the auxiliary measurement information, to determine the frequency shift occurring when the first reference signal is received. Optionally, the frequency shift occurring when the first terminal device receives the first reference signal is related to a frequency at which the second terminal device sends the first reference signal.

Optionally, the first terminal device may listen to the second reference signal based on the second frequency at which the second terminal device sends the second reference signal and that is indicated by the auxiliary measurement information, to determine the frequency shift occurring when the second reference signal is received. Optionally, the frequency shift occurring when the first terminal device receives the second reference signal is related to a frequency at which the second terminal device sends the second reference signal.

Optionally, the first terminal device may determine the frequency shift of the first reference signal via a frequency mixer. One input of the frequency mixer is a locally generated first reference signal at the first frequency, the other input of the frequency mixer is a received first reference signal, and an output of the frequency mixer is a signal whose frequency is the frequency shift of the first reference signal. Therefore, the frequency shift of the first reference signal can be obtained by measuring the frequency of the signal output by the frequency mixer.

Optionally, the first terminal device may determine the frequency shift of the second reference signal via the frequency mixer. One input of the frequency mixer is a locally generated second reference signal at the second frequency, the other input of the frequency mixer is a received second reference signal, and an output of the frequency mixer is a signal whose frequency is the frequency shift of the second reference signal. Therefore, the frequency shift of the second reference signal can be obtained by measuring the frequency of the signal output by the frequency mixer.

It should be noted that, S1205 is performed after S1202 and S1203, and a sequence of S1205 and other steps is not limited.

S1206: The first terminal device sends fifth frequency difference information to the second terminal device. The fifth frequency difference information indicates the difference between the frequency shift occurring when the first terminal device receives the first reference signal and the frequency shift occurring when the first terminal device receives the second reference signal.

In an alternative manner of S1206, the first terminal device may send, to the second terminal device, the frequency shift occurring when the first reference signal is received and the frequency shift occurring when the second reference signal is received, so that the second terminal device can determine the difference between the frequency shift occurring when the first reference signal is received and the frequency shift occurring when the second reference signal is received.

Optionally, the fifth frequency difference information indicates a difference between a frequency at which the terminal device receives the first reference signal in S1202 and a frequency at which the terminal device receives the second reference signal in S1203. The difference between the frequency at which the first terminal device receives the first reference signal in S1202 and the frequency at which the first terminal device receives the second reference signal in S1203 is obtained through measurement by the first terminal device.

It should be noted that a location at which the second terminal device receives the fifth frequency difference information may be another location different from the first location, the second location, and the third location, or a location at which the second terminal device receives the fifth frequency difference information may be one of the first location, the second location, and the third location. A location at which the second terminal device receives the fifth frequency difference information is not limited in this embodiment of this application.

S1207: The first terminal device determines a difference between a frequency shift occurring when the first terminal device receives the third reference signal and the frequency shift occurring when the first terminal device receives the second reference signal.

Optionally, the terminal device may listen to the third reference signal based on the third frequency at which the second terminal device sends the third reference signal and that is indicated by the auxiliary measurement information, to determine the frequency shift occurring when the third reference signal is received. Optionally, the frequency shift occurring when the first terminal device receives the third reference signal is related to a frequency at which the second terminal device sends the third reference signal.

Optionally, the terminal device may listen to the second reference signal based on the second frequency at which the second terminal device sends the second reference signal and that is indicated by the auxiliary measurement information, to determine the frequency shift occurring when the second reference signal is received. Optionally, the frequency shift occurring when the second reference signal is received is related to a frequency at which the second terminal device sends the second reference signal.

Optionally, the first terminal device may determine the frequency shift of the third reference signal via the frequency mixer. One input of the frequency mixer is a locally generated third reference signal at the third frequency, the other input of the frequency mixer is a received third reference signal, and an output of the frequency mixer is a signal whose frequency is the frequency shift of the third reference signal. Therefore, the frequency shift of the third reference signal can be obtained by measuring the frequency of the signal output by the frequency mixer.

S 1208: The first terminal device sends sixth frequency difference information to the second terminal device. The sixth frequency difference information indicates the difference between the frequency shift occurring when the first terminal device receives the third reference signal and the frequency shift occurring when the first terminal device receives the second reference signal.

In an alternative manner of S1208, the first terminal device may send, to the second terminal device, the frequency shift occurring when the third reference signal is received and the frequency shift occurring when the second reference signal is received, so that the second terminal device can determine the difference between the frequency shift occurring when the third reference signal is received and the frequency shift occurring when the second reference signal is received.

Optionally, the sixth frequency difference information indicates a difference between a frequency at which the terminal device receives the third reference signal in S1204 and the frequency at which the terminal device receives the second reference signal in S1203. The difference between the frequency at which the first terminal device receives the third reference signal in S1204 and the frequency at which the first terminal device receives the second reference signal in S1203 is obtained through measurement by the first terminal device.

It should be noted that a location at which the second terminal device receives the sixth frequency difference information may be another location different from the first location, the second location, and the third location, or a location at which the second terminal device receives the sixth frequency difference information may be one of the first location, the second location, and the third location. A location at which the second terminal device receives the sixth frequency difference information is not limited in this embodiment of this application.

S1209: The first terminal device sends movement speed information of the first terminal device to the second terminal device, and the second terminal device receives the movement speed information of the first terminal device from the first terminal device.

Optionally, the movement speed information of the first terminal device includes first movement speed information when the first terminal device receives the first reference signal, second movement speed information when the first terminal device receives the second reference signal, and third movement speed information when the first terminal device receives the third reference signal.

Optionally, the first movement speed information indicates a magnitude of a movement velocity and/or a direction of the movement velocity when the first terminal device receives the first reference signal.

Optionally, the second movement speed information indicates a magnitude of the movement velocity and/or a direction of the movement velocity when the first terminal device receives the second reference signal.

Optionally, the third movement speed information indicates a magnitude of the movement velocity and/or a direction of the movement velocity when the first terminal device receives the third reference signal.

Optionally, when reporting the first movement speed information, the first terminal device may also report first timestamp information corresponding to the first movement speed information. Optionally, the first timestamp information indicates a first moment at which the first terminal device receives the first reference signal.

Optionally, when reporting the second movement speed information, the first terminal device may also report second timestamp information corresponding to the second movement speed information. Optionally, the second timestamp information indicates a second moment at which the first terminal device receives the second reference signal.

Optionally, when reporting the third movement speed information, the first terminal device may also report third timestamp information corresponding to the third movement speed information. Optionally, the third timestamp information indicates a third moment at which the first terminal device receives the third reference signal.

It may be understood that a magnitude of the movement velocity when the first terminal device receives the first reference signal, a magnitude of the movement velocity when the first terminal device receives the second reference signal, and a magnitude of the movement velocity when the first terminal device receives the third reference signal may be the same or different.

It may also be understood that a direction of the movement velocity when the first terminal device receives the first reference signal, a direction of the movement velocity when the first terminal device receives the second reference signal, and a direction of the movement velocity when the first terminal device receives the third reference signal may be the same or different.

It should be noted that a location at which the second terminal device receives the movement speed information of the first terminal device may be another location different from the first location, the second location, and the third location, or a location at which the second terminal device receives the movement speed information of the first terminal device may be one of the first location, the second location, and the third location. A location at which the second terminal device receives the movement speed information of the first terminal device is not limited in this embodiment of this application.

Optionally, the first terminal device may simultaneously perform S1206, S1208, and S 1209, or may separately perform S1206, S1208, and S 1209. When the first terminal device separately performs S1206, S1208, and S1209, a sequence of S1206, S1208, and S 1209 is not limited.

S1210: The second terminal device determines the location information of the second terminal device based on at least one of the fifth frequency difference information, the sixth frequency difference information, the movement speed information of the first terminal device, or the movement speed information of the second terminal device.

Optionally, the movement speed information of the second terminal device includes fourth movement speed information when the second terminal device sends the first reference signal, fifth movement speed information when the second terminal device sends the second reference signal, and sixth movement speed information when the second terminal device sends the third reference signal.

Optionally, the fourth movement speed information indicates a magnitude of a movement velocity and/or a direction of the movement velocity when the second terminal device sends the first reference signal.

Optionally, the fifth movement speed information indicates a magnitude of the movement velocity and/or a direction of the movement velocity when the second terminal device sends the second reference signal.

Optionally, the sixth movement speed information indicates a magnitude of the movement velocity and/or a direction of the movement velocity when the second terminal device sends the third reference signal.

It may be understood that a magnitude of the movement velocity when the second terminal device sends the first reference signal, a magnitude of the movement velocity when the second terminal device sends the second reference signal, and a magnitude of the movement velocity when the second terminal device sends the third reference signal may be the same or different.

It may also be understood that a direction of the movement velocity when the second terminal device sends the first reference signal, a direction of the movement velocity when the second terminal device sends the second reference signal, and a direction of the movement velocity when the second terminal device sends the third reference signal are the same or different.

Optionally, the first terminal device also reports the first timestamp information corresponding to the first movement speed information, the second timestamp information corresponding to the second movement speed information, and the third timestamp information corresponding to the third movement speed information. The second terminal device determines, based on the first timestamp information, that the first movement speed information corresponds to the fourth movement speed information, and performs an operation by using a magnitude of the movement velocity that is of the first terminal device and that is indicated by the first movement speed information and a magnitude of the movement velocity that is of the second terminal device and that is indicated by the fourth movement speed information; the second terminal device determines the second movement speed information and the fifth movement speed information based on the second timestamp information, and performs an operation by using a magnitude of the movement velocity that is of the first terminal device and that is indicated by the second movement speed information and a magnitude of the movement velocity that is of the second terminal device and that is indicated by the fifth movement speed information; and the second terminal device determines, based on the third timestamp information, that the third movement speed information corresponds to the sixth movement speed information, and performs an operation by using a magnitude of the movement velocity that is of the first terminal device and that is indicated by the third movement speed information and a magnitude of the movement velocity that is of the second terminal device and that is indicated by the sixth movement speed information. In other words, the first timestamp information, the second timestamp information, and the third timestamp information that are reported by the first terminal device are used by the second terminal device to determine the corresponding movement speed information of the first terminal device.

Optionally, S1210 includes: The second terminal device determines the location information of the second terminal device based on at least one of the fifth frequency difference information, the sixth frequency difference information, the movement speed information of the first terminal device, the movement speed information of the second terminal device, a wavelength at which the second terminal device sends the first reference signal, a wavelength at which the second terminal device sends the second reference signal, or a wavelength at which the second terminal device sends the third reference signal.

Optionally, the wavelength at which the second terminal device sends the first reference signal is related to the first frequency. For example, the wavelength at which the second terminal device sends the first reference signal is equal to a speed of light divided by the first frequency. In other words, the first frequency is configured by the second terminal device. Therefore, the second terminal device can determine, based on the speed of light and the first frequency, the wavelength at which the second terminal device sends the first reference signal.

Optionally, the wavelength at which the second terminal device sends the second reference signal is related to the second frequency. For example, the wavelength at which the second terminal device sends the second reference signal is equal to the speed of light divided by the second frequency. In other words, the second frequency is configured by the second terminal device. Therefore, the second terminal device can determine, based on the speed of light and the second frequency, the wavelength at which the second terminal device sends the second reference signal.

Optionally, the wavelength at which the second terminal device sends the third reference signal is related to the third frequency. For example, the wavelength at which the second terminal device sends the third reference signal is equal to the speed of light divided by the third frequency. In other words, the third frequency is configured by the second terminal device. Therefore, the second terminal device can determine, based on the speed of light and the third frequency, the wavelength at which the second terminal device sends the third reference signal.

Optionally, that the second terminal device determines the location information of the second terminal device based on at least one of the fifth frequency difference information, the sixth frequency difference information, the movement speed information of the first terminal device, the movement speed information of the second terminal device, a wavelength at which the second terminal device sends the first reference signal, a wavelength at which the second terminal device sends the second reference signal, or a wavelength at which the second terminal device sends the third reference signal includes: The second terminal device determines the location information of the second terminal device based on at least one of the fifth frequency difference information, the sixth frequency difference information, the movement speed information of the first terminal device, the movement speed information of the second terminal device, the wavelength at which the second terminal device sends the first reference signal, the wavelength at which the second terminal device sends the second reference signal, the wavelength at which the second terminal device sends the third reference signal, a first distance that the second terminal device moves between a moment at which the second terminal device sends the second reference signal and a moment at which the second terminal device sends the first reference signal, and a second distance that the second terminal device moves between a moment at which the second terminal device sends the third reference signal and the moment at which the second terminal device sends the second reference signal.

Optionally, if the first frequency, the second frequency, and the third frequency are the same, S1210 may be performed.

Optionally, if the first frequency, the second frequency, and the third frequency are different, S1210 includes: The second terminal device determines the location information of the second terminal device based on at least one of the fifth frequency difference information, the sixth frequency difference information, the movement speed information of the first terminal device, the movement speed information of the second terminal device, the first frequency, the second frequency, or the third frequency.

Optionally, the location information of the second terminal device indicates coordinates of the second terminal device relative to the first terminal device.

Optionally, the coordinates of the second terminal device relative to the first terminal device may be understood as coordinates of the second terminal device that use the coordinates of the first terminal device as an origin of coordinates.

Alternatively, the location information of the second terminal device determined in S 1210 may be replaced with the location information of the first terminal device. Optionally, the location information of the first terminal device indicates coordinates of the first terminal device relative to the second terminal device. Optionally, the coordinates of the first terminal device relative to the second terminal device may be understood as coordinates of the first terminal device that use the coordinates of the second terminal device as an origin of coordinates.

In other words, if the second terminal device can obtain the coordinates of the second terminal device relative to the first terminal device through calculation, the second terminal device may obtain the coordinates of the first terminal device relative to the second terminal device through conversion based on the coordinates of the second terminal device relative to the first terminal device; or if the second terminal device can obtain the coordinates of the first terminal device relative to the second terminal device through calculation, the second terminal device may obtain the coordinates of the second terminal device relative to the first terminal device through conversion based on the coordinates of the first terminal device relative to the second terminal device.

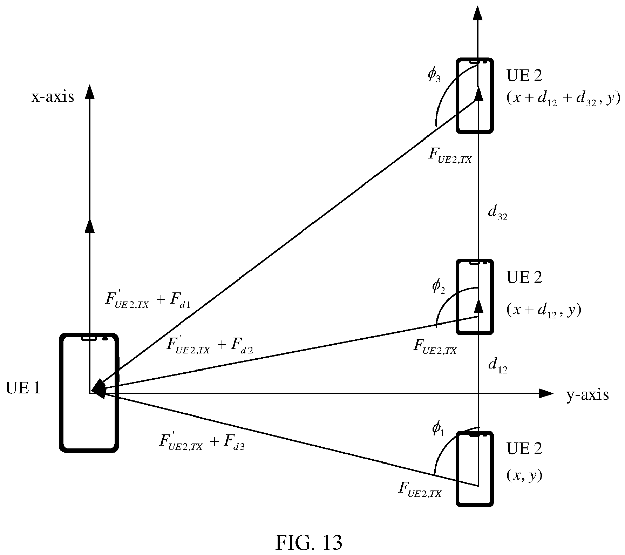

To better describe the method 1200, the following provides description by using an example with reference to FIG. 13. The first terminal device in the method 1200 may be UE 1 shown in FIG. 13, and the second terminal device in the method 1200 may be UE 2 shown in FIG. 13. The first frequency, the second frequency, and the third frequency in the method 1200 are the same, and all are $F_{UE2,TX}$. In FIG. 13, a direction of a movement velocity of the UE 1 is defined as an x-axis, that is, an included angle between the direction of the movement velocity of the UE 1 and the x-axis is zero. It is assumed that a direction of a movement velocity of the UE 2 also moves along the x-axis, that is, an included angle between the movement directions of both the UE 1 and the UE 2 and the x-axis is zero.

(a) The UE 2 sends a first reference signal at a first location at $F_{UE2,TX}$ (corresponding to S1202, that is, $F_{UE2,TX}$ is a theoretical frequency), a TRP 2 sends a second reference signal at $F_{UE2,TX}$ (corresponding to S1203, that is, $F_{UE2,TX}$ is a theoretical frequency), and a TRP 3 sends a third reference signal at $F_{UE2,TX}$ (corresponding to S1204, that is, $F_{UE2,TX}$ is a theoretical frequency).

The UE 2 may separately send three reference signals at $F_{UE2,TX}$. However, due to a limitation of a hardware condition of the UE 2, an actual frequency at which the UE 2 sends the first reference signal may not be $F_{UE2,TX}$, but $F_{UE2,TX}$, an actual frequency at which the UE 2 sends the second reference signal may not be $F_{UE2,TX}$, but $F_{UE2,TX}$, and an actual frequency at which the UE 2 sends the third reference signal may not be $F_{UE2,TX}$, but $F_{UE2,TX}$. However, $F_{UE2,TX}'$ is an unknown quantity that cannot be measured.

(b) A frequency shift that is of the received first reference signal and that is measured by the UE 1 is $F_1$. $F_1$ is related to an actual frequency $F_{UE2,TX}'$ of the first reference signal sent by the UE 2, an actual Doppler frequency shift $F_{d1}$ of the first reference signal, and a clock frequency $F_{UE1}$ of the UE 1, for example, $F_1 = F_{UE2,TX}' + F_{d1} - F_{UE1}$.

In other words, the UE can obtain $F_1$ through measurement, but may not need to measure $F_{UE2,TX}'$, $F_{d1}$, and $F_{UE}$ related to $F_1$. $F_1$ may also be referred to as a measured Doppler frequency shift of the received first reference signal.

In other words, because the clock frequency $F_{UE1}$ of the UE 1 is different from the actual frequency $F_{UE2,TX}'$ at which the UE 2 sends the first reference signal, the Doppler frequency shift $F_1$ of the first reference signal obtained through measurement is different from the actual Doppler frequency shift $F_{d1}$ of the first reference signal. If the clock frequency $F_{UE1}$ of the UE 1 is equal to the actual frequency $F_{UE2,TX}'$ at which the UE 2 sends the first reference signal, the Doppler frequency shift $F_1$ of the first reference signal obtained by the UE 1 through measurement is equal to the actual Doppler frequency shift $F_{d1}$ of the first reference signal. A frequency shift that is of the received second reference signal and that is measured by the UE 1 is $F_2$. $F_2$ is related to an actual frequency $F_{UE2,TX}'$ at which the UE 2 sends the second reference signal, an actual Doppler frequency shift $F_{d2}$ of the second reference signal, and the clock frequency $F_{UE1}$ of the UE 1, for example, $F_2 = F_{UE2,TX}' + F_{d2} - F_{UE1}$. In other words, the UE 1 can obtain $F_2$ through measurement, but may not need to measure $F_{UE2,TX}'$, $F_{d2}$, and $F_{UE1}$ related to $F_2$. $F_2$ may also be referred to as a measured Doppler frequency shift of the received second reference signal. In other words, because the clock frequency $F_{UE1}$ of the UE 1 is different from the actual frequency $F_{UE2,TX}^{'}$ at which the UE 2 sends the second reference signal, the Doppler frequency shift $F_2$ of the second reference signal obtained through measurement is different from the actual Doppler frequency shift $F_{d2}$ of the second reference signal. If the clock frequency $F_{UE1}$ of the UE 1 is equal to the actual frequency $F_{UE2,TX}^{'}$ at which the TRP 2 sends the second reference signal, the Doppler frequency shift $F_2$ of the second reference signal obtained by the UE through measurement is equal to the actual Doppler frequency shift $F_{d2}$ of the second reference signal. Therefore, a difference between the frequency shift that is of the received first reference signal and that is measured by the UE 1 and the frequency shift that is of the received second reference signal and that is measured by the UE 1 is $FDOA_{UE\_12} = F_1 - F_2 = (F_{UE2,TX}^{'} + F_{d1} - F_{UE1}) - (F_{UE2,TX}^{'} + F_{d2} - F_{UE1}) = F_{d1} - F_{d2}$ . In other words, an error of the clock frequency $F_{UE1}$ of the UE 1 can be cancelled by using the difference between the frequency shifts of the two reference signals obtained by the UE 1 through measurement, and an error of the actual frequency $F_{UE2,TX}^{'}$ at which the UE 2 separately sends the first reference signal and the second reference signal can also be cancelled. In this way, impact of the error of the clock frequency $F_{UE1}$ of the UE 1 can be reduced, and impact of the error of the actual frequency $F_{UE2,TX}^{'}$ at which the UE 2 separately sends the first reference signal and the second reference signal can also be reduced. Fifth frequency difference information sent by the UE 1 to the UE 2 may indicate $FDOA_{UE\_12}$ (corresponding to S 1206). Certainly, the UE 1 may directly send $F_1$ and $F_2$ to the UE 2. In this way, the UE 2 can determine $FDOA_{UE\_12}$. $FDOA_{UE\_12}$ may also be referred to as an FDOA between the first reference signal and the second reference signal.

(c) The frequency shift that is of the received third reference signal and that is measured by the UE 1 is $F_3$. $F_3$ is related to a frequency $F_{UE2,TX}^{'}$ at which the UE 2 sends the third reference signal, an actual Doppler frequency shift $F_{d3}$ of the third reference signal, and the clock frequency $F_{UE1}$ of the UE 1, for example, $F_3 = F_{UE2,TX}^{'} + F_{d3} - F_{UE1}$ . In other words, the UE 1 can obtain $F_3$ through measurement, but may not need to measure $F_{UE2,TX}^{'}$ , $F_{d3}$, and $F_{UE1}$ related to $F_3$. $F_3$ may also be referred to as a measured Doppler frequency shift of the received third reference signal.

In other words, because the clock frequency $F_{UE1}$ of the UE 1 is different from the actual frequency $F_{UE2,TX}^{'}$ at which the UE 2 sends the third reference signal, the Doppler frequency shift $F_3$ of the third reference signal obtained through measurement is different from the actual Doppler frequency shift $F_{d3}$ of the third reference signal. If the clock frequency $F_{UE1}$ of the UE 1 is equal to the actual frequency $F_{UE2,TX}^{'}$ at which the UE 2 sends the third reference signal, the Doppler frequency shift $F_3$ of the third reference signal obtained by the UE 1 through measurement is equal to the actual Doppler frequency shift $F_{d3}$ of the third reference signal. Therefore, a difference between the frequency shift that is of the received third reference signal and that is measured by the UE and the frequency shift that is of the received second reference signal and that is measured by the UE is $FDOA_{UE\_32} = F_3 - F_2 = (F_{UE2,TX}^{'} + F_{d3} - F_{UE1}) - (F_{UE2,TX}^{'} + F_{d2} - F_{UE1}) = F_{d3} - F_{d2}$ . In other words, an error of the clock frequency $F_{UE1}$ of the UE 1 can be cancelled by using the difference between the frequency shifts of the two reference signals obtained by the UE 1 through measurement, and an error of the actual frequency $F_{UE2,TX}^{'}$ at which the UE 2 separately sends the third reference signal and the second reference signal can also be cancelled. In this way, impact of the error of the clock frequency of the UE 1 can be reduced, and impact of the error of the actual frequency $F_{UE2,TX}^{'}$ at which the UE 2 separately sends the third reference signal and the second reference signal can also be reduced. Sixth frequency difference information sent by the UE 1 to the UE 2 may indicate $FDOA_{UE\_32}$ (corresponding to S1208). Certainly, the UE 1 may directly send $F_3$ and $F_2$ to the UE 2. In this way, the UE 2 can determine $FDOA_{UE\_32}$.

$FDOA_{UE\_32}$ may also be referred to as an FDOA between the third reference signal and the second reference signal.

(d) The UE 1 sends movement speed information of the UE 1 to the UE 2 (corresponding to S1209). The movement speed information of the UE 1 includes first movement speed information, second movement speed information, and third movement speed information. The first movement speed information indicates that a magnitude of a movement velocity when the UE 1 receives the first reference signal is $v_{UE1}^1$, the second movement speed information indicates that a magnitude of the movement velocity when the UE 1 receives the second reference signal is $v_{UE1}^2$, and the third movement speed information indicates that a magnitude of the movement velocity when the UE 1 receives the third reference signal is $v_{UE1}^3$.

It is assumed that a movement direction of the UE 1 when the UE 1 separately receives the first reference signal, the second reference signal, and the third reference signal is an x-axis direction, that is, an included angle between the x-axis and the movement direction of the UE 1 when the UE 1 separately receives the first reference signal, the second reference signal, and the third reference signal is zero.

When reporting $v_{UE1}^1$, the UE 1 may also report a first moment $t_1$ corresponding to $v_{UE1}^1$. When reporting $v_{UE1}^2$, the UE 1 may also report a second moment $t_2$ corresponding to $v_{UE1}^2$. When reporting $v_{UE1}^3$, the UE 1 may also report a third moment $t_3$ corresponding to $v_{UE1}^3$.

(e) A magnitude of a movement velocity when the UE 2 sends the first reference signal is $v_{UE2}^1$, a magnitude of the movement velocity when the UE 2 sends the second reference signal is $v_{UE2}^2$, and a magnitude of the movement velocity when the UE 2 sends the third reference signal is $v_{UE2}^3$. It is assumed that the UE 2 first sends the first reference signal, then sends the second reference signal, and finally sends the third reference signal. If $t_1$ is before $t_2$, and $t_2$ is before $t_3$, the UE 2 may determine that $v_{UE2}^1$ corresponds to $v_{UE1}^1$, $v_{UE2}^2$ corresponds to $v_{UE1}^2$, and $v_{UE2}^3$ corresponds to , and the UE 2 establishes FDOA-based equations (9) and (10).

$$FDOA_{UE\_12} = F_{d1} - F_{d2} = \frac{v_{UE2}^1 - v_{UE1}^1}{\lambda}\cos\phi_1 - \frac{v_{UE2}^2 - v_{UE1}^2}{\lambda}\cos\phi_2 \quad (9)$$

$$FDOA_{UE\_32} = F_{d3} - F_{d2} = \frac{v_{UE2}^3 - v_{UE1}^3}{\lambda}\cos\phi_3 - \frac{v_{UE2}^2 - v_{UE1}^2}{\lambda}\cos\phi_2 \quad (10)$$

$\phi_1$ is an included angle between the movement direction when the UE 2 sends the first reference signal and a connection line between the UE 1 and the UE 2, $\phi_1 = \arctan\left(\dfrac{y}{x}\right)$, (x, y) is coordinates of the UE 2, and (x, y) is an unknown quantity. $\phi_2$ is an included angle between the movement direction when the UE 2 sends the second reference signal and a connection line between the UE 1 and the UE 2, and $\phi_2 = \arctan\left(-\dfrac{y}{x+d_{12}}\right)$. $\phi_3$ is an included angle between the movement direction when the UE 2 sends the third reference signal and a connection line between the UE 1 and the UE 2, and $\phi_3 = \arctan\left(-\dfrac{y}{x+d_{12}+d_{23}}\right)$. $d_{12}$ is a distance that the UE 2 moves in the x-axis direction between a moment at which the UE 2 sends the second reference signal and a moment at which the UE 2 sends the first reference signal, and $d_{32}$ is a distance that the UE 2 moves in the x-axis direction between a moment at which the UE 2 sends the third reference signal and the moment at which the UE 2 sends the second reference signal, that is, the UE 2 can determine $d_{12}$ and $d_{32}$ based on a movement speed and movement time of the UE 2. Therefore, $d_{12}$ and $d_{32}$ can be considered as known quantities in the foregoing equations. $\lambda$ is a wavelength at which the UE 2 separately sends the first reference signal, the second reference signal, and the third reference signal, $\lambda = c\, /\, F_{UE2,TX}$, and c is a speed of light. In the equation (9) and the equation (10), there are two unknown quantities x and y, and coordinates (x, y) of the UE 2 can be obtained through calculation based on the equation (9) and the equation (10). That is, coordinates (x, y) of the UE 2 relative to the UE 1 are determined. After (x, y) are determined, (x + $d_{12}$, y) and (x + $d_{12}$ + $d_{32}$, y) can also be determined.

It should be noted that, in a process in which the UE 2 obtains the coordinates (x, y) of the UE 2 through calculation, the UE 2 obtains known quantities $FDOA_{UE\_12}$, $FDOA_{UE\_32}$, $v^1_{UE1}$, $v^2_{UE1}$, and $v^3_{UE1}$, $t_1$ corresponding to $v^1_{UE1}$, $t_2$ corresponding to $v^2_{UE1}$, and $t_3$ corresponding to $v^3_{UE1}$ from the UE 1, and UE 2 can obtain known quantities $v^1_{UE2}$, $v^2_{UE2}$, $v^3_{UE2}$, $d_{12}$, $d_{32}$, and $\lambda$ from the UE 2. The UE 2 can determine the coordinates (x, y) of the UE 2 based on these known quantities. The foregoing equation (9) and equation (10) are derivation principles. In an actual operation process, the UE 2 may not need to obtain intermediate parameters of the derivation equation (9) and equation (10). For example, the UE 2 may not need to learn $F'_{UE2,TX}$, $F_{d1}$, $F_{d2}$, $F_{d3}$, and $F_{UE}$.

It should be noted that, for ease of description, in FIG. 13, an included angle between a direction of the movement velocity of the UE 2 and an x-axis is used as an example for description. This is applicable to a scenario in which the included angle between the direction of the movement velocity of the UE 2 and the x-axis is not zero. In this case, a movement distance of the UE 2 in the y direction also needs to be considered.

It should also be noted that, the x-axis direction and the y-axis direction in FIG. 13 may be interchanged, and a calculation principle after interchange is the same as that described above.

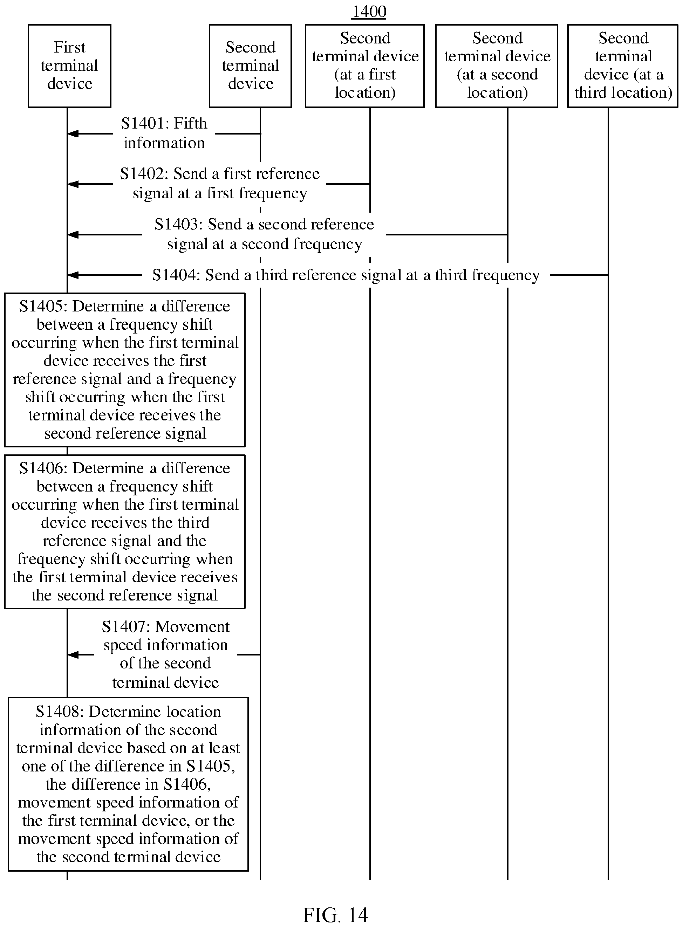

In the information processing method described in the foregoing method 1200, the second terminal device determines the location information of the second terminal device. In some scenarios, the first terminal device may alternatively determine the location information of the second terminal device. With reference to an information processing method 1400 in FIG. 14, the following describes how a first terminal device determines location information of a second terminal device. As shown in FIG. 14, the method 1400 includes the following steps.

S1401: The second terminal device sends fifth information to the first terminal device. The fifth information indicates the first terminal device to determine the location information of the second terminal device.

Optionally, the fifth information may include auxiliary measurement information, and the auxiliary measurement information indicates at least one of a first frequency at which the second terminal device sends a first reference signal, a second frequency at which the second terminal device sends a second reference signal, and a third frequency at which the second terminal device sends a third reference signal.

Optionally, the first frequency at which the second terminal device sends the first reference signal, the second frequency at which the second terminal device sends the second reference signal, and the third frequency at which the second terminal device sends the third reference signal are the same.

Optionally, the second terminal device and the first terminal device are in a relative movement state.

Optionally, that the second terminal device and the first terminal device are in a relative movement state may be understood as: The first terminal device is in a static state, and the second terminal device is in a moving state; the first terminal device is in a moving state, and the second terminal device is in a static state; or both the first terminal device and the second terminal device are in a moving state, but movement speed information of the first terminal device is different from movement speed information of the second terminal device. For example, a magnitude of a movement velocity of the first terminal device is different from a magnitude of a movement velocity of the second terminal device, and/or a direction of the movement velocity of the first terminal device is different from a direction of the movement velocity of the second terminal device.

For example, the second terminal device is a vehicle. When the second terminal device needs to change lane, the vehicle may be triggered to send fifth information to another nearby vehicle, to measure relative location information between the two vehicles.

It should be noted that the second terminal device may send the fifth information to the first terminal device at another location different from a first location, a second location, and a third location, or the second terminal device may send the fifth information to the first terminal device at one of a first location, a second location, and a third location. A location at which the second terminal device sends the fifth information is not limited in this embodiment of this application.

S1402 to S1404: are respectively the same as S1202 to S1204.

S1405: is the same as S1205.

The fifth frequency difference information indicates the difference between the frequency shift occurring when the first terminal device receives the first reference signal and the frequency shift occurring when the first terminal device receives the second reference signal.

S1406: is the same as S1207.

The sixth frequency difference information indicates the difference between the frequency shift occurring when the first terminal device receives the third reference signal and the frequency shift occurring when the first terminal device receives the second reference signal.

S1407: The second terminal device sends movement speed information of the second terminal device to the first terminal device.

Optionally, the movement speed information of the second terminal device includes fourth movement speed information when the second terminal device sends the first reference signal, fifth movement speed information when the second terminal device sends the second reference signal, and sixth movement speed information when the second terminal device sends the third reference signal.

Optionally, the fourth movement speed information indicates a magnitude of a movement velocity and/or a direction of the movement velocity when the second terminal device sends the first reference signal.

Optionally, the fifth movement speed information indicates a magnitude of the movement velocity and/or a direction of the movement velocity when the second terminal device sends the second reference signal.

Optionally, the sixth movement speed information indicates a magnitude of the movement velocity and/or a direction of the movement velocity when the second terminal device sends the third reference signal.

Optionally, when sending the fourth movement speed information to the first terminal device, the second terminal device may also send fourth timestamp information corresponding to the fourth movement speed information. Optionally, the fourth timestamp information indicates a fourth moment at which the second terminal device sends the first reference signal.

Optionally, when sending the fifth movement speed information to the first terminal device, the second terminal device may also send fifth timestamp information corresponding to the fifth movement speed information. Optionally, the fifth timestamp information indicates a fifth moment at which the second terminal device sends the second reference signal.

Optionally, when sending the sixth movement speed information to the first terminal device, the second terminal device may also send sixth timestamp information corresponding to the sixth movement speed information. Optionally, the sixth timestamp information indicates a sixth moment at which the second terminal device sends the third reference signal.

Optionally, the second terminal device may further send, to the first terminal device, a first distance that the second terminal device moves between a moment at which the second terminal device sends the second reference signal and a moment at which the second terminal device sends the first reference signal, and a second distance that the second terminal device moves between a moment at which the second terminal device sends the third reference signal and the moment at which the second terminal device sends the second reference signal.

S1408: The first terminal device determines the location information of the second terminal device based on the difference in S1405, the difference in S1406, the movement speed information of the first terminal device, and the movement speed information of the second terminal device.

The fifth frequency difference information indicates the difference in S1405, and the sixth frequency difference information indicates the difference in S1406.

For descriptions of the movement speed information of the first terminal device and the movement speed information of the second terminal device, refer to the descriptions of the method 1200. To avoid repetition, details are not described in this embodiment of this application.

Optionally, the second terminal device also sends the fourth timestamp information corresponding to the fourth movement speed information, the fifth timestamp information corresponding to the fifth movement speed information, and the sixth timestamp information corresponding to the sixth movement speed information. The first terminal device determines, based on the fourth timestamp information, that the fourth movement speed information corresponds to the first movement speed information, and performs an operation by using a magnitude of the movement velocity that is of the second terminal device and that is indicated by the fourth movement speed information and a magnitude of the movement velocity that is of the first terminal device and that is indicated by the first movement speed information; the first terminal device determines, based on the fifth timestamp information, that the fifth movement speed information corresponds to the second movement speed information, and performs an operation by using a magnitude of the movement velocity that is of the second terminal device and that is indicated by the fifth movement speed information and a magnitude of the movement velocity that is of the first terminal device and that is indicated by the second movement speed information; and the first terminal device determines, based on the sixth timestamp information, that the sixth movement speed information corresponds to the third movement speed information, and performs an operation by using a magnitude of the movement velocity that is of the second terminal device and that is indicated by the sixth movement speed information and a magnitude of the movement velocity that is of the first terminal device and that is indicated by the third movement speed information. In other words, the fourth timestamp information, the fifth timestamp information, and the sixth timestamp information that are sent by the second terminal device are used by the first terminal device to determine the corresponding movement speed information of the second terminal device.

Optionally, S 1408 includes: The first terminal device determines the location information of the second terminal device based on at least one of the fifth frequency difference information, the sixth frequency difference information, the movement speed information of the first terminal device, the movement speed information of the second terminal device, a wavelength at which the second terminal device sends the first reference signal, a wavelength at which the second terminal device sends the second reference signal, or a wavelength at which the second terminal device sends the third reference signal.

Optionally, the wavelength at which the second terminal device sends the first reference signal is related to the first frequency. For example, the wavelength at which the second terminal device sends the first reference signal is equal to a speed of light divided by the first frequency. In other words, the first frequency is configured by the second terminal device for the first terminal device. Therefore, the first terminal device can determine, based on the speed of light and the first frequency, the wavelength at which the second terminal device sends the first reference signal.

Optionally, the wavelength at which the second terminal device sends the second reference signal is related to the second frequency. For example, the wavelength at which the second terminal device sends the second reference signal is equal to the speed of light divided by the second frequency. In other words, the second frequency is configured by the second terminal device for the first terminal device. Therefore, the first terminal device can determine, based on the speed of light and the second frequency, the wavelength at which the second terminal device sends the second reference signal.

Optionally, the wavelength at which the second terminal device sends the third reference signal is related to the third frequency. For example, the wavelength at which the second terminal device sends the third reference signal is equal to the speed of light divided by the third frequency. In other words, the third frequency is configured by the second terminal device for the first terminal device. Therefore, the first terminal device can determine, based on the speed of light and the third frequency, the wavelength at which the second terminal device sends the third reference signal.

Optionally, that the first terminal device determines the location information of the second terminal device based on at least one of the fifth frequency difference information, the sixth frequency difference information, the movement speed information of the first terminal device, the movement speed information of the second terminal device, a wavelength at which the second terminal device sends the first reference signal, a wavelength at which the second terminal device sends the second reference signal, or a wavelength at which the second terminal device sends the third reference signal includes: The first terminal device determines the location information of the second terminal device based on at least one of the fifth frequency difference information, the sixth frequency difference information, the movement speed information of the first terminal device, the movement speed information of the second terminal device, the wavelength at which the second terminal device sends the first reference signal, the wavelength at which the second terminal device sends the second reference signal, the wavelength at which the second terminal device sends the third reference signal, a first distance that the second terminal device moves between a moment at which the second terminal device sends the second reference signal and a moment at which the second terminal device sends the first reference signal, or a second distance that the second terminal device moves between a moment at which the second terminal device sends the third reference signal and the moment at which the second terminal device sends the second reference signal.

Optionally, if the first frequency, the second frequency, and the third frequency are the same, S 1408 may be performed.

Optionally, if the first frequency, the second frequency, and the third frequency are different, S 1408 includes: The first terminal device determines the location information of the second terminal device based on at least one of the fifth frequency difference information, the sixth frequency difference information, the movement speed information of the first terminal device, the movement speed information of the second terminal device, the first frequency, the second frequency, or the third frequency.

Optionally, the location information of the second terminal device indicates coordinates of the second terminal device relative to the first terminal device.

Optionally, the coordinates of the second terminal device relative to the first terminal device may be understood as coordinates of the second terminal device that use the coordinates of the first terminal device as an origin of coordinates.

Alternatively, the determining the location information of the second terminal device in S 1408 may be replaced with determining the location information of the first terminal device. Optionally, the location information of the first terminal device indicates coordinates of the first terminal device relative to the second terminal device. Optionally, the coordinates of the first terminal device relative to the second terminal device may be understood as coordinates of the first terminal device that use the coordinates of the second terminal device as an origin of coordinates.

In other words, if the first terminal device can obtain the coordinates of the second terminal device relative to the first terminal device through calculation, the first terminal device may obtain the coordinates of the first terminal device relative to the second terminal device through conversion based on the coordinates of the second terminal device relative to the first terminal device; or if the second terminal device can obtain the coordinates of the first terminal device relative to the second terminal device through calculation, the second terminal device may obtain the coordinates of the second terminal device relative to the first terminal device through conversion based on the coordinates of the first terminal device relative to the second terminal device.

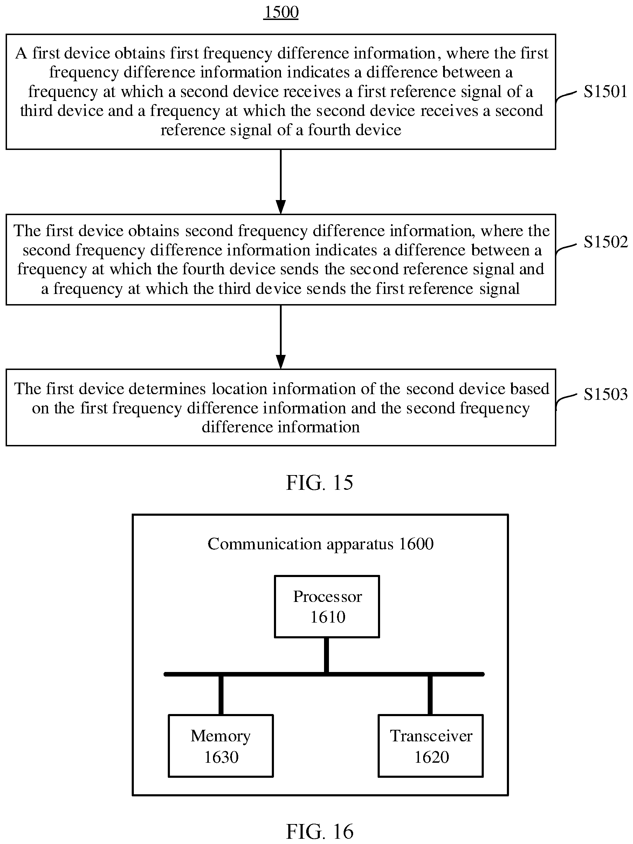

The following describes an information processing method 1500 in an embodiment of this application with reference to FIG. 15. As shown in FIG. 15, the method is applied to a first device, and the method 1500 includes the following steps.

S1501: The first device obtains first frequency difference information, where the first frequency difference information indicates a difference between a frequency at which a second device receives a first reference signal of a third device and a frequency at which the second device receives a second reference signal of a fourth device.

Optionally, the first device may be the LMF unit in the method 400. S1501 includes: The LMF unit obtains the first frequency difference information from a terminal device, and the terminal device is the second device. In this way, the terminal device obtains the first frequency difference information through measurement, and sends the first frequency difference information to the LMF unit.

Optionally, the first device may be the terminal device in the method 600. Alternatively, the second device may be the terminal device in the method 600.

Optionally, the first device may be the LMF unit in the method 700. Optionally, the first device may be the terminal device in the method 900. S1501 includes: The LMF unit obtains the first frequency difference information from a terminal device, and the terminal device is the second device. In this way, the terminal device obtains the first frequency difference information through measurement, and sends the first frequency difference information to the LMF unit.

S1502: The first device obtains second frequency difference information, where the second frequency difference information indicates a difference between a frequency at which the fourth device sends the second reference signal and a frequency at which the third device sends the first reference signal.

Optionally, the first device may be the LMF unit in the method 400. S1502 includes: The LMF unit obtains the second frequency difference information from the fourth device, where the fourth device obtains the second frequency difference information through measurement, and sends the second frequency difference information to the LMF unit.

Optionally, the first device may be the terminal device in the method 600. Alternatively, the second device may be the terminal device in the method 600. The terminal device may obtain the second frequency difference information from the LMF unit, and the second frequency difference information of the LMF unit is sent by the fourth device to the LMF unit.

Optionally, the first device may be the LMF unit in the method 700. S1501 includes: The LMF unit obtains the second frequency difference information from the fourth device, where the fourth device obtains the second frequency difference information through measurement, and sends the second frequency difference information to the LMF unit.

Optionally, the first device may be the terminal device in the method 900.

S1503: The first device determines location information of the second device based on the first frequency difference information and the second frequency difference information.

Optionally, if the first device is the LMF unit in the method 400, and the second device is the terminal device in the method 400, S1503 includes: The LMF unit determines the location information of the terminal device based on the second frequency difference information in S409 and the first frequency difference information in S413.

Optionally, if the first device and the second device are the terminal devices in the method 600, S1503 includes: The terminal device determines the location information of the terminal device based on the difference in S614 (the first frequency difference information indicates the difference in S614) and the second frequency difference information in S612.

Optionally, if the first device is the LMF unit in the method 700, and the second device is the terminal device in the method 700, S1503 includes: The LMF unit determines the location information of the terminal device based on the second frequency difference information in S707 and the first frequency difference information in S711.

Optionally, if the first device and the second device are the terminal devices in the method 900, S1503 includes: The terminal device determines the location information of the terminal device based on the second frequency difference information in S910 and the difference in S912 (the first frequency difference information indicates the difference in S912).

Optionally, if the first device is the LMF unit in the method 1000, and the second device is the terminal device in the method 1000, S1503 includes: The LMF unit determines the location information of the terminal device based on the second frequency difference information in S1009 and the first frequency difference information in S1017.

Optionally, if the first device and the second device are the terminal devices in the method 1100, S1503 includes: The terminal device determines the location information of the terminal device based on the second frequency difference information in S1116 and the difference in S1117 (the first frequency difference information indicates the difference in S1117).

Optionally, the method 1500 includes: The first device obtains movement speed information of the second device. S1503 includes: The first device determines the location information of the second device based on the movement speed information of the second device, the first frequency difference information, and the second frequency difference information.

Optionally, if the first device is the LMF unit in the method 400, and the second device is the terminal device in the method 400, that the first device determines the location information of the second device based on the movement speed information of the second device, the first frequency difference information, and the second frequency difference information includes: The LMF unit determines the location information of the terminal device based on the first frequency difference information in S413, the second frequency difference information in S409, and the movement speed information of the terminal device in S416.

Optionally, if the first device and the second device are the terminal devices in the method 600, that the first device determines the location information of the second device based on the movement speed information of the second device, the first frequency difference information, and the second frequency difference information includes: The terminal device determines the location information of the terminal device based on the difference in S614 (the first frequency difference information indicates the difference in S614), the second frequency difference information in S612 and the movement speed information of the terminal device.

Optionally, if the first device is the LMF unit in the method 700, and the second device is the terminal device in the method 700, that the first device determines the location information of the second device based on the movement speed information of the second device, the first frequency difference information, and the second frequency difference information includes: The LMF unit determines the location information of the terminal device based on the second frequency difference information in S707, the first frequency difference information in S711, and the movement speed information of the terminal device in S714.

Optionally, if the first device and the second device are the terminal devices in the method 900, that the first device determines the location information of the second device based on the movement speed information of the second device, the first frequency difference information, and the second frequency difference information includes: The terminal device determines the location information of the terminal device based on the second frequency difference information in S910, the difference in S912 (the first frequency difference information indicates the difference in S912), and the movement speed information of the terminal device.

Optionally, the method 1500 further includes: obtaining third frequency difference information, where the third frequency difference information indicates a difference between a frequency at which the second device receives a third reference signal of a fifth device and the frequency at which the second device receives the second reference signal of the fourth device; and obtaining fourth frequency difference information, where the fourth frequency difference information indicates a difference between the frequency at which the fourth device sends the second reference signal and a frequency at which the fifth device sends the third reference signal.

The determining the location information of the second device based on the first frequency difference information, the second frequency difference information, and the movement speed information of the second device includes: determining the location information of the second device based on the first frequency difference information, the second frequency difference information, the third frequency difference information, the fourth frequency difference information, and the movement speed information of the second device.

Optionally, if the first device is the LMF unit in the method 400, and the second device is the terminal device in the method 400, the determining the location information of the second device based on the first frequency difference information, the second frequency difference information, the third frequency difference information, the fourth frequency difference information, and the movement speed information of the second device includes: The LMF unit determines the location information of the terminal device based on the first frequency difference information in S413, the second frequency difference information in S409, the third frequency difference information in S415, the fourth frequency difference information in S411, and the movement speed information in S416.

Optionally, if the first device and the second device are the terminal devices in the method 600, the determining the location information of the second device based on the first frequency difference information, the second frequency difference information, the third frequency difference information, the fourth frequency difference information, and the movement speed information of the second device includes: The terminal device determines the location information of the terminal device based on the difference in S614 (the first frequency difference information indicates the difference in S614), the second frequency difference information in S612, the difference in S615 (the third frequency difference information indicates the difference in S615), the fourth frequency difference information in S613, and the movement speed information of the terminal device.

Optionally, the method further includes: obtaining first time difference information, where the first time difference information indicates a difference between a moment at which the second device receives the first reference signal of the third device and a moment at which the second device receives the second reference signal of the fourth device. The determining the location information of the second device based on the first frequency difference information, the second frequency difference information, and the movement speed information of the second device includes: determining the location information of the second device based on the first frequency difference information, the second frequency difference information, the first time difference information, and the movement speed information of the second device.

Optionally, if the first device is the LMF unit in the method 700, and the second device is the terminal device in the method 700, the determining the location information of the second device based on the first frequency difference information, the second frequency difference information, the first time difference information, and the movement speed information of the second device includes: The LMF unit determines the location information of the terminal device based on the first frequency difference information in S711, the second frequency difference information in S707, the first time difference information in S713, the second time difference information in S709, and the movement speed information in S714.

Optionally, if the first device and the second device are the terminal devices in the method 900, the determining the location information of the second device based on the first frequency difference information, the second frequency difference information, the first time difference information, and the movement speed information of the second device includes: The terminal device determines the location information of the terminal device based on the difference in S912 (the first frequency difference information indicates the difference in S912), the second frequency difference information in S910, the difference in S913 (the first time difference information indicates the difference in S913), and the second time difference information in S911.

When no conflict occurs, the solutions in the foregoing embodiments may be combined for use.

It may be understood that the methods and operations implemented by the terminal device in the foregoing method embodiments may alternatively be implemented by a component (for example, a chip or a circuit) that may be used in the terminal device, and the methods and operations implemented by the network device in the foregoing method embodiments may alternatively be implemented by a component (for example, a chip or a circuit) that may be used in the network device.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

FIG. 16 shows a communication apparatus 1600 according to an embodiment of this application. The communication apparatus 1600 includes a processor 1610 and a transceiver 1620. The processor 1610 and the transceiver 1620 communicate with each other through an internal connection path, and the processor 1610 is configured to execute instructions, to control the transceiver 1620 to send a signal and/or receive a signal.

Optionally, the communication apparatus 1600 may further include a memory 1630. The memory 1630 communicates with the processor 1610 and the transceiver 1620 through an internal connection path. The memory 1630 is configured to store instructions, and the processor 1610 may execute the instructions stored in the memory 1630. In a possible implementation, the communication apparatus 1600 is configured to implement procedures and steps corresponding to the first device in the foregoing method embodiments. In another possible implementation, the communication apparatus 1600 is configured to implement procedures and steps corresponding to the second device in the foregoing method embodiments. In another possible implementation, the communication apparatus 1600 is configured to implement procedures and steps corresponding to the fourth device in the foregoing method embodiments.

It should be understood that the communication apparatus 1600 may be specifically the first device, the second device, or the fourth device in the foregoing embodiments, or may be a chip or a chip system. Correspondingly, the transceiver 1620 may be a transceiver circuit of the chip. This is not limited herein. Specifically, the communication apparatus 1600 may be configured to perform steps and/or procedures corresponding to the first device, the second device, or the fourth device in the foregoing method embodiments. Optionally, the memory 1630 may include a read-only memory and a random access memory, and provide instructions and data for the processor. A part of the memory may further include a nonvolatile random access memory. For example, the memory may further store information of a device type. The processor 1610 may be configured to execute the instructions stored in the memory. When the processor 1610 executes the instructions stored in the memory, the processor 1610 is configured to perform the steps and/or procedures of the foregoing method embodiments corresponding to the first device, the second device, or the fourth device.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in this embodiment of this application may be an integrated circuit chip and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

According to the method provided in embodiments of this application, this application further provides a computer program product. The computer program product includes computer program code. When the computer program code is run on a computer, the computer is enabled to perform the steps or procedures performed by the first device, the second device, or the fourth device in the foregoing method embodiments.

According to the method provided in embodiments of this application, this application further provides a computer-readable storage medium. The computer-readable storage medium stores program code. When the program code is run on a computer, the computer is enabled to perform the steps or procedures performed by the first device, the second device, or the fourth device in the foregoing method embodiments.

According to the method provided in embodiments of this application, this application further provides a communication system, including the one or more first devices, the one or more second devices, and the one or more fourth devices.

The foregoing apparatus embodiments completely corresponds to the method embodiments. A corresponding module or unit performs a corresponding step. For example, a communication unit (a transceiver) performs a receiving step or a sending step in the method embodiments, and a processing unit (a processor) may perform steps other than the sending step and the receiving step. A function of a specific unit may be based on a corresponding method embodiment. There may be one or more processors.

In this application, "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing or a future protocol.

It should be understood that "and/or" in this specification describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

In the foregoing embodiments, all or some of the functions of the function units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information processing method, wherein the method is applied to a first device and comprises:

   obtaining first frequency difference information, wherein the first frequency difference information indicates a difference between a frequency at which a second device receives a first reference signal of a third device and a frequency at which the second device receives a second reference signal of a fourth device;
   obtaining second frequency difference information, wherein the second frequency difference information indicates a difference between a frequency at which the fourth device sends the second reference signal and a frequency at which the third device sends the first reference signal; and
   determining location information of the second device based on the first frequency difference information and the second frequency difference information.

2. The method according to claim 1, wherein the method further comprises:

   obtaining movement speed information of the second device; and
   the determining location information of the second device based on the first frequency difference information and the second frequency difference information comprises:
   determining the location information of the second device based on the first frequency difference information, the second frequency difference information, and the movement speed information of the second device.

3. The method according to claim 2, wherein the method further comprises:

   obtaining third frequency difference information, wherein the third frequency difference information indicates a difference between a frequency at which the second device receives a third reference signal of a fifth device and the frequency at which the second device receives the second reference signal of the fourth device; and
   obtaining fourth frequency difference information, wherein the fourth frequency difference information indicates a difference between the frequency at which the fourth device sends the second reference signal and a frequency at which the fifth device sends the third reference signal; and
   the determining the location information of the second device based on the first frequency difference information, the second frequency difference information, and the movement speed information of the second device comprises:
   determining the location information of the second device based on the first frequency difference information, the second frequency difference information, the third frequency difference information, the fourth frequency difference information, and the movement speed information of the second device.

4. The method according to claim 3, wherein the determining the location information of the second device based on the first frequency difference information, the second frequency difference information, the third frequency difference information, the fourth frequency difference information, and the movement speed information of the second device comprises:
   determining the location information of the second device based on the first frequency difference information, the second frequency difference information, the third frequency difference information, the fourth frequency difference information, the movement speed information of the second device, a wavelength at which the third device sends the first reference signal, a wavelength at which the fourth device sends the second reference signal, and a wavelength at which the fifth device sends the third reference signal.

5. The method according to claim 2, wherein the method further comprises:

   obtaining first time difference information, wherein the first time difference information indicates a difference between a moment at which the second device receives the first reference signal of the third device and a moment at which the second device receives the second reference signal of the fourth device; and
   the determining the location information of the second device based on the first frequency difference information, the second frequency difference information, and the movement speed information of the second device comprises:
   determining the location information of the second device based on the first frequency difference information, the second frequency difference information, the first time difference information, and the movement speed information of the second device.

6. The method according to claim 5, wherein the determining the location information of the second device based on the first frequency difference information, the second frequency difference information, the first time difference information, and the movement speed information of the second device comprises:
determining the location information of the second device based on the first frequency difference information, the second frequency difference information, the first time difference information, the movement speed information of the second device, a wavelength at which the third device sends the first reference signal, and a wavelength at which the fourth device sends the second reference signal.

7. The method according to any one of claims 1 to 6, wherein the first device and the second device are a same terminal device, and before the obtaining first frequency difference information, the method further comprises:
receiving first information, wherein the first information indicates the second device to determine the location information of the second device.

8. The method according to any one of claims 1 to 7, wherein the first device and the second device are a same terminal device, and the obtaining second frequency difference information comprises:
receiving the second frequency difference information.

9. The method according to any one of claims 1 to 6, wherein the first device is a location management function unit, and before the obtaining first frequency difference information, the method further comprises:

sending second information to the second device, wherein the second information indicates to the second device that the first device needs to measure the location information of the second device; and
the obtaining first frequency difference information comprises:
receiving the first frequency difference information from the second device.

10. The method according to any one of claims 1 to 6 or 9, wherein the first device is a location management function unit, and before the obtaining second frequency difference information, the method further comprises:

sending third information to the fourth device, wherein the third information is used to request frequency difference information from the fourth device; and
the obtaining second frequency difference information comprises:
receiving the second frequency difference information from the fourth device.

11. An information processing method, wherein the method is applied to a second device, and the method comprises:

receiving second information, wherein the second information indicates to the second device that a first device needs to measure location information of the second device; and
sending first frequency difference information, wherein the first frequency difference information indicates a difference between a frequency at which the second device receives a first reference signal of a third device and a frequency at which the second device receives a second reference signal of a fourth device, and the first frequency difference information is used to determine the location information of the second device.

12. The method according to claim 11, wherein the method further comprises:
sending movement speed information of the second device, wherein the movement speed information of the second device is used to determine the location information of the second device.

13. The method according to claim 11 or 12, wherein the method further comprises:
sending third frequency difference information, wherein the third frequency difference information indicates a difference between a frequency at which the second device receives a third reference signal of a fifth device and the frequency at which the second device receives the second reference signal of the fourth device, and the third frequency difference information is used to determine the location information of the second device.

14. The method according to any one of claims 11 to 13, wherein the method further comprises:
sending first time difference information, wherein the first time difference information indicates a difference between a moment at which the second device receives the first reference signal of the third device and a moment at which the second device receives the second reference signal of the fourth device, and the first time difference information is used to determine the location information of the second device.

**15.** An information processing method, wherein the method is applied to a fourth device and comprises:

receiving third information, wherein the third information is used to request frequency difference information from the fourth device; and

sending second frequency difference information, wherein the second frequency difference information indicates a difference between a frequency at which the fourth device sends a second reference signal and a frequency at which a third device sends a first reference signal, and the second frequency difference information is used to determine location information of a second device.

**16.** The method according to claim 15, wherein the method further comprises:
sending fourth frequency difference information, wherein the fourth frequency difference information indicates a difference between the frequency at which the fourth device sends the second reference signal and a frequency at which a fifth device sends a third reference signal, and the fourth frequency difference information is used to determine the location information of the second device.

**17.** An electronic device, comprising a processor, wherein the processor is coupled to a memory, and the processor is configured to execute a computer program or instructions stored in the memory, to enable the electronic device to implement the method according to any one of claims 1 to 16.

**18.** A computer-readable storage medium, wherein the computer-readable storage medium stores computer instructions, and when the computer instructions are run on an electronic device, the electronic device is enabled to perform the method according to any one of claims 1 to 16.

Access network
device 120

Core network
device 130

Terminal
device 110

FIG. 1

Terminal
device 220

Terminal
device 210

FIG. 2

FIG. 3

400

| Terminal device | Second access network device | Third access network device | First access network device | LMF unit |
|---|---|---|---|---|

S401: Third information

S402: Second information

S403: First instruction

S404: Third instruction

S405: Send a first reference signal at a first frequency

S406: Send a second reference signal at a second frequency

S407: Send a third reference signal at a third frequency

S408: Determine a difference between the frequency at which the second access network device sends the second reference signal and the frequency at which the first access network device sends the first reference signal

S409: Second frequency difference information

S410: Determine a difference between the frequency at which the second access network device sends the second reference signal and the frequency at which the third access network device sends the third reference signal

TO FIG. 4B

TO FIG. 4B

TO FIG. 4B

TO FIG. 4B

TO FIG. 4B

FIG. 4A

CONT.
FROM
FIG. 4A

CONT.
FROM
FIG. 4A

CONT.
FROM
FIG. 4A

CONT.
FROM
FIG. 4A

CONT.
FROM
FIG. 4A

S412: Determine a difference between a frequency shift occurring when the first reference signal in S405 is received and a frequency shift occurring when the second reference signal in S406 is received

S411: Fourth frequency difference information →

S413: First frequency difference information →

S414: Determine a difference between a frequency shift occurring when the third reference signal in S407 is received and the frequency shift occurring when the second reference signal in S406 is received

S415: Third frequency difference information →

S416: Movement speed information of the terminal device →

S417: Determine location information of the terminal device based on at least one of the first frequency difference information, the second frequency difference information, the third frequency difference information, the fourth frequency difference information, or the movement speed information of the terminal device

FIG. 4B

FIG. 5

600

| Terminal device | Second access network device | Third access network device | First access network device | LMF unit |

S601: Third information

S602: First information

S603: First instruction

S604: Third instruction

S605: Send a first reference signal at a first frequency

S606: Send a second reference signal at a second frequency

S607: Send a third reference signal at a third frequency

S608: Determine a difference between the frequency at which the second access network device sends the second reference signal and the frequency at which the first access network device sends the first reference signal

S609: Second frequency difference information

S610: Determine a difference between the frequency at which the second access network device sends the second reference signal and the frequency at which the third access network device sends the third reference signal

TO FIG. 6B     TO FIG. 6B     TO FIG. 6B     TO FIG. 6B     TO FIG. 6B

FIG. 6A

CONT. FROM FIG. 6A   CONT. FROM FIG. 6A   CONT. FROM FIG. 6A   CONT. FROM FIG. 6A   CONT. FROM FIG. 6A

S611: Fourth frequency difference information →

S612: Second frequency difference information

S613: Fourth frequency difference information

S614: Determine a difference between a frequency shift occurring when the first reference signal in S605 is received and a frequency shift occurring when the second reference signal in S606 is received

S615: Determine a difference between a frequency shift occurring when the third reference signal in S607 is received and the frequency shift occurring when the second reference signal in S606 is received

S616: Determine location information of the terminal device based on at least one of the difference in S614, the difference in S615, the third frequency difference information, the fourth frequency difference information, or movement speed information of the terminal device

FIG. 6B

700

| Terminal device | Second access network device | First access network device | LMF unit |

S701: Third information

S702: Second information

S703: First instruction

S704: Send a first reference signal at a first frequency

S705: Send a second reference signal at a second frequency

S706: Determine a difference between the frequency at which the second access network device sends the second reference signal and the frequency at which the first access network device sends the first reference signal

S707: Second frequency difference information

S708: Determine a difference between a moment at which the first access network device sends the first reference signal and a moment at which the second access network device sends the second reference signal

S709: Second time difference information

TO FIG. 7B          TO FIG. 7B          TO FIG. 7B          TO FIG. 7B

FIG. 7A

CONT.
FROM
FIG. 7A

CONT.
FROM
FIG. 7A

CONT.
FROM
FIG. 7A

CONT.
FROM
FIG. 7A

S710: Determine a difference between a frequency shift occurring when the first reference signal in S704 is received and a frequency shift occurring when the second reference signal in S705 is received

S711: First frequency difference information

S712: Determine a difference between a moment at which the first reference signal in S704 is received and a moment at which the second reference signal in S705 is received

S713: First time difference information

S714: Movement speed information of the terminal device

S715: Determine location information of the terminal device based on at least one of the first frequency difference information, the second frequency difference information, the first time difference information, the second time difference information, or the movement speed information of the terminal device

FIG. 7B

FIG. 8

900

| Terminal device | Second access network device | | First access network device | LMF unit |

S901: Third information

S902: First information

S903: First instruction

S904: Send a first reference signal at a first frequency

S905: Send a second reference signal at a second frequency

S906: Determine a difference between the frequency at which the second access network device sends the second reference signal and the frequency at which the first access network device sends the first reference signal

S907: Second frequency difference information

S908: Determine a difference between a moment at which the second access network device sends the second reference signal and a moment at which the first access network device sends the first reference signal

| TO FIG. 9B | TO FIG. 9B | TO FIG. 9B | TO FIG. 9B |

FIG. 9A

CONT. FROM FIG. 9A

CONT. FROM FIG. 9A

CONT. FROM FIG. 9A

CONT. FROM FIG. 9A

S909: Second time difference information

S910: Second frequency difference information

S911: Second time difference information

S912: Determine a difference between a frequency shift occurring when the first reference signal in S904 is received and a frequency shift occurring when the second reference signal in S905 is received

S913: Determine a difference between a moment at which the first reference signal in S904 is received and a moment at which the second reference signal in S905 is received

S914: Determine location information of the terminal device based on at least one of the difference in S912, the second frequency difference information, the difference in S913, the second time difference information, or movement speed information of the terminal device

FIG. 9B

1000

| Terminal device | Second access network device | Third access network device | First access network device | LMF unit |
|---|---|---|---|---|

S1001: Third information

S1002: Second information

S1003: First instruction

S1004: Third instruction

S1005: Send a first reference signal at a first frequency

S1006: Send a second reference signal at a second frequency

S1007: Send a third reference signal at a third frequency

S1008: Determine a difference between the frequency at which the second access network device sends the second reference signal and the frequency at which the first access network device sends the first reference signal

S1009: Second frequency difference information

S1010: Determine a difference between the frequency at which the second access network device sends the second reference signal and the frequency at which the third access network device sends the third reference signal

| TO FIG. 10B | TO FIG. 10B | TO FIG. 10B | TO FIG. 10B | TO FIG. 10B |
|---|---|---|---|---|

FIG. 10A

CONT. FROM FIG. 10A   CONT. FROM FIG. 10A   CONT. FROM FIG. 10A   CONT. FROM FIG. 10A   CONT. FROM FIG. 10A

S1011: Fourth frequency difference information

S1012: Determine a difference between a moment at which the first access network device sends the first reference signal and a moment at which the second access network device sends the second reference signal

S1013: Second time difference information

S1014: Determine a difference between a moment at which the third access network device sends the third reference signal and the moment at which the second access network device sends the second reference signal

S1016: Determine a difference between a frequency shift occurring when the first reference signal in S1005 is received and a frequency shift occurring when the second reference signal in S1006 is received

S1015: Fourth time difference information

S1017: First frequency difference information

S1018: Determine a difference between a frequency shift occurring when the third reference signal in S1007 is received and the frequency shift occurring when the second reference signal in S1006 is received

TO FIG. 10C   TO FIG. 10C   TO FIG. 10C   TO FIG. 10C   TO FIG. 10C

FIG. 10B

CONT.
FROM
FIG. 10B

CONT.
FROM
FIG. 10B

CONT.
FROM
FIG. 10B

CONT.
FROM
FIG. 10B

CONT.
FROM
FIG. 10B

S1019: Third frequency difference information

S1020: Determine a difference between a moment at which the first reference signal in S1005 is received and a moment at which the second reference signal in S1006 is received

S1021: First time difference information

S1022: Determine a difference between a moment at which the third reference signal in S1007 is received and the moment at which the second reference signal in S1006 is received

S1023: Third time difference information

S1025: Determine location information and movement speed information of the terminal device based on at least one of the first frequency difference information, the second frequency difference information, the third frequency difference information, the fourth frequency difference information, the first time difference information, the second time difference information, the third time difference information, or the fourth time difference information

FIG. 10C

1100

| Terminal device | Second access network device | Third access network device | First access network device | LMF unit |

S1101: Third information

S1102: First information

S1103: First instruction

S1104: Third instruction

S1105: Send a first reference signal at a first frequency

S1106: Send a second reference signal at a second frequency

S1107: Send a third reference signal at a third frequency

S1108: Determine a difference between the frequency at which the second access network device sends the second reference signal and the frequency at which the first access network device sends the first reference signal

S1109: Second frequency difference information

S1110: Determine a difference between the frequency at which the second access network device sends the second reference signal and the frequency at which the third access network device sends the third reference signal

TO FIG. 11B      TO FIG. 11B   TO FIG. 11B   TO FIG. 11B      TO FIG. 11B

FIG. 11A

CONT.
FROM
FIG. 11A

CONT.
FROM
FIG. 11A

CONT.
FROM
FIG. 11A

CONT.
FROM
FIG. 11A

CONT.
FROM
FIG. 11A

S1111: Fourth frequency
difference information

S1112: Determine a difference
between a moment at which the first
access network device sends the first
reference signal and a moment at
which the second access network
device sends the second reference
signal

S1113: Second time difference information

S1114: Determine a difference
between a moment at which the third
access network device sends the
third reference signal and the
moment at which the second access
network device sends the second
reference signal

S1115: Fourth time difference information

S1116: At least one of the second frequency difference information, the
fourth frequency difference information, the second time difference
information, or the fourth time difference information

S1117: Determine a difference
between a frequency shift
occurring when the first reference
signal in S1105 is received and a
frequency shift occurring when
the second reference signal in
S1106 is received

TO
FIG. 11C

TO
FIG. 11C

TO
FIG. 11C

TO
FIG. 11C

TO
FIG. 11C

FIG. 11B

CONT.
FROM
FIG. 11B

CONT.
FROM
FIG. 11B

CONT.
FROM
FIG. 11B

CONT.
FROM
FIG. 11B

CONT.
FROM
FIG. 11B

S1118: Determine a difference between a frequency shift occurring when the third reference signal in S1107 is received and the frequency shift occurring when the second reference signal in S1106 is received

S1119: Determine a difference between a moment at which the first reference signal in S1105 is received and a moment at which the second reference signal in S1106 is received

S1120: Determine a difference between a moment at which the third reference signal in S1107 is received and the moment at which the second reference signal in S1106 is received

S1121: Determine location information and movement speed information of the terminal device based on at least one of the difference in S1117, the difference in S1118, the difference in S1119, the difference in S1120, the second frequency difference information, the fourth frequency difference information, the second time difference information, or the fourth time difference information

FIG. 11C

1200

| First terminal device | Second terminal device | Second terminal device (at a first location) | Second terminal device (at a second location) | Second terminal device (at a third location) |

S1201: Fourth information

S1202: Send a first reference signal at a first frequency

S1203: Send a second reference signal at a second frequency

S1204: Send a third reference signal at a third frequency

S1205: Determine a difference between a frequency shift occurring when the first terminal device receives the first reference signal and a frequency shift occurring when the first terminal device receives the second reference signal

S1206: Fifth frequency difference information

TO FIG. 12B        TO FIG. 12B        TO FIG. 12B        TO FIG. 12B        TO FIG. 12B

FIG. 12A

CONT.
FROM
FIG. 12A

CONT.
FROM
FIG. 12A

CONT.
FROM
FIG. 12A

CONT.
FROM
FIG. 12A

CONT.
FROM
FIG. 12A

S1207: Determine a difference between a frequency shift occurring when the first terminal device receives the third reference signal and the frequency shift occurring when the first terminal device receives the second reference signal

S1208: Sixth frequency difference information →

S1209: Movement speed information of the first terminal device →

S1210: Determine location information of the second terminal device based on at least one of the fifth frequency difference information, the sixth frequency difference information, the movement speed information of the first terminal device, or movement speed information of the second terminal device

FIG. 12B

FIG. 13

<u>1400</u>

FIG. 14

1500

| A first device obtains first frequency difference information, where the first frequency difference information indicates a difference between a frequency at which a second device receives a first reference signal of a third device and a frequency at which the second device receives a second reference signal of a fourth device | S1501 |

| The first device obtains second frequency difference information, where the second frequency difference information indicates a difference between a frequency at which the fourth device sends the second reference signal and a frequency at which the third device sends the first reference signal | S1502 |

| The first device determines location information of the second device based on the first frequency difference information and the second frequency difference information | S1503 |

FIG. 15

Communication apparatus 1600

Processor
1610

Memory
1630

Transceiver
1620

FIG. 16

## INTERNATIONAL SEARCH REPORT

| International application No. |
|---|
| **PCT/CN2022/124401** |

| A. | CLASSIFICATION OF SUBJECT MATTER |
|---|---|

H04W 4/02(2018.01)i;  H04W 64/00(2009.01)i

According to International Patent Classification (IPC) or to both national classification and IPC

| B. | FIELDS SEARCHED |
|---|---|

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 理论, 参考, 时钟, 实际, 频率, 频, 偏移, 漂移, 频偏, 差, 参考信号, 定位, 位置, 多, 两, 至少一, theoretical, reference, clock, actual, frequency, offset, drift, difference, reference signal, RS, location, positioning, Frequency Difference Of Arrival, FDOA, multiple, plural, two, at least one

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112543160 A (DATANG MOBILE COMMUNICATIONS EQUIPMENT CO., LTD.) 23 March 2021 (2021-03-23)<br>    description, paragraphs [0036]-[0171] | 11-14, 17-18 |
| Y | CN 112543160 A (DATANG MOBILE COMMUNICATIONS EQUIPMENT CO., LTD.) 23 March 2021 (2021-03-23)<br>    description, paragraphs [0036]-[0171] | 1-10, 17-18 |
| X | CN 111726857 A (TELECOMMUNICATIONS TECHNOLOGY RESEARCH INSTITUTE CO., LTD.) 29 September 2020 (2020-09-29)<br>    description, paragraphs [0005]-[0016] and [0100]-[0189] | 15-16, 17-18 |
| Y | CN 111726857 A (TELECOMMUNICATIONS TECHNOLOGY RESEARCH INSTITUTE CO., LTD.) 29 September 2020 (2020-09-29)<br>    description, paragraphs [0005]-[0016] and [0100]-[0189] | 1-10, 17-18 |
| A | US 2021181293 A1 (LG ELECTRONICS INC.) 17 June 2021 (2021-06-17)<br>    entire document | 1-18 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2022** | **22 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/124401**

**C.     DOCUMENTS CONSIDERED TO BE RELEVANT**

| Category* | Citation of document, with indication, where appropriate, of the relevant passages | Relevant to claim No. |
|---|---|---|
| A | QUALCOMM INC. "On UE Rx-Tx timing difference measurements in NR positioning" *3GPP TSG-RAN WG4 Meeting #94-e-Bis R4-2003569*, 30 April 2020 (2020-04-30), entire document | 1-18 |

Form PCT/ISA/210 (second sheet) (January 2015)

International application No.

**PCT/CN2022/124401**

| Patent document cited in search report | | | Publication date (day/month/year) | Patent family member(s) | | | Publication date (day/month/year) |
|---|---|---|---|---|---|---|---|
| CN | 112543160 | A | 23 March 2021 | WO | 2021042852 | A1 | 11 March 2021 |
| | | | | TW | 202112107 | A | 16 March 2021 |
| CN | 111726857 | A | 29 September 2020 | WO | 2020186959 | A1 | 24 September 2020 |
| | | | | CN | 113438724 | A | 24 September 2021 |
| | | | | KR | 20210138084 | A | 18 November 2021 |
| | | | | EP | 3944680 | A1 | 26 January 2022 |
| | | | | US | 2022166531 | A1 | 26 May 2022 |
| | | | | IN | 202127047037 | A | 11 February 2022 |
| US | 2021181293 | A1 | 17 June 2021 | WO | 2019083345 | A1 | 02 May 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111226763

- CN 202111606130